(19) Europäisches Patentamt

European Patent Office

Office européen des brevets

(11) **EP 1 420 344 A2**

(12) **EUROPEAN PATENT APPLICATION**

(43) Date of publication:
**19.05.2004 Bulletin 2004/21**

(51) Int Cl.[7]: **G06F 11/36**

(21) Application number: **03026115.0**

(22) Date of filing: **13.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.11.2002 EP 02025329**

(71) Applicants:
• **Imbus Ag**
  **91096 Moehrendorf (DE)**
• **AS Aprote**
  **61602 Tartumaa (EE)**
• **Acron Communications**
  **120 00 Praha (CZ)**
• **Procedimientos-Uno**
  **29590 Camapanillas, Malaga (ES)**

(72) Inventors:
• **Grottke, Michael**
  **90469 Nürnberg (DE)**
• **Linz, Tilo**
  **91096 Möhrendorf (DE)**
• **Rossner, Thomas**
  **91085 Weisendorf (DE)**
• **Dussa-Zieger, Klaudia**
  **91083 Baiersdorf (DE)**

(74) Representative: **Eisenführ, Speiser & Partner**
**Patentanwälte Rechtsanwälte**
**Postfach 10 60 78**
**28060 Bremen (DE)**

(54) **Method and device for prediction of the reliability of software programs**

(57)    The present invention relates to a method and device for prediction of the reliability of software programs, in particular of the number of failures occurring during test and the number of faults remaining in a software program after test. By collecting data about the testing effort and the number of failures provoked during the test as well as software maturity data, predictions on the future number of failures to be found during further testing or even predictions on the number of faults remaining in the software after testing are possible using a statistical model.

Fig. A

**Description**

The present invention relates to a method and a corresponding device for failure prediction of software programs, in particular of the number of failures occurring during test and the number of faults remaining in a software program after test, a computer program for implementing said method on a computer and to a data carrier carrying such a computer program.

In many software development processes systematic software tests are the last instance of quality assurance before delivering the software to the end user. Thus, during the test phase it is important to determine when the quality of the software under test will allow delivery. In detail, the number of software faults that remain in the software at time of delivery has a high influence on the total quality of the software. Unfortunately, it is not possible to produce software that is generally free of faults or even exactly determine the number of faults in a certain software.

However, testing as a typical method of random sampling can lead to statistical estimations about the quality of the software. By collecting data about the testing effort and the number of failures provoked during the test, predictions of the future number of failures to be found during further testing or even of the number of faults remaining in the software after testing should be possible.

Currently several prediction models are published which follow the same basic principle. During test execution data on the test progress and data on the failure occurrences, i.e. number of failures during a given test progress interval, are collected. For some models also source and severity of the failures is documented. The resulting data sets are then extrapolated using a statistical model to predict how many failures will occur when the testing is continued and to estimate how many faults remain in the software after test.

Although the models differ in detail, a number of general characteristics can be identified:

- All models measure the test progress either

  - ■ using the real (calendar) time of the testing interval,
  - ■ using the net amount of time spent for testing (i.e. the time when test cases were actually executed, summarised over all test locations and test persons) or
  - ■ the coverage of the software under test achieved by the test cases, e.g. the number of code elements activated by the tests related to the total number of code elements in the software (so-called "white-box coverage" or "code coverage".

- The models assume specific test strategies:

  - ■ For operational testing, i.e. executing the particular functions of the software in the relative frequencies that are derived from the expected usage profiles after release.
  - ■ For systematic testing, i.e. for structured execution of all functions with minimal testing effort. The goal is to reduce redundancy of the test execution, i.e. basically to reduce the amount of code that is activated more than once during testing.

The vast majority of models have been derived for operational testing, while nearly no models exist for systematic testing.

For details on existing models reference is made to Grottke, M.: Software Reliability Model Study, Deliverable A.2, Project PETS, IST 1999-55017, June 2001 (pp. 6-20) and Grottke, M., Söhnlein, D.: Justified Model Selection, Deliverable A.4, Project PETS, IST 1999-55017, October 2001 (pp. 5-21).

All existing models strongly depend on large data sets, i.e. the quality of the predictions is related to the amount of input data. As a consequence, these models are only usable for large-scale software systems with long-lasting development projects. Each model contains specific assumptions on the software development and testing processes, on the structure of collected data and on the testing strategy used. They will in consequence produce inadequate predictions if those assumptions are not fully matched by the real testing activities. Thus, models which base upon operational testing are not suitable for test projects which employ systematic testing.

Additionally, there is few or no standard software known on the market that implements some or all of these models and that is designed to be adapted to existing test management or test automation software. Thus, in the most cases statistics software is used for prediction purposes, which requires an educated statistician to reformat, import, analyse and process the data delivered from the testing project.

The object of the present invention is to develop and to implement processes and software for the prediction of software failures during test and for the prediction of faults remaining in the software after test that are usable for small and medium enterprises (SMEs). SMEs would strongly profit from such predictions and the resulting potentials of improving their software development processes, e.g. minimizing the testing time.

This object is achieved according to the present invention by a method as claimed in claim 1 and a device as claimed in claim 20. The invention also relates to a computer program as claimed in claim 21 and to a data carrier as claimed in claim 22.

According to the invention a method is proposed comprising the steps of:

- collecting the test data and the number of failures occurring during testing and/or collecting the software maturity data and project-specific data from developers or testers of the software,
- processing the collected data by a data analysis, a parameter estimation, a data compression and/or a prediction to obtain failure prediction data, and
- outputting said failure prediction data.

The invention is based on two main ideas:

■ Firstly, test data from systematic testing is used to predict the number of failures occurring during testing and the number of faults remaining in the software after test. To model different levels of redundancy during the test process a set of statistical models have been developed to explicitly consider and account for different redundancy models. The base partial redundancy model, as well as the first and second partial redundancy model are the first models which specifically account for the characteristics of systematic testing and incorporate different redundancy levels.

■ Secondly, predictions on the number of failure occurrences during test, as well as the number of faults remaining in the software after test can also be made before testing has started solely on data characterizing the software process maturity and on project-specific data. The software maturity data is collected using a questionnaire which describes the quality of relevant processes following the SPICE model.

■ Using elaborate techniques the maturity data coming from the questionnaire has been analysed and the most influential factors related to the failure occurrence during test and the number of faults remaining in the software after test has been determined.

To enable SMEs to use software reliability predictions the following requirements have been met by the present invention:

- Since most SMEs perform systematic testing, the new statistical model is designed for this testing strategy. Systematic testing means to reduce the redundancy of tests. This strongly depends on the specific testing skills of the SME. Thus, the model is able to deal with different testing redundancy levels.

- Instead of using different statistical models, which forces the user to understand and to implement each of the models, a small set of models has been developed which are flexible enough to adapt to different software development and testing processes and to different development project characteristics.

- The models produce high-quality, a priori predictions with few or even no test progress data, and is able to refine these predictions step-by-step when more test progress data becomes available during the testing activities; thus, it is usable for small development projects.

- Since the software development maturity level also varies between the SMEs, the model is also able to deal with different qualities of software development processes, i.e. with different initial fault densities in the software.

- The model can be encapsulated in a user-friendly standard software that should provide open interfaces to market-leading test management software; using this software should be able for test managers and testers, not only for statisticians.

Finally, the invention is designed and implemented to

- be available to all SMEs independent from their technical platforms and back-office structures,

- have open interfaces to import and export testing progress and failure occurrence data,

- implement a simple method of gathering software process maturity data and project-specific data,

- condense these maturity data and integrate them into the new statistical model,

- implement the new models transparently so that a non-statistician can use them efficiently

- generate and visualize predictions for software reliability.

Preferred embodiments are defined in the dependent claims.

A first preferred embodiment and variations thereof are defined in claims 2, 7 and 9. In these embodiments the importance of software process maturity data as well as the process means of gathering this data is stressed. The advantage of using a questionnaire which follows the SPICE standard is that the standard is well-known and a certain knowledge can be expected. Following the SPICE standard ratings from official assessments can be used within the models. If no ratings from assessments are available each interested party can conduct a self-assessment with the help of the questionnaire and the written scenarios. With the help of the detailed scenarios even unexperienced users can infer a maturity rating.

Another preferred embodiment is defined in claim 14. The questionnaire developed within this invention has been further analysed using a univariate and/or multivariate and/or correlation analysis. Thus, the processes with the highest influence on the failure rates have been determined. As a consequence the questionnaire will be further condensed reducing the time necessary for the self-assessment of the software process maturity.

Further embodiments of the invention are defined in claims 17, 18 and 19. The redundancy of the test process depends on the skill level of the tester. Using the zero inflated binomial model, as well as the maximum likelihood method for parameter estimation it was possible to develop a model that explicitly accounts for different redundancy models. The FEPR and SEPR are the first models which explicitly consider this characteristic of systematic testing.

Other preferred embodiments are defined in claims 20, 21 and 22. The model and its theoretical derivation is of no practical use for SMEs as it is very hard for non statisticians to transform the mathematical model into a computer routines and validate their correctness. Thus, the device, the computer program and the data carrier are of utmost importance. A easy-to-use prototype is absolutely necessary for the usage in industrial projects.

The following results and embodiments were obtained by the present invention:

- the so-called "basic", "first extended" and "second extended" "partial redundancy models"" (see sections 2.3 and 2.4 below), which are designed for systematic testing and can dynamically adapt to different levels of redundancy. These new models enable companies which apply systematic test to their software product to predict the number of failures occurrences during test and number of faults remaining in the software after test.

- the "first extended partial redundancy models" (FEPR) uses test progress data in form of test cases executed (black box coverage) and failures occurrence data as input. The FEPR allows predictions on the basis of relatively simple test progress data like "test cases executed" and failure occurrence data.

- the "second extended partial redundancy model" employs test progress data in form of code coverage, i.e. the number of code constructs executed by the tests, and failure occurrence data. The SEPR allows more precise predictions on the basis of test progress data which employs coverage information and failure occurrence data. Gathering test progress data of this kind is more elaborate and time-consuming. However, it enables more precise predictions.

- methods for the dynamic and static estimation of the

  - number of failures to be occurred after i executed test cases;

  - number of faults remaining in the software after i executed test cases;

  - number of faults remaining after executing x additional test cases;

  - number of additional test cases to be executed until x faults remain.
    The four different measures listed here provide a test manager or project manager with information upon which he can plan programming and testing resources and effort. Based on this information he can conduct a risk analysis and can plan for failures to be occurring after release of the software.

- dynamic estimates are based on test progress and failure occurrence data using the FEPR and SEPR. The dynamic estimates can be used from the beginning of the test process. They can be recalculated and evaluated with every new data set coming in.

- static estimates, i.e. estimates before testing starts, are based on the software process maturity data and project specific data. The static estimates allow a prediction on the number failures to be expected before even testing starts. They are a first, early estimate of what to expect during the test process.

- the so-called "PETS questionnaire" (see section 3.1 below) which gathers the relevant process maturity data by means of a multiple-choice questionnaire and thus replaces a time-consuming assessment. The advantage of the questionnaire is that all relevant data can be collected in a reasonable amount of time. Every question is characterized with a set of scenarios. Thus, the user does not have to be a trained assessor to fill out the questionnaire.

- methods for selecting the most influential software process maturity information and for linking them to the test progress and failure occurrence data for prediction purpose;
  Using different analysis techniques the most important processes have been identified. Thus, the questionnaire will be further condensed again reducing the time and effort necessary to gather the maturity data.

- a software, the so-called "PETS prototype", implemented in Java which combines data import and export, statistical model and parameter estimation and questionnaire to a user-friendly standard software. One incentive of the incentive is to allow SMEs to use such predictions models without having to employ an experienced statistician. Therefore, a software was needed that allows an easy application of these within a wide range of companies.

The present invention will now be explained in more detail with reference to the figures in which

Fig. A shows a flow-chart of the method according to the invention, and

Fig. B shows a block diagram illustrating the general idea/workflow of the invention.

The general idea on which the invention is based and the workflow used according to the invention is schematically depicted in Fig. A. The input data, the predictions, as well as the output data are depicted.

Starting with the input data the four different types are shown: test progress data from systematic testing, failure data, maturity data and project-specific data. In addition the source for the data is also illustrated. The predictions made with the help of a PETS prototype are briefly listed with the main models developed: First Extended Partial Redundancy model and Second Extended Partial Redundancy Model. The output of the PETS prototype comprises the different static and dynamic estimates on the number of failures occurring during test, the number of faults remaining in the software after test, the number of faults remaining after executing additional test cases, as well as the testing effort necessary to reduce to the number of faults to a predefined level.

A main part of the invention is the development of the different partial redundancy models which are tailored for systematic testing.

In order to consider partial redundancy in code construct execution, the basic partial redundancy model defines three states a code construct may take: "untested" ($U$), "already tested with the possibility of being tested again in the future" ($T$), and "tested and eliminated from further consideration" ($E$).

The assumptions of the model are as follows:

1. The program under test consists of $G$ code constructs. At the beginning of testing, all these constructs are in state $U$.

2. Per test case exactly $p$ constructs are sensitised.

3. The $p$ constructs are randomly chosen from those constructs residing in state $U$ or in state $T$ at the beginning of the test case execution.

4. A constant fraction $r = k/p$ ($k \in \{0, 1, .., p\}$) of those constructs exercised by a test case changes to (or stays in) state $T$ and may be tested again in the future. The other constructs are eliminated and take state $E$.

The basic partial redundancy model can be extended to include fault detection and correction. This requires the distinction between faulty and correct code constructs. Thus, six different states have to be defined: "untested and correct" ($UC$), "untested and faulty" ($UF$), "tested and correct" ($TC$), "tested and faulty" ($TF$), "eliminated and correct" ($EC$), and "eliminated and faulty" ($EF$). Consequently, the four assumptions of the basic model have to be reformulated:

1. The program under test consists of $G$ code constructs. At the beginning of testing, $u_0$ of these constructs are in state $UF$; the remaining ($G-u_0$) constructs are in state $UC$.

2. Per test case exactly $p$ constructs are sensitised.

3. The $p$ constructs are randomly chosen from those, constructs residing in one of the states $UF, UC, TF$ or in state $TC$ at the beginning of the test case execution.

4. A constant fraction $r = k/p$ ($k$ is element of $\{0, 1, .., p\}$) of those constructs exercised by a test case changes to (or stays in) state $T$ and may be tested again in the future. The other constructs are eliminated and take state $E$.
   Two extended partial redundancy models have been derived on the basis of the above assumptions. The models differ in the way how the activation probability is treated.
   The first extended partial redundancy model (FEPR) assumes

5. When a code construct at which a fault is located is exercised for the first time, the fault causes a failure with the activation probability s (0<s<=1). The fault is then removed instantaneously and perfectly. If no failure occurs during the first execution of the code construct, then the fault will not be detected until the end of testing.

The second extended partial redundancy model (SEPR) assumes a constant activation probability during each execution of the faulty code construct: 5'. 'When a code construct at which a fault is located is exercised for the first time or repeatedly, the fault causes a failure with a constant activation probability $s$ (0<s<=1). The fault is then removed instantaneously and perfectly.

Both extended partial redundancy models employ the maximum likelihood method for estimating a likelihood function. Both models calculate static and dynamic estimates on the number failures to occur during testing and the number of faults remaining in the software after test.

For the dynamic estimates FEPR uses test progress data in form of black box coverage as input, while SEPR depends on test progress data in form of code coverage data. With respect to the static estimates there exists no difference in the necessary input data.

The general idea of the processing of the maturity data and project-specific data, as well as the development of the static estimates is shown in Fig. B. Therein the different input data, the main processing component, as well as the output is depicted, analogous to Fig. A.

In order to allow static estimates which are only based on software process maturity data and project-specific, these two types of data are necessary input. Besides these data two additional classes are used: test progress data and failure data. These two additional types of input data allowed an elaborate analysis (univariate/multivariate/correlation analysis) of the data. Thus, the parts of the maturity and project-specific data relevant for the failures could be identified and incorporate into the formulas for the static estimates (which is the output of this analysis step).

During the development of the statistical models a method was developed to select the most influential software process maturity information and to link them to the test progress and failure occurrence data.

To deal with different programming and testing skills, the invention is based on the idea to use a well-known software process maturity model to integrate its quantitative measures of the processes into the statistical model. CMM and SPICE are examples for such maturity models, see also Grottke, M.: Process Maturity Model Study, Deliverable A.3, Project PETS, IST 1999-55017, July 2001. Using these maturity information, the new statistical model should be able to deliver a priori estimations of fault rates in the software, i.e. to generate predictions with few or even no testing progress and failure occurrence data available.

Unfortunately, gathering software maturity information from a company to evaluate its CMM or SPICE level is a expensive and time-consuming task (so-called "assessment") which is rarely performed by SMEs. So the model should be designed to use official assessment data if present, but it should also be capable of using information that would be gathered using a much simpler method. Since a software process maturity model like SPICE contains several hundred criteria, it was clear that not all of them could be considered. In fact, by analysing a number of experiments performed during real-life software development and testing projects, a minimized subset of SPICE subprocesses was selected that are significant for fault distribution over all SMEs and all possible development projects. In addition project-specific data (also called environmental factors) were identified that have an influence on the fault distribution.

The SPICE processes assessed within the PETS questionnaire are

| Identifier | Process name |
|---|---|
| ENG.1.1 | System requirements analysis and design process |

(continued)

| Identifier | Process name |
|---|---|
| ENG.1.2 | Software requirements analysis process |
| ENG.1.3 | Software design process |
| ENG.1.4 | Software construction process |
| ENG.1.5 | Software integration process |
| ENG.1.7 | System integration and testing process |
| MAN.2 | Project management process |
| MAN.3 | Quality management process |
| MAN.4 | Risk management process |
| SUP.1 | Documentation process |
| SUP.2 | Configuration management process |
| SUP.3 | Quality assurance process |
| SUP.4/5 | Verification process / Validation process |
| SUP.6 | Joint review process |
| SUP.8 | Problem resolution process |
| CUS.1 | Acquisition process |
| CUS.2 | Supply process |
| CUS.3 | Requirements elicitation process |
| ORG.2.1 | Process establishment process |
| ORG.2.3 | Process improvement process |
| ORG.3 | Human resource management process |
| ORG.4 | Infrastructure process |
| ORG.5 | Measurement process |
| ORG.6 | Reuse process |

In addition to the SPICE processes data on project-specific details is collected in the PETS questionnaire. The project-specific details comprise size of the software program, development effort, skill level of programmers and testers, etc.

Given the data from several real-life software development and testing projects, the influence of the software process maturity and project-specific data (also called environmental factors) on the estimated number of inherent faults and on the redundancy level was. Univariate analysis, e.g. using Goodman's and Kruskal's y measure (I. Klein und M. Missong, Deskriptive Statistik, Vorlesungsskript, Universität Erlangen-Nürnberg, Nürnberg 2002), was conducted, as well a multivariate analyses studied (see section 3.3 below). The zero inflated binomial model was used for modelling the redundancy level for predictions generated by the partial redundancy models (see section 3.3.2.2 below).

As a result the importance of the SPICE subprocesses ENG.1.3, ENG.1.4, SUP.3, SUP.4, SUP.8, ORG.3 and ORG.4 was determined. With respect to the environmental factors a high correlation was determined for the development runtime performance index DPRI (Ratio of the actual development runtime to the planned development runtime) and the percentage of requirements changed after the specification phase PRCH.

The invention provides methods, devices, computer programs and data carriers as defined in the claims, which include - alone or in combination - the features of:

1. using the zero inflated binomial model for modelling the redundancy level for predictions generated by the partial redundancy model (see section 3.3.2.2 below);

2. using univariate/multivariate and correlation analysis for selecting the maturity data from the PETS questionnaire that have the highest influence on the failure occurrences (see section 3.3 below);

3. using the maximum likelihood method for estimating a likelihood function for the partial redundancy model (see section 2.5 below).

The features described above and in the description below are not only essential for the invention in the combinations in which they are described but also in other combinations or isolated.

| Contents | | | |
|---|---|---|---|
| **1** | **Introduction** | | **4** |
| | 1.1 | Project overview | 4 |
| | 1.2 | This document | 4 |
| | 1.3 | Related documents | 4 |
| **2** | **The partial redundancy models** | | **5** |
| | 2.1 | Systematic testing and software reliability models | 5 |
| | 2.2 | Piwowarski et al. versus Rivers and Vouk | 6 |
| | 2.3 | The basic partial redundancy model | 7 |
| | | 2.3.1 Approximated expected structural coverage growth | 8 |
| | | 2.3.2 The distribution of the number of code constructs covered | 9 |
| | | 2.3.3 Exact expected structural coverage growth | 13 |
| | 2.4 | Extended partial redundancy models | 14 |
| | | 2.4.1 The first extended partial redundancy model | 15 |
| | | 2.4.1.1 The approximated number of expected failure occurrences | 16 |
| | | 2.4.1.2 The distribution of the number of failure occurrences | 16 |
| | | 2.4.1.3 The exact number of expected failure occurrences | 20 |
| | | 2.4.2 The second extended partial redundancy model | 20 |
| | | 2.4.2.1 The approximated number of expected failure occurrences | 21 |
| | | 2.4.2.2 The distribution of the number of failure occurrences | 22 |
| | | 2.4.2.3 The exact number of expected failure occurrences | 24 |
| | 2.5 | Model estimation | 26 |
| | | 2.5.1 Least squares estimation | 26 |
| | | 2.5.1.1 Fitting the cumulative number of failure occurrences | 26 |
| | | 2.5.1.2 Fitting the number of failure occurrences per test case | 27 |
| | | 2.5.2 Maximum likelihood estimation | 28 |
| | | 2.5.2.1 Interpreting the partial redundancy models as NHPP models | 28 |
| | | 2.5.2.2 Maximizing the likelihood implied by the model setup | 29 |
| | | 2.5.3 Comparison of the estimation methods and further insights | 33 |
| **3** | **Environmental information and the partial redundancy model** | | **38** |
| | 3.1 | The PETS questionnaire version 1.0 | 38 |
| | 3.2 | The PETS questionnaire and SPICE levels | 39 |
| | 3.3 | Analyzing the influence of process capability and project characteristics | 41 |
| | | 3.3.1 Influence on the estimated number of inherent faults | 43 |
| | | 3.3.1.1 Univariate analysis of software development process maturity | 43 |
| | | 3.3.1.2 Univariate analysis of other environmental factors | 51 |
| | | 3.3.1.3 Multivariate analysis | 53 |

(continued)

| Contents | | | | | |
|---|---|---|---|---|---|
| **3** | **Environmental information and the partial redundancy model** | | | | **38** |
| | | 3.3.2 | Influence on the redundancy level | | 57 |
| | | | 3.3.2.1 | Univariate analysis | 57 |
| | | | 3.3.2.2 | Multivariate analysis | 62 |
| **4** | **Conclusions** | | | | **67** |
| A | Diagrams of fitted data sets | | | | 68 |
| B | PETS Questionnaire | | | | 84 |
| References | | | | | 111 |

## 1 Introduction

### 1.1 Project overview

The PETS project is a two-year research and development effort on the part of a consortium of four industrial and one academic bodies, partially funded by the European Commission under the Fifth Framework Agreement (CRAFT project). The objective of PETS is to develop a new, enhanced statistical model which predicts the reliability of SW programs based on test and software maturity results. This new model will be implemented as a prototype which allows small and medium enterprises, especially small software companies, to predict the reliability of their developed and tested software in an easy and efficient manner with a higher accuracy than currently possible.

### 1.2 This document

This document consists of two main parts. In the first one (chapter 2), the assumptions of existing software failure models concerning structural coverage growth are generalized for the derivation of model that is more appropriate for systematic testing. This partial redundancy model is then extended in two different ways to include the development of the number of failure occurrences. The model properties and parameter estimation techniques are studied.

In the second part (chapter 3), parameters of the partial redundancy model are related to software development and test process maturity ratings and to other environmental factors.

### 1.3 Related documents

The unifying model framework that serves as a starting point of this document was first derived in the Software Reliability Model Study (deliverable A.2) [14] and enhanced in more recent articles [12, 15]. As for the assessment of software development and test process maturity for the purposes of the PETS project, this document builds on work done in the Software Process Maturity Model Study (deliverable A.3) [13] and in the Justified Model Selection (deliverable A.4) [18]. In the latter document, several of the projects used for the analysis of associations between parameters of the partial redundancy model and environmental factors are described in detail. Furthermore, information on all data sets used here can be found in the Baseline Experiment Reports (deliverables C.1 - C.4) [2, 5, 19, 21].

## 2 The partial redundancy models

In this chapter, different variations of a software failure model with partial redundancy are developed, and their properties are investigated. In the first subsection, the general problem of analyzing failure data collected during systematic testing is described briefly.

### 2.1 Systematic testing and software reliability models

Like the vast majority of industrial organizations, the small and medium enterprises participating at the PETS project employ systematic strategies for software testing. One goal of such approaches is to find as many faults as possible in the software product within the given time and budget constraints. In order to achieve this, amongst other things, the testers are to minimize repeated execution of code areas. Even if the code of the software is not available, testing regimes like equivalence partitioning [26, 27] may guide them in defining test runs that are thought to execute code blocks or paths not tested before. Furthermore, special focus is put on input sequences expected to be error prone (for example, boundary values of equivalence classes [26, 27]), even if they should rarely occur in normal operation.

Obviously, the failure pattern encountered during systematic testing is greatly different from the one a "normal" user would have seen. Therefore, without additional information on the fault distribution in the software code and the execution probabilities in the operational profile and the testers' profile of software usage, the reliability of the software (as perceived by a user) cannot be determined based on failure data collected during systematic testing. However, predicting the number of failure occurrences until the end of the testing phase or the number of faults remaining in the software should be possible.

Practically all of the existing software reliability growth models implicitly assume that the failure data analyzed were collected during operational testing. Not only does this proposition ensure that the failure pattern experienced is related to typical software usage, but the shapes of the mean value functions of these models also rely on this assumption. Therefore, applying a classical software reliability growth model to failure data collected during systematic testing can hardly be expected to yield a good fit and/or trustworthy parameter estimates. Investigating how the shape of a classical model is related to operational testing may suggest how to adapt the model in order to use it in environments where systematic testing is employed.

According to the model framework first developed in the Software Reliability Model Study [14] and refined in more recent work [12, 15], a number of finite failures category models can be interpreted in terms of four consecutive relationships:

I. The allocation of testing effort $t$ to calendar time $t^*$

II. The development of test case coverage $b$ as a function of cumulative testing effort

III. The expected coverage of code constructs $\kappa = E(C)$ attained through test case coverage

IV. The relationship between expected structural coverage and the expected number of failures experienced $\mu$

Comparing operational and systematic testing, especially the way in which code construct coverage is attained by the different testing techniques seems to differ a lot. Therefore, relationship III is explored further in the following section.

**2.2 Piwowarski et al. versus Rivers and Vouk**

Both the block coverage model by Piwowarski et al. and the hypergeometric model for systematic testing by Rivers and Vouk have already been discussed in the Software Reliability Model Study [14]. Generalizing the block coverage concept to a model of code construct coverage, Piwowarski et al. [36] make the following assumptions with respect to relationship III:

1. The program under test consists of $G$ code constructs.

2. Per test case, $p$ of these constructs are sensitized on average.

3. The $p$ code constructs are always chosen from the entire population. The fact that a construct has already been sensitized does not diminish its chances of being sensitized in the future.

This setup resembles operational testing with a homogeneous operational profile, in which all equally-sized operations have the same occurrence probability. As shown in [14], expected code coverage as function of the number of test cases executed takes an exponential form closely related to the Jelinski-Moranda model or the Goel-Okumoto model:

$$\kappa(i) = 1 - \exp\left(-\frac{p}{G} \cdot i\right). \qquad (1)$$

The central proposition of the Rivers-Vouk model [37, 38] as one of the few software failure models explicitly designed for systematic testing is that repeated executions of code constructs are completely avoided. While the first two assumptions of the approach by Piwowarski et al. apply if the test cases are equally-sized, the third one has to be changed as follows:

3. Code constructs which have already been exercised are not tested a second time. Consequently, according to the Rivers-Vouk model relationship III is not stochastic but deterministic, and it is nothing but a straight line:

$$\kappa(i) = c(i) = \frac{p}{G} \cdot i. \qquad (2)$$

(Due to this assumed proportionality, Rivers and Vouk equivalently use the number of test cases executed or the number of code constructs covered as the model input.)

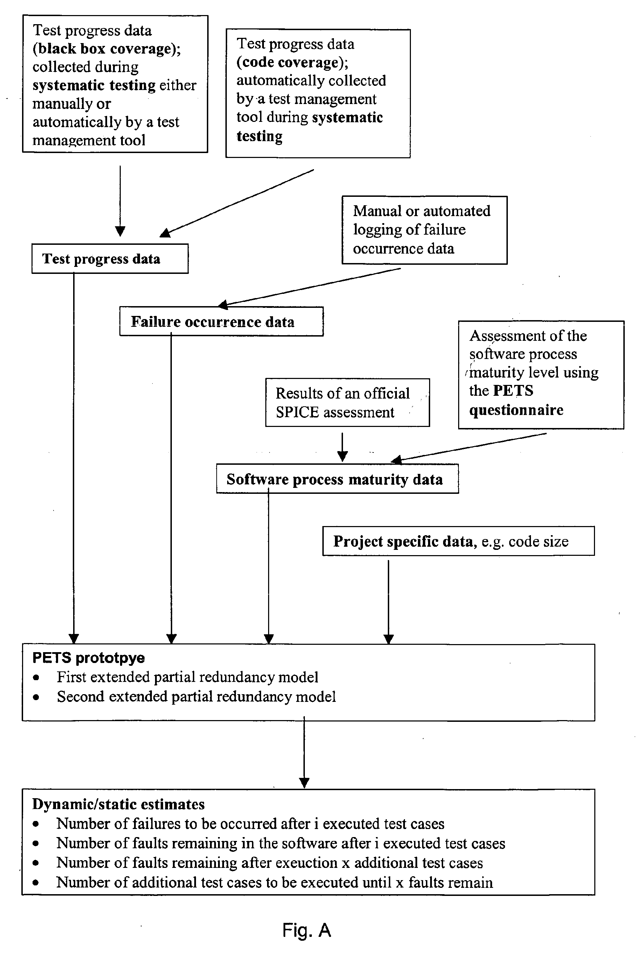

The two shapes of code coverage as a function of the number of test cases executed are depicted in figure 1. Since the two models are concerned with the extreme cases of perfect avoidance of re-execution of code constructs and full potential redundancy, it seems reasonable to try to integrate them in a more general model that also allows for the intermediate cases of partial redundancy in sampling code constructs. This model could bridge the gap between approaches for systematic testing and operational testing.

Figure 1: *Structural coverage growth in the approach by Piwowarski et al. and in the Rivers-Vouk model*

Such a model will be developed in the next subsections.

### 2.3 The basic partial redundancy model

In order to consider partial redundancy in code construct execution, it seems useful to define three different states code constructs may take: "untested" ($U$), "already tested with the possibility of being tested again in the future" ($T$) and "tested and eliminated from further consideration" ($E$). The assumptions of the model are as follows:

1. The program under test consists of $G$ code constructs. At the beginning of testing, all these constructs are in state $U$.

2. Per test case, exactly $p$ constructs are sensitized.

3. The $p$ constructs are randomly chosen from those constructs residing in state $U$ or in state $T$ at the beginning of the test case execution.

4. A constant fraction $r = \frac{k}{p}$ ($k \in \{0,1,...,p\}$) of those constructs exercised by a test case changes to (or stays in) state $T$ and may be tested again in the future. The other constructs are eliminated and take state $E$.

By formulating the assumptions slightly more rigorous than the propositions of the Rivers-Vouk model and the approach by Piwowarski et al. (e.g. by proposing that the number of code constructs executed per test case is *exactly* equal to $p$), it will be possible not only to derive expected code construct coverage after $i$ test cases, $\kappa(i)$, but the full probability distribution of the number of code constructs sensitized after $i$ test cases, $Q_i$.

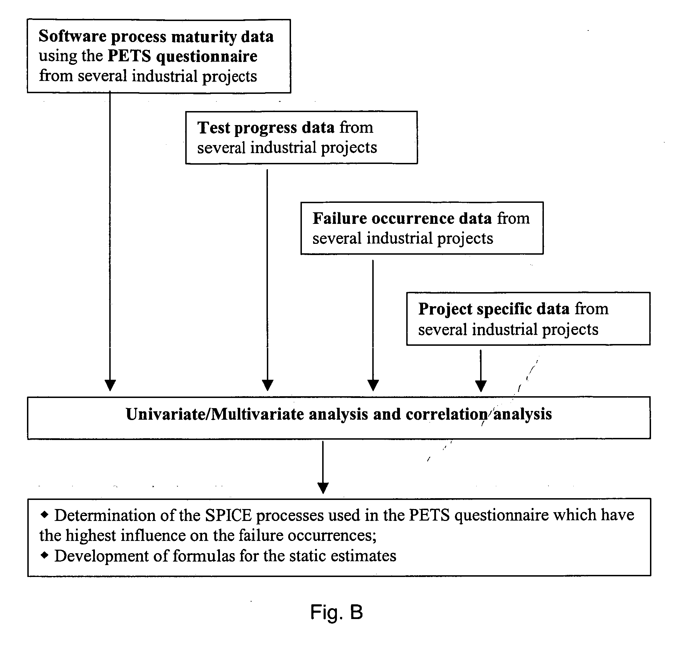

The setup illustrated above can be viewed as a discrete-time Markovian population model, more specific as a variation of the vector Markov process described by Howard [22]. While the state of the entire software is given by the number of untested, tested and eliminated code constructs, the behavior of each unit (the code constructs) is governed by the same Markov process; at the "atomic" test case executions a code construct may switch from one of the states *U, T* and *E* to another one. In figure 2, these states and the corresponding transition probabilities for the $i^{th}$ test case are depicted.

Figure 2: *Markov graph of the basic partial redundancy model*

While $\vec{r}$ stands for 1-*r*, $z_i$ denotes the selection probability for each of the constructs in state *U* and state *T* during the $i^{th}$ test case. Defining $G_{A,i-1}$ as the number of code constructs in state *A* ($A$ = {$U|T|E$}) after execution of the $(i - 1)^{th}$ test case, this probability is

$$z_i = \frac{p}{G_{U,i-1} + G_{T,i-1}} \ .$$

Obviously, $z_i$ and the related transition probabilities are not only time-variant, they also depend on the condition of all code constructs. In contrast to the systems discussed in [22], the units are not acted upon independently.

### 2.3.1 Approximated expected structural coverage growth

We are interested in $\frac{E(G_{T,i})+E(G_{E,i})}{G}$, the expected code coverage achieved as a function of the number of test cases executed, *i*.

Due to the structure of the model, it is possible to formulate the expected number of code constructs in the three states in a recursive way:

$$\begin{pmatrix} E(G_{U,i}) \\ E(G_{T,i}) \\ E(G_{E,i}) \end{pmatrix} = \begin{pmatrix} 1-\zeta_i & 0 & 0 \\ \zeta_i r & 1-\zeta_i\tilde{r} & 0 \\ \zeta_i\tilde{r} & \zeta_i\tilde{r} & 1 \end{pmatrix} \begin{pmatrix} E(G_{U,i-1}) \\ E(G_{T,i-1}) \\ E(G_{E,i-1}) \end{pmatrix}, \qquad (3)$$

where $\zeta_i$ denotes the selection probability during the $i^{th}$ test case, given the $(i - 1)^{th}$ test case resulted in the expected allocation of the *G* code constructs to the three states, i.e.,

$$\zeta_i = \frac{p}{E|G_{U,i-1}| + E|G_{T,i-1}|} \ .$$

From equation (3) and the initial conditions $E(G_{U,0}) = G$, $E(G_{T,0}) = E(G_{E,0}) = 0$, the continuously approximated structural coverage function $\kappa(i)$ can be derived [12, 15]:

$$\kappa(i) = \begin{cases} 1 - \left(1 - \frac{p}{G}(1-r)i\right)^{\frac{1}{1-r}} & \text{if } 0 \leq r < 1 \text{ and } i \leq \left[\frac{p}{G}(1-r)\right]^{-1} \\ 1 - \exp\left(-\frac{p}{G} \cdot i\right) & \text{if } r = 1 \end{cases} \ . \qquad (4)$$

This result confirms that the partial redundancy model is a generalization of the approaches by Piwowarski et al. and by Rivers and Vouk: For *r* = 1, i.e., if constructs are never eliminated, the exponential model derived by Piwowarski et al. is obtained. Assuming perfect avoidance of redundancy ($r = 0$), on the other hand, leads to a linear relationship between the number of test cases executed and code coverage achieved, like in the setup proposed by Rivers and Vouk. Apart from these extremes, the model also contains the more realistic cases of partial redundancy in code construct sampling.

### 2.3.2 The distribution of the number of code constructs covered

While the functional form of the approximated structural coverage growth is one important characteristic of the partial redundancy model, the distribution of $\frac{G_{T,i}+G_{E,i}}{}$ around its expected value is also of interest. Of course, equivalently the probability mass function of $Q_i = G_{T,i} + G_{E,i}$ can be discussed.

Restricting the analysis to the special case $r = 1$ (i.e., to full potential redundancy as in the approach by Piwowarski et al.), the model setup can be formulated in terms of an urn model: Let each of the $G$ code constructs be represented by an urn. During one test case execution, $p$ different urns are randomly selected from all $G$ urns, and a ball is put into each of these chosen urns. What is the probability that the number of urns containing at least one ball, $Q_i$, is exactly $q_i$?

The case $p = 1$ is identical to the classical occupancy problem [25], while the case $p = 2$ was discussed by Feller [8] as the "chromosome problem". It seems that the general case with $p$ taking any integer value was first analyzed by Mantel and Pasternack [33], who dubbed it the "committee problem". While they derived the probability mass function of $Q_i$ by induction, Sprott [39] used the inclusion-exclusion principle for the same end. Since his method can easily be adapted for discussing the basic partial redundancy model with $0 \le r < 1$, it will be described in the following paragraphs.

Defining the events $A_1, A_2,..., A_G$ as

$$A_l := \text{"The } l^{th} \text{ construct is } not \text{ executed by any of the test cases"},$$

the probability of $q_i$ executed code constructs after $i$ test cases is equal to the probability of the occurrence of exactly $G - q_i$ of these events. A general formula for calculating the probability of the realization of $m$ among $N$ events is given by Feller [8] as

$$P_{[m]} = \sum_{j=0}^{N-m} (-1)^j \binom{m+j}{m} S_{m+j} = \sum_{j=0}^{N-m} (-1)^j \binom{m+j}{j} S_{m+j}, \tag{5}$$

with $S_{m+j}$ denoting the sum of the probabilities of the occurrence of at least $(m + j)$ events, i.e.,

$$S_1 = \sum_{i=1}^{N} P(A_i), \quad S_2 = \sum_{i=1}^{N-1} \sum_{j=i+1}^{N} P(A_i \cap A_j), \quad S_3 = \sum_{i=1}^{N-2} \sum_{j=i+1}^{N-1} \sum_{k=j+1}^{N} P(A_i \cap A_j \cap A_k), \quad \dots$$

Applying equation (5) to our problem yields [39]

$$P(Q_i = q_i) = P_{[G-q_i]} = \sum_{j=0}^{q_i} (-1)^j \binom{G-q_i+j}{j} S_{G-q_i+j}. \tag{6}$$

The probability of (at least) $G - q_i + j$ specified constructs not being sensitized by any of the $i$ test cases is equal to

$$\binom{G-(G-q_i+j)}{p}^i \binom{G}{p}^{-i} = \binom{q_i-j}{p}^i \binom{G}{p}^{-i}. \tag{7}$$

Since the $G - q_i + j$ specified constructs can be chosen from all $G$ constructs, $S_{G-qi+j}$ is the sum of

$$\binom{G}{G-q_i+j}$$

of such probabilities:

$$S_{G-q_i+j} = \binom{G}{G-q_i+j}\binom{q_i-j}{p}^i\binom{G}{p}^{-i} \tag{8}$$

Due to the relationship

$$\binom{G}{G-q_i+j}\binom{G-q_i+j}{j} = \binom{G}{q_i}\binom{q_i}{j}$$

combining (6) and (8) results in the probability mass function

$$P(Q_i = q_i) = \binom{G}{p}^{-i}\binom{G}{q_i}\sum_{j=0}^{q_i}(-1)^j\binom{q_i}{j}\binom{q_i-j}{p}^i, \tag{9}$$

or, setting $k = q_i - j$, in

$$P(Q_i = q_i) = \binom{G}{p}^{-i}\binom{G}{q_i}\sum_{k=0}^{q_i}(-1)^{q_i-k}\binom{q_i}{q_i-k}\binom{k}{p}^i =$$

$$= \binom{G}{p}^{-i}\binom{G}{q_i}\sum_{k=p}^{q_i}(-1)^{q_i-k}\binom{q_i}{k}\binom{k}{p}^i. \tag{10}$$

Equation (6) can also be used as the starting point for deriving $P(Q_i = q_i)$ in the general basic partial redundancy model with $0 \le r \le 1$. However, formulating $S_{G-q_i+j}$ is a more complicated task.

The number of possible ways to choose $p$ code constructs and eliminate $p(1 - r)$ of them per test case is

$$\binom{G}{p}\binom{p}{p(1-r)}\binom{G-p(1-r)}{p}\binom{p}{p(1-r)}\cdots\binom{G-p(1-r)(i-1)}{p}\binom{p}{p(1-r)} =$$

$$= \left[\prod_{l=0}^{i-1}\binom{G-p(1-r)l}{p}\right]\binom{p}{p(1-r)}^i. \tag{11}$$

This value is equal to zero if $p > G - p(1 - r)(i - 1)$.

There are exactly

$$\binom{G-(G-q_i+j)}{p}\binom{p}{p(1-r)}\cdots\binom{G-(G-q_i+j)-p(1-r)(i-1)}{p}\binom{p}{p(1-r)} =$$

$$= \left[\prod_{l=0}^{i-1}\binom{q_i-j-p(1-r)l}{p}\right]\binom{p}{p(1-r)}^i.$$

different possibilities for doing this such that (at least) $G-q_i+j$ *specified* events $A_l$ occur, i.e., such that $G - q_i + j$ specified code constructs are not covered. For $j > q_i - p(1 - r)(i - 1) - p$ this value is equal to zero.

Consequently, the occurrence probability of (at least) $G - q_i + j$ specified events is

$$\left[\prod_{l=0}^{i-1} \binom{q_i - j - p(1-r)l}{p}\right] \left[\prod_{l=0}^{i-1} \binom{G - p(1-r)l}{p}\right]^{-1}. \qquad (12)$$

This probability is only defined for $p \leq G - p(1 - r)(i - 1)$.

Since there are

$$\binom{G}{G - q_i + j}$$

different ways to choose $G - q_i + j$ constructs out of all $G$ constructs, the probability sum $S_{G-q_i+j}$ is given by

$$S_{G-q_i+j} = \binom{G}{G - q_i + j} \left[\prod_{l=0}^{i-1} \binom{q_i - j - p(1-r)l}{p}\right] \left[\prod_{l=0}^{i-1} \binom{G - p(1-r)l}{p}\right]^{-1} \qquad (13)$$

with $p \leq G - p(1 - r)(i - 1)$. For $j > q_i - p(1 - r)(i - 1) - p$ this sum is equal to zero.

Combining equations (6) and (13) finally yields the probability mass function for the general basic partial redundancy model:

$$P(Q_i = q_i) = \qquad (14)$$

$$= \left[\prod_{l=0}^{i-1} \binom{G - p(1-r)l}{p}\right]^{-1} \sum_{j=0}^{q_i} (-1)^j \binom{G - q_i + j}{j} \binom{G}{G - q_i + j} \left[\prod_{l=0}^{i-1} \binom{q_i - j - p(1-r)l}{p}\right] =$$

$$= \left[\prod_{l=0}^{i-1} \binom{G - p(1-r)l}{p}\right]^{-1} \binom{G}{q_i} \sum_{j=0}^{q_i - p(1-r)(i-1)-p} (-1)^j \binom{q_i}{j} \left[\prod_{l=0}^{i-1} \binom{q_i - j - p(1-r)l}{p}\right] =$$

$$= \left[\prod_{l=0}^{i-1} \binom{G - p(1-r)l}{p}\right]^{-1} \binom{G}{q_i} \sum_{k=p(1-r)(i-1)+p}^{q_i} (-1)^{q_i - k} \binom{q_i}{k} \left[\prod_{l=0}^{i-1} \binom{k - p(1-r)l}{p}\right]$$

with $p \leq G - p(1 - r)(i - 1)$.

While this analytical closed form expression for the probability mass function can easily be recognized as a generalization of the one connected with the committee problem and while it can be used for determining the exact expected value of $Q_i$ (cf. section 2.3.3), its implementation produces irregular results: Due to numerical problems caused by the alternating signs and the size of the probability sums $S_{G-q_i+j}$ some of the probabilities calculated can be above one or below zero. An example is shown in figure 3. The full range of the probability mass function of $Q_i$ for $G = 100$, $p = 10$, $i = 4$ and $r = 1$ is depicted in the left diagram. Since this plot is dominated by the two "probabilities" for $q_i = 39$ and $q_i = 40$ that are completely out of bounds, in the right diagram the range is reduced to between zero and thirty-eight.

Figure 3: *Probability mass functions of $P(Q_i = q_i)$ for $G = 100$, $p = 10$, $i = 4$ and $r = 1$ calculated via closed-form expression* (|) *and recursively* (o)

Generalizing the suggestion by Finkelstein et al. [9] to implement a recursive formula for $P(Q_i = q_i)$ for the classical occupancy problem (i.e., for the special case $p = 1$ and $r = 1$) and based on the related C++ code by Tucker [43], the recursive equation

$$P(Q_i = q_i) = \sum_{j=0}^{p} \frac{\binom{G-(q_i-j)-p(1-r)(i-1)}{j}\binom{q_i-j}{p-j}}{\binom{G-p(1-r)(i-1)}{p}} P(Q_{i-1} = q_i - j)$$

has been programmed in C together with the initial condition

$$P(Q_1 = q_1) = \left\{ \begin{array}{ll} 1 & \text{if } q_1 = p \\ 0 & \text{if } q_1 \neq p \end{array} \right. .$$

The probabilities calculated with this equation for the case $G = 100$, $p = 10$, $i = 4$ and $r = 1$ are shown as circles in the right diagram of figure 3. Obviously, the closed-from expression (10) produces apt probability masses for smaller values of $q_i$; however, at $q_i = 37$ the numerical problems begin to show.

To illustrate the influence of the redundancy level $r$ on the distribution of $Q_i$, figure 4 depicts the recursively derived probability mass functions $P(Q_i = q_i)$ for $G = 100$, $p = 10$, $i = 10$ and four different values of $r$. As expected, increasing the redundancy in sampling code constructs shifts the entire distribution to the left: The probability that at least $q_i$ different code constructs are executed decreases for all possible values of $q_i$.

In addition, the variance of $Q_i$ gets higher. This property is also reasonable: The more constructs are replaced after each test case the less restriction there is as for which constructs can be sensitized next. In the special case of no redundancy ($r = 0$), the setup connected to the Rivers-Vouk model, the probability mass function degenerates to one point; after $i$ test cases the probability for having covered $p \cdot i$ code constructs is equal to 100 per cent.

**r=0.1**                                  **r=0.4**

**r=0.6**                                    **r=0.9**

Figure 4: *Probability mass functions of $P(Q_i = q_i)$ for $G = 100$, $p = 10$, $i = 10$ and various redundancy levels $r$*

### 2.3.3 Exact expected structural coverage growth

While the closed-form expression (14) was inadequate for implementation, it can be used for deriving the *exact* expected value of $Q_i$ as opposed to its continuously approximated version

$$E(Q(i)) = G\kappa(i) = \begin{cases} G\left[1 - \left(1 - \frac{p}{G}(1-r)i\right)^{\frac{1}{1-r}}\right] & \text{if } 0 \leq r < 1 \text{ and } i \leq \left[\frac{p}{G}(1-r)\right]^{-1} \\ G\left[1 - \exp\left(-\frac{p}{G} \cdot i\right)\right] & \text{if } r = 1 \end{cases}$$

following from (4).

A convenient way to do so is via the concept of *factorial series distributions*. According to Johnson and Kotz [25] a proper discrete probability mass function that can be written in the form

$$P(X = x) = \binom{\theta}{x}\frac{\Delta^x f(0)}{f(\theta)} \qquad (x = 0, 1, 2, ...)$$

with

$$\Delta^x f(0) = (E - 1)^x f(0) = \sum_{j=0}^{x} \binom{x}{j}(-1)^j f(x - j)$$

is called a "factorial series distribution". Its expected value is then given by

$$E(X) = \theta \cdot \frac{\Delta f(\theta - 1)}{f(\theta)} = \theta \cdot \left[1 - \frac{f(\theta - 1)}{f(\theta)}\right].$$

Choosing $\theta = G$ and

$$f(q_i) = \prod_{l=0}^{i-1}\binom{q_i - p(1-r)l}{p},$$

the distribution of $Q_i$, equation (14), can be shown to be a factorial series distribution:

$$P(Q_i = q_i) = \binom{G}{q_i}\frac{\Delta^{q_i} f(0)}{f(G)} = \binom{G}{q_i}\frac{\sum_{j=0}^{q_i}\binom{q_i}{j}(-1)^j \prod_{l=0}^{i-1}\binom{q_i - j - p(1-r)l}{p}}{\prod_{l=0}^{i-1}\binom{G - p(1-r)l}{p}} =$$

$$= \left[\prod_{l=0}^{i-1}\binom{G - p(1-r)l}{p}\right]^{-1}\binom{G}{q_i}\sum_{j=0}^{q_i}(-1)^j\binom{q_i}{j}\left[\prod_{l=0}^{i-1}\binom{q_i - j - p(1-r)l}{p}\right]$$

Consequently, the exact expected value of $Q_i$ in the basic partial redundancy model with $0 \le r \le 1$ is

$$E(Q_i) = G \cdot \left[1 - \frac{\prod_{l=0}^{i-1}\binom{G-1-p(1-r)l}{p}}{\prod_{l=0}^{i-1}\binom{G-p(1-r)l}{p}}\right] = G \cdot \left[1 - \prod_{l=0}^{i-1}\left(1 - \frac{p}{G - p(1-r)l}\right)\right].$$

### 2.4 Extended partial redundancy models

The basic partial redundancy model discussed in the last section can be extended to include fault detection and correction. This requires the distinction between faulty and correct code constructs. Let there be six different states a code construct may take: "untested and correct" (*UC*), "untested and faulty" (*UF*), "tested and correct" (*TC*), "tested and faulty" (*TF*), "eliminated and correct" (*EC*) and "eliminated and faulty" (*EF*). Consequently, the four assumptions of the basic model have to be reformulated as follows:

1. The program under test consists of $G$ code constructs. At the beginning of testing, $u_0$ of these constructs are in state *UF* (i.e., they are untested and faulty); the remaining $(G - u_0)$ constructs are in state *UC*.

2. Per test case, exactly $p$ constructs are sensitized.

3. The $p$ constructs are randomly chosen from those constructs residing in one of the states *UF, UC, TF* or *TC* at the beginning of the test case execution.

4. On average, a constant fraction $r = \frac{k}{p}$ ($k \in \{0, 1, ...,p\}$) of those constructs exercised by a test case may be tested again in the future. If such a construct is faulty after the test case execution, it changes to (or stays in) state *TF*; if it is correct after the test case execution, it moves to (or remains in) state *TC.* The other constructs are eliminated and take state *EF* or state *EC*, respectively.

The rephrasing of the assumptions lays the foundation for the model extension, but it does not change expected code coverage growth. Equation (4) still holds true. However, these assumptions are not sufficient for determining the distribution of $M_i = u_0 - G_{UF,i} - G_{TF,i} - G_{EF,i}$, the number of failure occurrences as a function of the number of test cases executed, as well as its (continuously approximated) expected value. Additional assumptions have to be made.

### 2.4.1 The first extended partial redundancy model

Several existing models, e.g. the ENHPP framework by Gokhale et al. [10]; suggest that executing a faulty construct may only result in a failure occurrence if the construct is exercised *for the first time*. Within the context of the partial redundancy models such a proposition can be formulated as follows:

5. When a code construct at which a fault is located is exercised for the first time, the fault causes a failure with activation probability $s$ ($0 < s \leq 1$). The fault is then removed instantaneously and perfectly. If no failure occurs during the first execution of the code construct, then the fault will not be detected until the end of testing.

In the resulting Markov graph of this model shown in figure 5 self loops have been omitted in order to maintain a less cluttered diagram.

Figure 5: *Markov graph of the first extended partial redundancy model*

The transition probabilities depend on $r$, $s$ and $z_i^{e_l}$. The superscript $e_l$ of the selection probability indicates that it is linked to the first extended partial redundancy model; in opposition to $z_i$ of the basic model it is the chance of each individual construct in one of the states *UC, TC, UF* and *TF* of being selected during the $i^{th}$ test case:

$$Z_i^{e_l} = \frac{p}{G_{UC,i-1} + G_{TC,i-1} + G_{UF,i-1} + G_{TF,i-1}}$$

*2.4.1.1 The approximated number of expected failure occurrences*

Again, the expected number of code constructs in the different states can be written in recursive form,

$$\begin{pmatrix} E(G_{UC,i}) \\ E(G_{UF,i}) \\ E(G_{TC,i}) \\ E(G_{TF,i}) \\ E(G_{EC,i}) \\ E(G_{EF,i}) \end{pmatrix} = \begin{pmatrix} 1-\zeta_i^{e_I} & 0 & 0 & 0 & 0 & 0 \\ 0 & 1-\zeta_i^{e_I} & 0 & 0 & 0 & 0 \\ \zeta_i^{e_I} r & \zeta_i^{e_I} rs & 1-\zeta_i^{e_I}\tilde{r} & 0 & 0 & 0 \\ 0 & \zeta_i^{e_I} r\tilde{s} & 0 & 1-\zeta_i^{e_I}\tilde{r} & 0 & 0 \\ \zeta_i^{e_I}\tilde{r} & \zeta_i^{e_I}\tilde{r}s & \zeta_i^{e_I}\tilde{r} & 0 & 1 & 0 \\ 0 & \zeta_i^{e_I}\tilde{r}\tilde{s} & 0 & \zeta_i^{e_I}\tilde{r} & 0 & 1 \end{pmatrix} \begin{pmatrix} E(G_{UC,i-1}) \\ E(G_{UF,i-1}) \\ E(G_{TC,i-1}) \\ E(G_{TF,i-1}) \\ E(G_{EC,i-1}) \\ E(G_{EF,i-1}) \end{pmatrix} , \quad (15)$$

$\zeta_i^{e_I}$ standing for the selection probability $z_i^{e_I}$ with all random variables being replaced by their respective expected values, i.e.,

$$\zeta_i^{e_I} = \frac{p}{E|G_{UC,i-1}| + E|G_{TC,i-1}| + E|G_{UF,i-1}| + E|G_{TF,i-1}|}$$

Using equation (15) and the initial conditions $E(G_{UF,0}) = u_0$, $E(G_{UC,0}) = G - u_0$ and $E(G_{TF,0}) = E(G_{TC,0}) = E(G_{EF,0}) = E(G_{EC,0}) = 0$, it has been shown that the expected number of failure occurrences during the first $i$ test cases, $M_i$, can be continuously approximated by the following mean value function [12, 15]:

$$\mu(i) = u_0 s \kappa(i) = \begin{cases} u_0 s \left[ 1 - \left(1 - \frac{p}{G}(1-r)i\right)^{\frac{1}{1-r}} \right] & \text{if } 0 \le r < 1 \text{ and } i \le \left[\frac{p}{G}(1-r)\right]^{-1} \\ u_0 s \left[ 1 - \exp\left(-\frac{p}{G} \cdot i\right) \right] & \text{if } r = 1 \end{cases}$$

$$(16)$$

This result fits well with intuition: If fault detection is possible at the first execution of a faulty construct only, then the number of failures experienced is proportional to the expected level of code coverage attained. The constant of proportionality, $u_0 s$ can be interpreted as the expected number of detectable faults in the software at the beginning of testing.

*2.4.1.2 The distribution of the number of failure occurrences*

In order to cause a failure, a faulty construct has to be executed. Since only the first execution of a faulty construct may result in the detection of the failure, the distribution of $M_i$ depends on the distribution of the number of faulty code constructs executed at least once during the first $i$ test cases. Let this value be denoted by the random variable $X_{I,i}$. Its probability mass function can be determined following the same line of thoughts as in section 2.3.2. The event $X_{I,i} = x_{I,i}$ is equivalent to the occurrence of exactly $u_0 - x_{I,i}$ of the following events $B_1, B_2, ..., B_{u_0}$:

$$B_l := \text{"The } l^{th} \text{ faulty construct is } not \text{ executed by any of the test cases"}$$

In the case of $u_0$ events the general inclusion-exclusion equation (5) takes the form

$$P(X_{I,i} = x_{I,i}) = P_{[u_0 - x_{I,i}]} = \sum_{j=0}^{x_{I,i}} (-1)^j \binom{u_0 - x_{I,i} + j}{j} S_{u_0 - x_{I,i} + j}. \quad (17)$$

For calculating the probability sums $S_{u_0 - x_{I,i} + j}$ the probability of the occurrence of (at least) $u_0 - x_{I,i} + j$ *specific* events has to be derived. While the number of ways for selecting $p$ code constructs per test case, each time replacing $pr$ of them, is given by equation (11), the number of ways for doing this such that $u_0 - x_{I,i} + j$ specific faulty constructs are not executed is equal to

$$\begin{pmatrix} G - (u_0 - x_{I,i} + j) \\ p \end{pmatrix} \begin{pmatrix} p \\ p(1-r) \end{pmatrix} \begin{pmatrix} G - (u_0 - x_{I,i} + j) - p(1-r) \\ p \end{pmatrix} \begin{pmatrix} p' \\ p(1'-r) \end{pmatrix} \cdots$$

$$\times \begin{pmatrix} G - (u_0 - x_{I,i} + j) - p(1-r)(i-1) \\ p \end{pmatrix} \begin{pmatrix} p \\ p(1-r) \end{pmatrix} =$$

$$= \left[ \prod_{l=0}^{i-1} \begin{pmatrix} G - (u_0 - x_{I,i} + j) - p(1-r)l \\ p \end{pmatrix} \right] \begin{pmatrix} p \\ p(1-r) \end{pmatrix}^i, \qquad (18)$$

which takes the value zero if $j > G - u_0 + x_{I,i} - p(1 - r)(i - 1) - p$.

Consequently, the probability for this result - defined only for $p \le G - p(1 - r) (i - 1)$ - is

$$\left[ \prod_{l=0}^{i-1} \begin{pmatrix} G - (u_0 - x_{I,i} + j) - p(1-r)l \\ p \end{pmatrix} \right] \left[ \prod_{l=0}^{i-1} \begin{pmatrix} G - p(1-r)l \\ p \end{pmatrix} \right]^{-1}, \qquad (19)$$

and the probability sum $S_{u_0 - x_{I,i} + j}$ is then

$$S_{u_0} - x_{i+j} = \qquad (20)$$

$$= \begin{pmatrix} u_0 \\ u_0 - x_{I,i} + j \end{pmatrix} \left[ \prod_{l=0}^{i-1} \begin{pmatrix} G - (u_0 - x_{I,i} + j) - p(1-r)l \\ p \end{pmatrix} \right] \left[ \prod_{l=0}^{i-1} \begin{pmatrix} G - p(1-r)l \\ p \end{pmatrix} \right]^{-1}. \qquad (21)$$

From equations (17) and (20) follows the probability mass function of $X_{I,i}$:

$$P(X_{I,i} = x_{I,i}) = \left[ \prod_{l=0}^{i-1} \begin{pmatrix} G - p(1-r)l \\ p \end{pmatrix} \right]^{-1} \begin{pmatrix} u_0 \\ x_{I,i} \end{pmatrix}$$

$$\times \sum_{j=0}^{x_{I,i}} \left[ (-1)^j \begin{pmatrix} x_{I,i} \\ j \end{pmatrix} \prod_{l=0}^{i-1} \begin{pmatrix} G - (u_0 - x_{I,i} + j) - p(1-r)l \\ p \end{pmatrix} \right] =$$

$$= \left[ \prod_{l=0}^{i-1} \begin{pmatrix} G - p(1-r)l \\ p \end{pmatrix} \right]^{-1} \begin{pmatrix} u_0 \\ x_{I,i} \end{pmatrix}$$

$$\times \sum_{k=0}^{x_{I,i}} \left[ (-1)^{x_{I,i}-k} \begin{pmatrix} x_{I,i} \\ k \end{pmatrix} \prod_{l=0}^{i-1} \begin{pmatrix} G - u_0 + k - p(1-r)l \\ p \end{pmatrix} \right] \qquad (22)$$

If $p(1 - r)(i - 1) + p - (G - u_0)$ is larger than zero, then the summation in this equation only has to be done for value of $j$ smaller than or equal to $G - u_0 + x_{I,i} - p(1 - r)(i - 1) - p$ or values of $k$ larger than or equal to $p(1 - r)(i - 1) + p - (G - u_0)$, respectively.

In the case of perfect fault identification, i.e., if the activation probability s is equal to one, the (first) execution of a faulty always results in a failure occurrence. Since this means that $M_i$ is identical with $X_{I,i}$, the distribution of the number of failures experienced during the first $i$ test cases is then given by equation (22).

More general, for $0 < s \le 1$, given the number of faulty code constructs covered up to the $i^{th}$ test case the number of failure occurrences follows a binomial distribution of size $x_{I,i}$ with success probability $s$. Therefore, the probability mass function of $M_i$ can be calculated as

$$
\begin{aligned}
P(M_i = m_i) &= \sum_{x_{I,i}=m_i}^{u0} P(M_i = m_i | x_{I,i}) P(X_{I,i} = x_{I,i}) = \\
&= \sum_{x_{I,i}=m_i}^{u0} \binom{x_{I,i}}{m_i} s^{m_i} (1-s)^{x_{I,i}-m_i} P(X_{I,i} = x_{I,i}).
\end{aligned}
\tag{23}
$$

Combining this relationship with with equation (22) one obtains the closed form expression

$$
\begin{aligned}
P(M_i = m_i) = &\left[ \prod_{l=0}^{i-1} \binom{G - p(1-r)l}{p} \right]^{-1} s^{m_i} \\
&\times \sum_{x_{I,i}=m_i}^{u_0} \left\{ \binom{u_0}{x_{I,i}} \binom{x_{I,i}}{m_i} (1-s)^{x_{I,i}-m_i} \right. \\
&\left. \times \sum_{k=0}^{x_{I,i}} \left[ (-1)^{x_{I,i}-k} \binom{x_{I,i}}{k} \prod_{l=0}^{i-1} \binom{G - u_0 + k - p(1-r)l}{p} \right] \right\}
\end{aligned}
$$

However, as could be expected from the experience with the probability mass function of $Q_i$ in the basic model, the implementation of this equation shows numerical problems connected to the relative size of the terms and the alternating signs. Therefore, the probabilities $P(X_{I,i} = x_{I,i})$ used in equation (23) are actually determined recursively via the starting probabilities

$$
P(X_{I,1} = x_{I,1}) = \frac{\binom{u_0}{x_{I,1}} \binom{G-u_0}{p-x_{I,1}}}{\binom{G}{p}} \qquad \text{for } x_{I,1} = 0, 1, \ldots, \min(p, u_0)
$$

and the relationship

$$
P(X_{I,i} = x_{I,i}) = \sum_{\Delta x_{I,i}=0}^{p} \frac{\binom{u_0 - x_{I,i-1}}{\Delta x_{I,i}} \binom{G - p(1-r)(i-1) - u_0 + x_{I,i-1}}{p - \Delta x_{I,i}}}{\binom{G - p(1-r)(i-1)}{p}} P(X_{I,i-1} = x_{I,i} - \Delta x_{I,i}).
$$

For the simple example of a software consisting of 100 code constructs and a test case size of 10 code constructs, the probability mass functions resulting from different values of r and s are visualized in figure 6.

Figure 6: *Probability mass functions of $P(M_i = m_i)$ according to the first extended model for $G = 100$, $p = 10$, $u_0 = 30$, $i = 10$ and various redundancy levels $r$ and activation probabilities $s$*

While both increasing s and lowering r shifts the distribution to the right, the influence of the activation probability is much higher.

*2.4.1.3 The exact number of expected failure occurrences*

Setting $\theta = u_0$ and

$$f(x_{I,i}) = \prod_{l=0}^{i-1} \binom{x_{I,i} + G - u0 - p(1-r)l}{n}$$

the probability mass function of $X_{I,i}$ can be written as a factorial series distribution:

$$P(X_{I,i} = x_{I,i}) \;=\; \binom{u_0}{x_{I,i}} \frac{\Delta^{x_{I,i}} f(0)}{f(u_0)} = \binom{u_0}{x_{I,i}} \frac{\sum_{j=0}^{x_{I,i}} \binom{x_{I,i}}{j}(-1)^j \prod_{l=0}^{i-1} \binom{x_{I,i}-j+G-u_0-p(1-r)l}{p}}{\prod_{l=0}^{i-1} \binom{G-p(1-r)l}{p}}$$

Therefore, the exact expected value of $X_{I,i}$ is

$$E(X_{I,i}) = u_0 \cdot \left[ 1 - \frac{\prod_{l=0}^{i-1} \binom{G-p(1-r)l-1}{p}}{\prod_{l=0}^{i-1} \binom{G-p(1-r)l}{p}} \right] = u_0 \cdot \left[ 1 - \prod_{l=0}^{i-1} \left( 1 - \frac{p}{G - p(1-r)l} \right) \right],$$

and for the expected value of $M_i$ follows:

$$
\begin{aligned}
E(M_i) &= E_{X_{I,i}}(E(M_i|X_{I,i})) = E_{X_{I,i}}(s x_{I,i}) = s E(X_{I,i}) = \\
&= u_0 s \cdot \left[ 1 - \prod_{l=0}^{i-1} \left( 1 - \frac{p}{G - p(1-r)l} \right) \right] = \frac{u_0 s}{G} E(Q_i) \qquad (24)
\end{aligned}
$$

Just like the mean value function, which is proportional to the continuously approximated expected code coverage function, the exact expected value of the number of failure occurrences is proportional to the exact expected value of the number of executed code constructs.

### 2.4.2 The second extended partial redundancy model

Since a code construct can be exercised with input variables taking different values, it is possible that the re-execution of construct which are still faulty may cause a failure. To account for that, assumption 5 of the first extended model is replaced by the following one:

  5. When a code construct at which a fault is located is exercised for the first time or repeatedly, the fault causes a failure with constant activation probability $s$ ($0 < s \le 1$).

The fault is then removed instantaneously and perfectly.

This proposition adds two more transitions to the Markov graph of the model (cf. figure 7).

As the code constructs executed during a test case are taken from the states *UC, TC, UF* and *TF*, like in the first extended partial redundancy model, the selection probability $z_j^{e_{II}}$ is equal to $z_j^{e_I}$.

If the execution of a faulty construct always results in a failure, or if each construct is eliminated after being tested for the first time, then the state *TF* cannot be taken by any construct. Therefore, for either $s = 1$ or $r = 0$ the second extended model is effectively identical to the first extended model.

Figure 7: *Markov graph of the second extended partial redundancy model*

*2.4.2.1 The approximated number of expected failure occurrences*

For this model variation, the recursive relationship for the expected number of code constructs in the six states takes the form

$$
\begin{pmatrix}
E(G_{UC,i}) \\
E(G_{UF,i}) \\
E(G_{TC,i}) \\
E(G_{TF,i}) \\
E(G_{EC,i}) \\
E(G_{EF,i})
\end{pmatrix}
=
\begin{pmatrix}
1 - \zeta_i^{eII} & 0 & 0 & 0 & 0 & 0 \\
0 & 1 - \zeta_i^{eII} & 0 & 0 & 0 & 0 \\
\zeta_i^{eII} r & \zeta_i^{eII} rs & 1 - \zeta_i^{eII} \tilde{r} & \zeta_i^{eII} rs & 0 & 0 \\
0 & \zeta_i^{eII} r\tilde{s} & 0 & 1 - \zeta_i^{eII}(1 - r\tilde{s}) & 0 & 0 \\
\zeta_i^{eII} \tilde{r} & \zeta_i^{eII} \tilde{r}s & \zeta_i^{eII} \tilde{r} & \zeta_i^{eII} \tilde{r}s & 1 & 0 \\
0 & \zeta_i^{eII} \tilde{r}\tilde{s} & 0 & \zeta_i^{eII} \tilde{r}\tilde{s} & 0 & 1
\end{pmatrix}
\begin{pmatrix}
E(G_{UC,i-1}) \\
E(G_{UF,i-1}) \\
E(G_{TC,i-1}) \\
E(G_{TF,i-1}) \\
E(G_{EC,i-1}) \\
E(G_{EF,i-1})
\end{pmatrix}
$$

with $\zeta^{eII} = \zeta^{eI}$. From this equation and the initial conditions, which are the same as for the first extended partial redundancy model, follows the mean value function [12, 15]

$$
\mu(i) = \begin{cases}
u_0 \frac{s}{1-r+rs} \left[ 1 - \left(1 - \frac{p}{G}(1-r)i\right)^{\frac{1-r+rs}{1-r}} \right] & \text{if } 0 \le r < 1 \text{ and } i \le \left[\frac{p}{G}(1-r)\right]^{-1} \\
u_0 \left[ 1 - \exp\left(-\frac{p}{G}si\right) \right] & \text{if } r = 1
\end{cases} \quad . \quad (25)
$$

Clearly, for $r > 0$ and $s < 1$, $\mu(i)$ is not proportional to $\kappa(i)$. Rather, as shown in [12, 15], the derivative of $\mu(i)/\kappa(i)$ with respect to $i$ is then larger than zero. This means that as testing proceeds relatively more failures occur per percentage of newly gained code construct coverage. Furthermore, the derivative of the expected number of detectable faults, $u_0\frac{s}{1-r+rs}$, with respect to $r$ is larger than zero if $s < 1$. The higher the degree of redundancy, the more of the $u_0$ faults immanent in the software at the beginning of testing will be detected on average. The reason for these properties of the second model variation lies in the fact that it allows for positive effects of redundancies in sampling code constructs: Faults in those constructs already covered before may still be detected.

For $s = 1$ or $r = 0$, equation (25) reduces to the mean value function of the first extended model (16), as expected.

*2.4.2.2 The distribution of the number of failure occurrences*

If no constructs are eliminated, i.e., for a redundancy level of one, the structure of the second extended model is simple enough for deriving a closed form expression of the probability mass function $P(M_i = m_i)$.

Since a certain fault is not detected either if the respective construct is not executed or if it is executed without activating the fault, the probability for $u_0 - m_i + j$ *specified* faults not causing a failure during one test case is

$$\binom{G}{p}^{-1} \sum_{\alpha=0}^{u_0-m_i+j} \binom{u_0-m_i+j}{\alpha}(1-s)^\alpha \binom{G-(u_0-m_i+j)}{p-\alpha}.$$

The probability sum for at least $(u_0 - m_i + j)$ faults not detected by the first $i$ test cases is then

$$S_{u_0-m_i+j} = \binom{u_0}{u_0-m_i+j}\left[\binom{G}{p}^{-1} \sum_{\alpha=0}^{u_0-m_i+j} \binom{u_0-m_i+j}{\alpha}(1-s)^\alpha \binom{G-(u_0-m_i+j)}{p-\alpha}\right]^i.$$

Combining this with the adapted version of the inclusion-exclusion equation (5),

$$P(M_i = m_i) = P_{[u_0-m_i]} = \sum_{j=0}^{m_i} (-1)^j \binom{u_0-m_i+j}{j} S_{u_0-m_i+j},$$

one obtains the probability mass function

$$P(M_i = m_i) = \binom{u_0}{m_i}\binom{G}{p}^{-i}$$
$$\times \sum_{j=0}^{m_i}\left\{(-1)^j \binom{m_i}{j}\left[\sum_{\alpha=0}^{u_0-m_i+j}\binom{u_0-m_i+j}{\alpha}(1-s)^\alpha\binom{G-(u_0-m_i+j)}{p-\alpha}\right]^i\right\} =$$
$$= \binom{u_0}{m_i}\binom{G}{p}^{-i}\sum_{k=0}^{m_i}\left\{(-1)^{m_i-k}\binom{m_i}{k}\left[\sum_{\alpha=0}^{u_0-k}\binom{u_0-k}{\alpha}(1-s)^\alpha\binom{G-u_0+k}{p-\alpha}\right]^i\right\} \quad (26)$$

For the special case of a program consisting of faulty constructs only, i.e., $u_0 = G$, this equation becomes the one of the randomized committee problem discussed by Sprott [39].

Let the random variable $\Delta X_{II,i}$ denote the number of faulty code constructs sensitized by the $i^{th}$ test case. (In contrast, the random variable $\Delta X_{I,i}$ used when discussing the first extended model referred to the number of faulty constructs executed *for the first time* during the $i^{th}$ test case.) Then a recursive formulation of equation (26) is

$$P(M_i = m_i) = \sum_{\Delta m_i=0}^{p} \sum_{\Delta x_{II,i}=\Delta m_i}^{p} \frac{\binom{u_0-m_{i-1}}{\Delta x_{II,i}}\binom{G-u_0+m_{i-1}}{p-\Delta x_{II,i}}}{\binom{G}{p}} \quad (27)$$
$$\times \binom{\Delta x_{II,i}}{\Delta m_i}s^{\Delta m_i}(1-s)^{\Delta x_{II,i}-\Delta m_i}P(M_{i-1}=m_i-\Delta m_i)$$

with the initial probabilities

$$P(M_1 = m_1) = \sum_{\Delta x_{II,1}=m_1}^{p} \frac{\binom{u_0}{\Delta x_{II,1}}\binom{G-u_0}{p-\Delta x_{II,1}}}{\binom{G}{p}}\binom{\Delta x_{II,1}}{m_1}s^{m_1}(1-s)^{\Delta x_{II,1}-m_1}$$

for $m_1 = 0, 1, ..., \min(p, u_0)$.

A redundancy level between zero and one complicates the relationships further. Indeed, so far a closed form expression of $P(M_i = m_i)$ could not be derived for this case. However, a recursive equation can be formulated. With the random variable $\Xi_{i-1}$ denoting the number of faulty code constructs either corrected or eliminated during the first $i - 1$ test cases, for a given value $\xi_{i-1}$ the joint probability distribution of $\Delta M_i$ and $\Delta X_{II,i}$ is

$$P(\Delta M_i = \Delta m_i, \Delta X_{II,i} = \Delta x_{II,i} \mid \xi_{i-1}) = \frac{\binom{u_0 - \xi_{i-1}}{\Delta x_{II,i}}\binom{G - p(1-r)(i-1) - u_0 + \xi_{i-1}}{p - \Delta x_{II,i}}}{\binom{G - p(1-r)(i-1)}{p}}$$

$$\times \binom{\Delta x_{II,i}}{\Delta m_i} s^{\Delta m_i}(1-s)^{\Delta x_{II,i} - \Delta m_i} \qquad (28)$$

In turn, $\Delta \xi_i$ is the sum of the number of faults detected, $\Delta m_i$, plus the number of still faulty constructs eliminated during the $i^{th}$ test case. Therefore, given $\Delta m_i$ and $\Delta x_{II,i}$ the conditional probability of $\Delta \Xi_i$ taking the value $\Delta m_i \leq \Delta \xi_i \leq \Delta x_{II,i}$ is equal to the probability of eliminating exactly $\Delta \xi_i - \Delta m_i$ (and, consequently, of replacing exactly $\Delta x_{II,i} - \Delta \xi_i$) of the $\Delta x_{II,i} - \Delta m_i$ faulty constructs remaining in the sample chosen by the test case:

$$P(\Delta \Xi_i = \Delta \xi_i \mid \Delta m_i, \Delta x_{II,i}) = \frac{\binom{\Delta x_{II,i} - \Delta m_i}{\Delta x_{II,i} - \Delta \xi_i}\binom{p - \Delta x_{II,i} + \Delta m_i}{pr - \Delta x_{II,i} + \Delta \xi_i}}{\binom{p}{pr}} \qquad (29)$$

for $\Delta \xi_i = \Delta m_i, \Delta m_i + 1, ..., \Delta x_{II,i}$.

Multiplying equations (28) and (29) and summing over $\Delta x_{II,i}$ results in

$$P(\Delta M_i = \Delta m_i, \Delta \Xi_i = \Delta \xi_i \mid \xi_{i-1}) = \sum_{\Delta x_{II,i} = \Delta \xi_i}^{p} \frac{\binom{\Delta x_{II,i} - \Delta m_i}{\Delta x_{II,i} - \Delta \xi_i}\binom{p - \Delta x_{II,i} + \Delta m_i}{pr - \Delta x_{II,i} + \Delta \xi_i}}{\binom{p}{pr}}$$

$$\times \frac{\binom{u_0 - \xi_{i-1}}{\Delta x_{II,i}}\binom{G - p(1-r)(i-1) - u_0 + \xi_{i-1}}{p - \Delta x_{II,i}}}{\binom{G - p(1-r)(i-1)}{p}} \binom{\Delta x_{II,i}}{\Delta m_i} s^{\Delta m_i}(1-s)^{\Delta x_{II,i} - \Delta m_i},$$

which can be used in the recursive equation

$$P(M_i = m_i, \Xi_i = \xi_i) = \qquad (30)$$

$$= \sum_{\Delta m_i = 0}^{p} \sum_{\Delta \xi_i = \Delta m_i}^{p} P(\Delta M_i = \Delta m_i, \Delta \Xi_i = \Delta \xi_i \mid m_{i-1}, \xi_{i-1})$$

$$\times P(M_{i-1} = m_i - \Delta m_i, \Xi_{i-1} = \xi_i - \Delta \xi_i) =$$

$$= \sum_{\Delta m_i = 0}^{p} \sum_{\Delta \xi_i = \Delta m_i}^{p} P(\Delta M_i = \Delta m_i, \Delta \Xi_i = \Delta \xi_i \mid \xi_{i-1}) P(M_{i-1} = m_i - \Delta m_i, \Xi_{i-1} = \xi_i - \Delta \xi_i)$$

with starting probabilities

$$P(M_1 = m_1, \Xi_1 = \xi_1) = \sum_{\Delta x_{II,1} = \xi_1}^{p} \frac{\binom{\Delta x_{II,1} - m_1}{\Delta x_{II,1} - \xi_1}\binom{p - \Delta x_{II,1} + m_1}{pr - \Delta x_{II,1} + \xi_1}}{\binom{p}{pr}}$$

$$\times \frac{\binom{u_0}{\Delta x_{II,1}}\binom{G - u_0}{p - \Delta x_{II,1}}}{\binom{G}{p}} \binom{\Delta x_{II,1}}{m_1} s^{m_1}(1-s)^{\Delta x_{II,1} - m_1} \qquad (31)$$

for calculating the joint probability function of $M_i$ and $\Xi_i$. The last line of equation (30) holds true, because both $M_i$ and $\Xi_i$ only depend on $M_{i-1}$ through $\Xi_{i-1}$. How many faults can still be activated and eliminated directly depends on the number of faulty constructs to be tested in the future.

From equation (30) finally follows the probability mass function of $M_i$,

$$P(M_i = m_i) = \sum_{\xi_i = m_i}^{p \cdot i} P(M_i = m_i, \Xi_i = \xi_i) =$$

$$= \sum_{\xi_i = m_i}^{p \cdot i} \sum_{\Delta m_i = 0}^{p} \sum_{\Delta \xi_i = \Delta m_i}^{p} \sum_{\Delta x_{II,i} = \Delta \xi_i}^{p} \frac{\binom{\Delta x_{II,i} - \Delta m_i}{\Delta x_{II,i} - \Delta \xi_i}\binom{p - \Delta x_{II,i} + \Delta m_i}{pr - \Delta x_{II,i} + \Delta \xi_i}}{\binom{p}{pr}}$$

$$\times \frac{\binom{u_0 - \xi_{i-1}}{\Delta x_{II,i}}\binom{G - p(1-r)(i-1) - u_0 + \xi_{i-1}}{p - \Delta x_{II,i}}}{\binom{G - p(1-r)(i-1)}{p}}\binom{\Delta x_{II,i}}{\Delta m_i}s^{\Delta m_i}(1-s)^{\Delta x_{II,i} - \Delta m_i}$$

$$\times P(M_{i-1} = m_i - \Delta m_i, \Xi_{i-1} = \xi_i - \Delta \xi_i). \tag{32}$$

For the special case $r = 1$ discussed above the random variables $M_i$ and $\Xi_i$ are identical, and equation (32) reduces to equation (27).

In figure 8 the probability distributions calculated recursively for the setup discussed as an example in section 2.4.1.2 are depicted. There is no big difference to the probability mass functions implied by the first extended partial redundancy model shown in figure 6. However, for r = 0.9 the positive effects of redundancy taken into account by the second extended partial redundancy model are noticeable in the form of a slight shift of the distributions of $P(M_i = m_i)$ to the right.

*2.4.2.3 The exact number of expected failure occurrences*

The probability mass function (26) obtained for $r = 1$ is a factorial series distribution, which can be shown by setting $\theta = u_0$ and

$$f(m_i) = \left[\sum_{\alpha=0}^{u_0 - m_i}\binom{u_0 - m_i}{\alpha}(1-s)^{\alpha}\binom{G - u_0 + m_i}{p - \alpha}\right]^i :$$

$$P(M_i = m_i) = \binom{u_0}{m_i}\frac{\Delta^{m_i}f(0)}{f(u_0)} =$$

$$= \binom{u_0}{m_i}\frac{\sum_{j=0}^{m_i}\binom{m_i}{j}(-1)^j\left[\sum_{\alpha=0}^{u_0 - m_i + j}\binom{u_0 - m_i + j}{\alpha}(1-s)^{\alpha}\binom{G - u_0 + m_i - j}{p - \alpha}\right]^i}{\left[\binom{0}{0}(1-s)^0\binom{G}{p}\right]^i}$$

Figure 8: *Probability mass functions of $P(M_i = m_i)$ according to the second extended model for $G = 100$, $p = 10$, $u_0 = 30$, $i = 10$ and various redundancy levels $r$ and activation probabilities $s$*

Consequently, the exact expected value of $M_i$ is given by

$$E(M_i) = u_0 \cdot \left[ 1 - \frac{\left[ \binom{G-1}{p} + (1 - s)\binom{G-1}{p-1} \right]^i}{\binom{G}{p}^i} \right] = u_0 \cdot \left[ 1 - \left( 1 - \frac{ps}{G} \right)^i \right]. \qquad (33)$$

**2.5 Model estimation**

Besides the discussion of the mean value functions, the probability mass functions, etc. following from the model assumptions the question of how to estimate the model parameters for a given data set is of high importance. In this section, several estimation methods are discussed.

**2.5.1 Least squares estimation**

*2.5.1.1 Fitting the cumulative number of failure occurrences*

Like the partial redundancy models the model by Tohma et al. [24, 41, 42] as well as the Rivers-Vouk model [37, 38] are based on the hypergeometric distribution. For both models there have been suggestions to estimate the parameters by fitting the mean value functions to the observed cumulative number of failure occurrences via the least squares method [24, 37].

Accordingly, the function to be minimized in order to determine the parameter estimates is the sum of the squared deviations of the cumulative number of failures experienced by the $i^{th}$ test case from the respective expected values $E(M_i)$ - or, as an approximation, from the value of mean value function $\mu(i)$. Table 1 lists the functional forms obtained for both cases and depending on the value of $r$. They are the same for the two extended partial redundancy models - merely the interpretation of the parameters $\alpha$, $\beta$ and $\gamma$ is different, as shown in table 2.

| | $\sum_i [m_i - E(M_i)]^2$ | $\sum_i [m_i - \mu(i)]^2$ |
|---|---|---|
| $r = 1$ | $\sum_i \left\{ m_i - \alpha \left[ 1 - (1 - \beta)^i \right] \right\}^2$ | $\sum_i \left\{ m_i - \alpha \left[ 1 - \exp(-\beta i) \right] \right\}^2$ |
| $0 \le r < 1$ | $\sum_i \left\{ m_i - \alpha \left[ 1 - \prod_{l=0}^{i-1} \left( 1 - \frac{\beta}{1-\gamma l} \right) \right] \right\}^2$ | $\sum_i \left\{ m_i - \alpha \left[ 1 - (1 - \gamma i)^{\frac{\beta}{\gamma}} \right] \right\}^2$ |

Table 1: *Functional forms obtained for the sum of squared errors using $E(M_i)$ and $\mu(i)$*

Table 2:

| Interpretation of the identifiable parameters | | | |
|---|---|---|---|
| | $\alpha$ | $\beta$ | $\gamma$ |
| First extended model | $u_0 s$ | $\frac{P}{G}$ | $\frac{P}{G}$ |
| Second extended model | $u_0 \frac{s}{1-r+rs}$ | $\frac{P}{G}(1 - r + rs)$ | $\frac{P}{G}(1 - r)$ |

Several conclusions can be drawn from this way of looking at the sum of squared errors:

- Using the least squares approach, not all of the parameters of the partial redundancy models can be identified, but only the compound parameters $\alpha$, $\beta$ and - where applicable - $\gamma$, or other combinations of them.

- Since based on these identifiable compound parameters the structure of the sum of squared errors is the same for the first and the second extended model, it is not possible to distinguish between the two models. Only the *interpretation* of the compound parameters is different.

- So far, it could be shown that the functional form given for the sum of squared errors based on the exact expected value of $M_i$ under the condition $0 \le r < 1$ holds true for the first extended partial redundancy model only. However, based on the structure that shows in the tables 1 and 2, one may conclude that in the second extended model $E(M_i)$ is given by

$$E(M_i) = u_0 \frac{s}{1 - r + rs} \cdot \left[ 1 - \prod_{l=0}^{i-1} \left( 1 - \frac{p(1 - r + rs)}{G - p(1 - r)l} \right) \right].$$

From a statistician's point of view, fitting the *cumulative* number of failure occurrences is problematic for several reasons, which are all connected to the fact that each random variable $M_i$ is the sum of the number of failure occurrences within the first $(i - 1)$ test cases, $M_{i-1}$, and the number of failures experienced during the $i^{th}$ test case, $\Delta M_i$:

1. One may well expect that the variance of the $M_i$s is not constant but increasing with $i$. As a consequence of this heteroscedasticity the least squares estimators are still unbiased, but inefficient [11].

2. Moreover, the disturbances $\varepsilon_i$ in the model $M_i = E(M_i)+\varepsilon_i$ are correlated. The effects of this autocorrelation are the same as for heteroscedasticity [11].

3. The fact that both $i$ and $m_i$ are trended series also gives rise to the spurious regression problem due to which the significance of the assumed relationship between the two series is overestimated [11].

Therefore, least squares estimation should rather be done based on the number of failures observed during each individual test case.

*2.5.1.2 Fitting the number of failure occurrences per test case*

Several publications discussing the hypergeometric model by Tohma et al. endorse minimizing the sum of squares of the deviations of $\Delta m_i$ from their expected values. While Dohi et al. [4] do not give any detailed information, Tohma et al. [42] clearly use the conditional expected values given the number of failure occurrences in the previous test cases for calculating the sum of squares

$$\sum_i \left[\Delta m_i - E(\Delta M_i \mid \Delta m_1, ..., \Delta m_{i-1})\right]^2 .$$

For the first extended model,

$$\begin{aligned} E(\Delta M_i \mid \Delta m_1, ..., \Delta m_{i-1}) &= s\frac{p}{G - p(1 - r)(i - 1)} \left(u_0 - E(\Delta X_{I,i-1} \mid \Delta m_1, ..., \Delta m_{i-1})\right) = \\ &= s\frac{p}{G - p(1 - r)(i - 1)} \left(u_0 - \frac{m_{i-1}}{s}\right), \end{aligned}$$

which leads to the sum of squared errors

$$\sum_i \left[\Delta m_i - \frac{\beta}{1 - \gamma(i - 1)} (\alpha - m_{i-1})\right]^2 \tag{34}$$

with parameters $\alpha$, $\beta$, $\gamma$ equal to those used in the least squares estimation based on the cumulative number of failure occurrences, listed in the second line of table 2.

However, directly applying equation (34) may yield inadequate results: In general, there are many test cases which do not activate any faults. Therefore, the minimum sum of squared errors is often obtained for $\beta =$

$$\widehat{(p/G)}$$

= 0! One remedy, avoiding the domination of the non-failure test cases in the parameter estimation, is to group the test cases as follows: Let the set $\tilde{I}$ consist of the ordered numbers of those test cases for which at least one failure occurred, i.e., $\tilde{I} = \{\tilde{i}_1, \tilde{i}_2, ..., \tilde{i}_k\} = \{\tilde{i} \mid \Delta m_i \in \{1, 2, ...\}\}$ with $\tilde{i}_1 < \tilde{i}_2 < ... < \tilde{i}_k$. Then calculate the sum of squared errors as

$$\sum_{j=1}^{k} \left[\Delta m_{\tilde{i}_j} - \sum_{i=\tilde{i}_{j-1}+1}^{\tilde{i}_j} \left(\frac{\beta}{1 - \gamma(i - 1)} (\alpha - m_{i-1})\right)\right]^2 . \tag{35}$$

For the second extended model, the conditional expected value of $M_i$ is given by

$$E(\Delta M_i \mid \Delta m_1, ..., \Delta m_{i-1}) = s \frac{p}{G - p|1 - r||i - 1|} (u_0 - E(\Xi_{i-1}|\Delta m_1, ..., \Delta m_{i-1})),$$

and the complexity of $E(\Xi_{i-1}|\Delta m_1,...,\Delta m_{i-1})$ defers the derivation of the squared sum of errors.

One drawback of this estimation approach is that the disturbances in the model

$$\Delta M_{\tilde{i}_j} = E(\Delta M_{\tilde{i}_j}) + \varepsilon_j$$

can only take integer values. Therefore, it is not reasonable to assume that they follow a normal distribution. Consequently, the distribution of the estimators is unknown, and confidence intervals for estimated and predicted values cannot be calculated.

### 2.5.2 Maximum likelihood estimation

*2.5.2.1 Interpreting the partial redundancy models as NHPP models*

In the Justified Model Selection [18] it has been suggested to use the continuously approximated expected value of $M_i$ obtained for the Rivers-Vouk model as the mean value function of a non-homogenous Poisson process model. Interestingly, the predictability (measured in terms of the short term and long term absolute relative errors) increased as compared to the least squares estimation based on the cumulative number of failure occurrences.

Like the Rivers-Vouk model the partial redundancy models are based on the hypergeometric distribution. It therefore seems reasonable to apply the same heuristic approach in their context.

With $\{i_1, i_2, ..., i_l\}$ denoting the ordered set of test case numbers for which measurements are available and $\Delta m_{i_j} = m_{i_j} - m_{i_{j-1}}$ representing the number of failure occurrences since the last measurement, the log-likelihood function takes the general form

$$\ln \mathcal{L}\left(\theta; \{(i_1, \Delta m_1), ..., (i_l, \Delta m_l)\}\right) = \sum_{j=1}^{l} \left[\Delta m_{i_j} \ln\left(\mu(i_j) - \mu(i_{j-1})\right)\right] - \mu(i_l) - \sum_{j=1}^{l} \ln(\Delta m_{i_j}!).$$

The log-likelihood resulting for the two extended partial redundancy models is then

$$\ln \mathcal{L}\left(\alpha, \beta, \gamma; \{(i_1, \Delta m_1), ..., (i_l, \Delta m_l)\}\right) =$$
$$= \begin{cases} \sum_{j=1}^{l} \left\{\Delta m_{i_j} \ln\left[\alpha \exp\left(-\beta i_{j-1}\right) - \alpha \exp\left(-\beta i_j\right)\right]\right\} - \alpha\left[1 - \exp\left(-\beta i_l\right)\right] + C & \text{if } \frac{\gamma}{\beta} = 0 \\ \sum_{j=1}^{l} \left\{\Delta m_{i_j} \ln\left[\alpha\left(1 - \gamma i_{j-1}\right)^{\frac{\beta}{\gamma}} - \alpha\left(1 - \gamma i_j\right)^{\frac{\beta}{\gamma}}\right]\right\} - \alpha\left[1 - \left(1 - \gamma i_l\right)^{\frac{\beta}{\gamma}}\right] + C \\ \qquad\qquad\qquad\qquad\qquad\qquad\qquad \text{if } 0 < \frac{\gamma}{\beta} \leq 1 \text{ and } \gamma \leq \frac{1}{i_l} \end{cases}$$

with $C = -\Sigma_{j=1}^{l} \ln(\Delta m_{i_j}!)$ being a value that does not depend on any of the model parameters. Just like with least squares estimation, not all of the parameters of the models but only the compound parameters $\alpha$, $\beta$, $\gamma$ explained in table 2 (and functions of them) can be estimated.

*2.5.2.2 Maximizing the likelihood implied by the model setup*

Instead of conducting a maximum likelihood estimation based on the likelihoods following under the heuristic approach of interpreting the partial redundancy models as non-homogeneous Poisson processes, one can directly use the likelihoods connected to the model setup. However, their complexity may make this method unfeasible for certain model variants.

Analyzing the special case of certain fault activation ($s = 1$), for which the two extended models are the same, the probability distribution of the number of failure occurrences during the $i^{th}$ test case given the history of failures experienced is simply hypergeometric:

$$P(\Delta M_i = \Delta m_i | \Delta m_1, \Delta m_2, ..., \Delta m_{i-1}) = \frac{\binom{u_0 - \sum_{j=1}^{i-1} \Delta m_j}{\Delta m_i} \binom{G - u_0 + \sum_{j=1}^{i-1} \Delta m_j - p(1-r)(i-1)}{p - \Delta m_i}}{\binom{G - p(1-r)(i-1)}{p}} \qquad (36)$$

If the number of faults detected is available for each individual test case, i.e., if $\{i_1, i_2, ..., i_l\} = \{1, 2, ..., l\}$, then the log-likelihood function is

$$\ln \mathcal{L}(G, p, r, u_0; \Delta m_1, ..., \Delta m_l) = \ln \left[ \prod_{i=1}^{l} \frac{\binom{u_0 - m_{i-1}}{\Delta m_i} \binom{G - u_0 + m_{i-1} - p(1-r)(i-1)}{p - \Delta m_i}}{\binom{G - p(1-r)(i-1)}{p}} \right] =$$

$$= \sum_{i=1}^{l} \ln((u_0 - m_{i-1})!) - \sum_{i=1}^{l} \ln(\Delta m_i!) - \sum_{i=1}^{l} \ln((u_0 - m_i)!) +$$

$$+ \sum_{i=1}^{l} \ln((G - u_0 + m_{i-1} - p(1-r)(i-1))!) - \sum_{i=1}^{l} \ln((p - \Delta m_i)!) -$$

$$- \sum_{i=1}^{l} \ln((G - u_0 + m_i - p(1-r)(i-1) - p)!) - \sum_{i=1}^{l} \ln((G - p(1-r)(i-1))!) +$$

$$+ \sum_{i=1}^{l} \ln(p!) + \sum_{i=1}^{l} \ln((G - p(1-r)(i-1) - p)!) \qquad (37)$$

A problem of this function is that the arguments of the factorials have to be positive integer values (or zero), which highly complicates its maximization. One solution may be to substitute the gamma function $\Gamma(x + 1)$ - defined for $(x + 1) \in \mathbb{R}_0^+$ - for the factorial $x!$ and hence optimize the log-likelihood

$$\ln \tilde{\mathcal{L}}(G, p, r, u_0; \Delta m_1, ..., \Delta m_l) = \sum_{i=1}^{l} \ln(\Gamma(u_0 - m_{i-1} + 1)) - \sum_{i=1}^{l} \ln(\Gamma(\Delta m_i + 1)) -$$

$$- \sum_{i=1}^{l} \ln(\Gamma(u_0 - m_i + 1)) + \sum_{i=1}^{l} \ln(\Gamma(G - u_0 + m_{i-1} - p(1-r)(i-1) + 1)) -$$

$$- \sum_{i=1}^{l} \ln(\Gamma(p - \Delta m_i + 1)) - \sum_{i=1}^{l} \ln(\Gamma(G - u_0 + m_i - p(1-r)(i-1) - p + 1)) -$$

$$- \sum_{i=1}^{l} \ln(\Gamma(G - p(1-r)(i-1) + 1)) + \sum_{i=1}^{l} \ln(\Gamma(p + 1)) +$$

$$+ \sum_{i=1}^{l} \ln(\Gamma(G - p(1-r)(i-1) - p + 1)). \qquad (38)$$

From the parameter values $\tilde{G}, \tilde{p}, \tilde{r}, \tilde{u}_0$, obtained by maximizing the log-likelihood $\ln \mathcal{L}$ the estimates are then obtained as

$$\hat{G} = \lfloor \tilde{G} \rfloor, \qquad \hat{p} = \lfloor \tilde{p} \rfloor, \qquad \hat{r} = \lfloor \tilde{r}\hat{p} \rfloor \cdot \frac{1}{\hat{p}}, \qquad \hat{u}_0 = \lfloor \tilde{u}_0 \rfloor, \qquad (39)$$

with $\lfloor x \rfloor$ denoting the largest integer value that is smaller than *x*.

Real data collected during a project does not necessarily consist of the number of failure occurrences for each of the test cases, but it may include grouped data giving the number of failures experienced during several subsequently executed test cases, $\Delta m_{(ij+1)} + ... + \Delta m_{i_{(j+1)}} = m_{i_{(j+1)}} - m_{i_j}$. For example, the *Teddi* tool produces such grouped data if testing intervals and failures are logged for an entire sub-chapter of the test specification, because then the failures cannot be counted for any one specific test cases belonging to this sub-chapter. Given the number of faults detected before the $(i_j + 1)^{th}$ test case, $m_{i_j}$, the distribution of $\Delta M_{(ij+1)} + ... + \Delta M_{i_{(j+1)}}$ is

$$P(\Delta M_{(i_j+1)} + ... + \Delta M_{i_{(j+1)}} = m_{i_{(j+1)}} - m_{i_j} | m_{i_j}) =$$

$$= \sum_{\Delta m_{(i_j+1)}} \cdots \sum_{\Delta m_{i_{(j+1)}-1}} \prod_{k=(i_j+1)}^{i_{(j+1)}-1} \frac{\binom{u_0 - m_{i_j} - \sum_{z=(i_j+1)}^{k-1} \Delta m_z}{\Delta m_k} \binom{G - u_0 + m_{i_j} + \sum_{z=(i_j+1)}^{k-1} \Delta m_z - p(1-r)(k-1)}{p - \Delta m_k}}{\binom{G - p(1-r)(k-1)}{p}}$$

$$\times \frac{\binom{u_0 - m_{i_j} - \sum_{z=(i_j+1)}^{i_{(j+1)}-1} \Delta m_z}{m_{i_{(j+1)}} - m_{i_j} - \sum_{z=(i_j+1)}^{i_j-1} \Delta m_z} \binom{G - u_0 + m_{i_j} + \sum_{z=(i_j+1)}^{i_{(j+1)}-1} \Delta m_z - p(1-r)(i_{(j+1)}-1)}{p - m_{i_{(j+1)}} + m_{i_j} + \sum_{z=(i_j+1)}^{i_{(j+1)}-1} \Delta m_z}}{\binom{G - p(1-r)(i_{(j+1)}-1)}{p}}, \qquad (40)$$

which reduces to the hypergeometric probability mass function (36) if $i_{(j+1)} = i_j + 1$. Therefore, the log-likelihood takes the general form

$$\ln \mathcal{L}(G, p, r, u_0; m_{i_1}, ..., m_{i_l}) = \ln \left[ \prod_{j=1}^{l} P(\Delta M_{(i_j+1)} + ... + \Delta M_{i_{(j+1)}} = m_{i_{(j+1)}} - m_{i_j} | m_{i_j}) \right].$$

Note that it is not necessary to implement equation (40) if the probability mass function $P(M_i = m_i; G, p, r, u_0, s)$ of the first extended model (23) has already been implemented, since

$$P(\Delta M_{(ij+1)} + ... + \Delta M_{i(j+1)} = m_{i(j+1)} - m_{ij} | m_{ij}) =$$

$$= P(M_{i_{(j+1)}-i_j} = m_{i_{(j+1)}-i_j}; G - p(1-r)i_j, p, r, u_0 - m_{i_j}, 1).$$

However, if the generalized likelihood $\tilde{\mathcal{L}}$, permitting all parameters to take non-integer values, is to be used, then a version of equation (23) has to be programmed in which the binomial coefficients have been replaced by combinations of gamma functions.

For the general first extended partial redundancy model with $0 < s \le 1$ the relationships are more complex. This is mainly due to the fact that, given the number of failure occurrences during the first *i* test cases and the parameters including $u_0$, the number of detectable faults remaining in the software is not known with certainty. Instead, assuming again that the number of failures experienced for each individual test case is available, based on the failure history $\Delta m_1, \Delta m_2, ..., \Delta m_{i-1}$ the conditional probability mass function for the number of faulty constructs that have already been executed at least once (and whose faults therefore cannot be activated anymore), $X_{I,i-1} = \Delta X_{I,1} + \Delta X_{I,2} + ... + \Delta X_{I,i-1}$, can be computed in a recursive manner:

$$P(X_{I,i-1} = x_{I,i-1} | \Delta m_1, ..., \Delta m_{i-1}) = \sum_{\Delta x_{I,i-1}} P(\Delta X_{I,i-1} = \Delta x_{I,i-1} | x_{I,i-2}, \Delta m_{i-1})$$

$$\times P(X_{I,i-2} = x_{I,i-1} - \Delta x_{I,i-1} | \Delta m_1, ..., \Delta m_{i-2}), \quad (41)$$

where

$$P(\Delta X_{I,i-1} = \Delta x_{I,i-1} \mid x_{I,i-2}, \Delta m_{i-1}) =$$
$$= \frac{P(\Delta M_{i-1} = \Delta m_{i-1} \mid \Delta x_{I,i-1})P(\Delta X_{I,i-1} = \Delta x_{I,i-1} \mid x_{I,i-2})}{\sum_{\Delta x_{I,i-1}} P(\Delta M_{i-1} = \Delta m_{i-1} \mid \Delta x_{I,i-1})P(\Delta X_{I,i-1} = \Delta x_{I,i-1} \mid x_{I,i-2})}$$

with

$$P(\Delta M_{i-1} = \Delta m_{i-1} \mid \Delta x_{I,i-1}) = \binom{\Delta x_{I,i-1}}{\Delta m_{i-1}} s^{\Delta m_{i-1}} (1-s)^{\Delta x_{I,i-1} - \Delta m_{i-1}}$$

and

$$P(\Delta X_{I,i-1} = \Delta x_{I,i-1} \mid x_{I,i-2}) = \frac{\binom{u_0 - x_{I,i-2}}{\Delta x_{I,i-1}}\binom{G - u_0 + x_{I,i-2} - p(1-r)(i-2)}{p - \Delta x_{I,i-1}}}{\binom{G - p(1-r)(i-2)}{p}}$$

The initial probabilities are

$$P(\Delta X_{I,1} = \Delta x_{I,1} \mid \Delta m_1) = \frac{\binom{\Delta x_{I,1}}{\Delta m_1} s^{\Delta m_1}(1-s)^{\Delta x_{I,1} - \Delta m_1}\frac{\binom{u_0}{\Delta x_{I,1}}\binom{G-u_0}{p-\Delta x_{I,1}}}{\binom{G}{p}}}{\sum_{\Delta x_{I,1}} \binom{\Delta x_{I,1}}{\Delta m_1} s^{\Delta m_1}(1-s)^{\Delta x_{I,1} - \Delta m_1}\frac{\binom{u_0}{\Delta x_{I,1}}\binom{G-u_0}{p-\Delta x_{I,1}}}{\binom{G}{p}}}$$

for $\Delta x_{I,1} = \Delta m_1, \Delta m_1 + 1, ..., \min(p, u_0)$.

The probability distribution of the number of faulty constructs tested by the $i^{th}$ test case only depends on the failure history via the number of faulty constructs executed during the previous test cases, i.e.,

$$P(\Delta X_{I,i} = \Delta x_{I,i} \mid x_{I,i-1}, \Delta m_1, ..., \Delta m_{i-1}) = P(\Delta X_{I,i} = \Delta x_{I,i} \mid x_{I,i-1}) =$$
$$= \frac{\binom{u_0 - x_{I,i-1}}{\Delta x_{I,i}}\binom{G - u_0 + x_{I,i-1} - p(1-r)(i-1)}{p - \Delta x_{I,i}}}{\binom{G - p(1-r)(i-1)}{p}}. \tag{42}$$

Given $\Delta x_{I,i}$, the probability for $\Delta m_i$ failures experienced during the $i^{th}$ test case in turn does not depend on the number of faulty constructs executed before, or the failure history:

$$P(\Delta M_i = \Delta m_i \mid \Delta x_{I,i}, x_{I,i-1}, \Delta m_1, ..., \Delta m_{i-1}) = P(\Delta M_i = \Delta m_i \mid \Delta x_{I,i}) =$$
$$= \binom{\Delta x_{I,i}}{\Delta m_i} s^{\Delta m_i}(1-s)^{\Delta x_{I,i} - \Delta m_i} \tag{43}$$

Using equations (41) - (43), the log-likelihood function for the first extended partial redundancy model with $0 < s \leq 1$ can then be calculated as

$$\ln \mathcal{L}(G, p, r, u_0, s; \Delta m_1, ... \Delta m_l) = \sum_{i=1}^{l} \ln P(\Delta M_i = \Delta m_i \mid \Delta m_1, ..., \Delta m_{i-1}) =$$

$$= \sum_{i=1}^{l} \ln \left[ \sum_{x_{I,i-1}=m_{i-1}}^{\min(p(i-1),u_0)} \sum_{\Delta x_{I,i}=\Delta m_i}^{p} P(\Delta M_i = \Delta m_i \mid \Delta x_{I,i}) P(\Delta X_{I,i} = \Delta x_{I,i} \mid x_{I,i-1}) \right.$$

$$\left. \times P(X_{I,i-1} = x_{I,i-1} \mid \Delta m_1, ..., \Delta m_{i-1}) \right]. \qquad (44)$$

Substituting gamma functions for the factorials contained in the binomial functions, the generalized version of this likelihood, $\hat{l}$, was implemented in C. Calculating the log-likelihood value for project data consisting of 117 test cases and a for a specified parameter constellation turned out to take about six minutes. Therefore, applying an optimization routine of S-Plus or R to this function does not seem to be feasible if no way for speeding up the computations involved can be found. Of course, taking into account grouped failure data will further complicate the matter.

Likewise, the complexity of the log-likelihood of the second extended model with $0 < s \leq 1$ can be expected to be at least as high as the one of equation (44).

### 2.5.3 Comparison of the estimation methods and further insights

According to the descriptions of the different estimation methods the following comparisons can be made:

1. Least squares estimation using the failure occurrences per test case (LS-Delta) should be preferred over fitting the cumulative number of failure occurrences via the least squares method (LS-Cum).

2. LS-Cum and maximum likelihood estimation based on the interpretation of the partial redundancy models as non-homogenous poisson processes (ML-NHPP) both do not allow to distinguish between the first and the second extended partial redundancy models. LS-Delta and maximum likelihood estimation referring to the likelihood implied by the model setup (ML-Setup) would probably lead to different functional forms for the two models; however, due to the arising complexity it is uncertain whether they are feasible.

3. LS-Cum, LS-Delta and ML-NHPP only allow the estimation of compound parameters whose interpretation depends on the model variation assumed. With ML-Setup an estimate for each model parameter can be determined, but in order to retain a practicable likelihood function it may be necessary to examine special cases, e.g. with an activation probability s equal to 100 per cent.

4. The two least squares methods only make use of the expected number of failure occurrences, not of the distribution around these expected values. The disturbances are definitely not normally distributed, and an alternative to choose is not clearly visible. Therefore, the distribution of the parameters estimators is unknown. While ML-NHPP heuristically assumes the underlying stochastic process to be a non-homogenous Poisson process, which definitely does not follow from the original propositions of the model, ML-Setup consistently sticks to the properties resulting from the model setup.

5. The conditional distributions forming the log-likelihood in the ML-Setup approach are non-regular in the sense that some of the parameters to be estimated determine the range of the observed variables. For example, in the log-likelihood (37) the possible values of $\Delta m_i$ depend on both $p$ and $u_0$.

Whether this property of the log-likelihood as well as the approach of maximizing a generalized log-likelihood $\ln \hat{l}$, in which all parameters may be real-valued, cause any problems remains to be seen.

Despite the drawbacks of ML-Setup, this approach to parameter estimation seems to be the most stringent one, largely staying within the framework laid by the assumptions of the partial redundancy models.

However, comparing the fit of the (first) extended partial redundancy model estimated according to all four estimation methods to the data sets of the baseline projects (figures 12 to 26 in appendix A), a property of the model estimates not specific to the ML-Setup approach alone becomes visible: The estimated number of total (detectable) faults in the software tends to be very close to the number of failures experienced until the end of the data set. While this may be acceptable in a *post mortem* analysis after the entire test plan has been carried out (and even then it can be suspected to be extremely optimistic), it is definitely an objectionable result to get at a test case coverage level of 40 per cent, like for the PPwin project (cf. figure 25). What is the reason for this model characteristic?

Remembering that for the first extended partial redundancy model the mean value function is proportional to expected code coverage, it becomes clear that the model is inclined to "assume" that full coverage has (almost) been attained at the end of the data set. Sometimes, it is predicted that several additional test cases are needed in order to execute the remaining parts of the software (e.g. for project A, figure 12).

But how much information on the size of the code areas not tested so far is contained in the failure data collected? This leads us back to the discussion of testing strategies that formed the starting point for deriving the partial redundancy model: When operational testing is conducted, then the different functional regions of the software are not exercised in strict succession; ideally, the specified test cases for all operations are executed in random order. Thus, at the beginning of testing high increases in code coverage are gained, and faults are detected in all parts of the software. The more testing proceeds, the more the rate of additional coverage attained decreases and the less faults remain to be found. Therefore, operational testing continuously gives the testers some feedback about the fraction of untested code in the form of a decreasing slope in the cumulative number of failure occurrences as a function of testing effort or test case coverage. However, the decreasing rate of new failures experienced is often regarded as a sign of inefficiency. Instead of measuring the current status the testers should rather increase the software quality at a faster pace. Systematic testing strategies try to reduce redundancies in software execution and give guidelines for directing the testers' attention to those functional areas and inputs thought to be error prone. Obtaining a rather constant value for the number of additional faults detected per unit of effort spent, per test case, or the like, is the goal and an indication of success of such techniques. But this gain comes at the price of a reduced content of information in the failure data collected: the better systematic testing is, the less information about the size of untested code is included in the data set. This is obvious: if ten completely independent test cases are run, each uncovering one fault, then one may well expect one failure occurrence per additional test case. However, the number of additional test cases to be run cannot be estimated based on the past failure data. This value has to be provided in addition to the failure history.

Classical software reliability models for operational testing are not in need of this extra piece of information. Since they imply full replacement of all code constructs, testing can go on infinitely both in terms of testing effort (according to testing effort based models like the Goel-Okumoto model) and in terms of the number of test cases executed (for models starting out with the number of test cases executed, like the approach by Piwowarski et al.). Such models can be fitted to failure data collected during systematic testing; however, the results cannot be expected to be trustworthy. The model by Piwowarski et al. for example, has the same shape as the Rivers-Vouk model with a linear testing efficiency. For this model, having shown to be the best black box coverage data model according a number of criteria [18], the estimates of the total number of faults in the software turned out to be unreasonably high for a number of baseline projects. For example, the number of faults remaining in the software tested during project A after 144 failures had occurred was estimated to be 14467 [5]. The reason for this phenomenon is that the exponentially-shaped mean value function of the model fits the almost linear data set well if the parameter representing the total number of faults is chosen large enough [16, 17].

The partial redundancy model, including setups related to systematic testing, takes into account the fact that when trying to avoid repeated executions of code constructs testing cannot go on forever in the same manner. As soon as the entire software has been covered once a structural break will necessarily occur. If faults can only be detected when the construct at which it is located is exercised for the first time, then the mean value function is necessarily flat for $i > [\frac{p}{G}(1-r)]^{-1}$. Application of the model shows that the failure data collected during systematic testing does hardly contain any information about when this structural break will be experienced.

There seem to be at least two possible ways for providing information about the testing yet to be done:

1. If not only the number of failure occurrences but also the structural coverage (e.g., path coverage) gained is recorded per test case, then the basic partial redundancy model can be used for deriving the estimates $\hat{G}$, $\hat{p}$ and $\hat{r}$. In a second step, $u_0$ can be estimated by maximizing ln

$$\tilde{\mathcal{L}}(u_0; \hat{G}, \hat{p}, \hat{r}, \Delta m_1, ..., \Delta m_l) = \ln \tilde{\mathcal{L}}(\hat{G}, \hat{p}, \hat{r}, u_0; \Delta m_1, ..., \Delta m_l) -$$

equation (38) - with respect to $u_0$.

The main obstacle for applying this method is that collecting code coverage information is not feasible for most of the projects carried out by the SMEs participating at the PETS project. First of all, this is due to the expected overhead of data collection. Furthermore, different tools be necessary for the various programming languages. Moreover, the code has to be available in order to instrument it for coverage measurement. However, at a system test level it is normally not possible to access source or debug code for this end.

2. The parameters can be estimated from equation (38) under the constraint $\frac{p}{G}(1 - r)i_t \leq 1$, where it is the total number of test cases in the test plan. This restriction implies the belief that the entire software cannot be covered before all $i_t$ test cases have been executed. Of course, it is necessary that the remaining test cases have the same average size as the test cases run so far, and the redundancy level is also assumed to be the same. It should be noted that the estimate of $u_0$ determined with this method can be expected to be close to the one resulting from the approach discussed under 1 only if the coverage that would be attained by the it test cases is indeed close to 100 per cent. In order to diminish the influence of the current test specification, instead of it some higher value $i_j^*$ - including the number of additional test cases not contained in the test plan, but necessary to cover the whole software on a black-box level - can be used. However, there still may be effects due to the methodology used for deriving test cases. $\hat{u}_0$ can be regarded as the expected number of faults expected to be detectable under a given testing strategy.

Such a value may even be of higher interest than the expected number of total faults inherent in the software at the beginning of testing calculated using code coverage information: Often, there are sections of code that cannot be reached at all during program execution; the re-use of existing software components has definitely increased the extent this phenomenon. Since the faults contained in such "dead" code can not cause any failures of the software product, the total number of faults remaining in the software is of limited value if the number of unreachable faults included in this full amount is not known. Using the black box approach referring to the different operations and input combinations to the tested may yield a better estimate of the proportion of the software that is executable.

Following the approach in 2 (that could be dubbed ML-SetupC) the parameters were estimated once again for all the data sets. From figures 27 to 41 in Appendix A it can be seen that the first partial redundancy model can produce a spectrum of mean value functions between straight lines and doubly-mirrored exponential functions. S-shaped curves and functions with increasing slopes are outside its scope. These might be modelled with time-varying functions for the redundancy level $r$ (or, if $s$ is not set equal to one, for the fault activation probability s). However, these generalizations would add considerable complexity to the derivation of the mean value function, the probability mass function of $M_i$ and the log-likelihood function.

The parameter estimates obtained with ML-SetupC are listed in table 3. While, for example, the estimated redundancy level may be used to draw conclusions about the quality of the testing process (assuming that avoiding repeated executions of the same portions of code is one of its goals) the analysis could also be reversely directed: Based on information of the testing process one could try to estimate the redundancy level to be attained for a certain test project. There are several reasons why such an approach can be useful:

1. If it is possible to estimate the parameters of a software reliability growth model even if no failure data are available, then the so-called "early prediction" [31] of the software failure pattern can be conducted before testing starts.

2. It is a well-known fact that there is considerable noise in connection with the observed failure occurrences. Especially at the early stage of testing, when only few failure data have been collected, the "dynamic" parameter estimates calculated using the test data can be unstable or even outside the region of meaningful values. If this happens, the static estimates can be substituted for the dynamic estimates.

3. The static estimates might be a reasonable choice for the starting values to be used for numerically optimizing the log-likelihood function of the partial redundancy model.

Table 3:

| Parameter estimates obtained with ML-SetupC | | | |
|---|---|---|---|
| | $r$ | $\hat{p}$ | $\hat{G}$ | $\hat{u}_0$ |
| Project A | 0.000 | 3872 | 6033085 | 425 |
| Project B | 0.000 | 433664 | 278676447 | 465 |
| Project C, first data set | 0.000 | 5349 | 248083 | 53 |
| Project C, second data set | 0.208 | 7837 | 364676 | 72 |
| Project D | 0.000 | 899 | 750420 | 88 |
| Project E, integration test | 0.000 | 34391 | 6094106 | 34 |

Table 3: (continued)

| Parameter estimates obtained with ML-SetupC | | | | |
|---|---|---|---|---|
| | $\hat{r}$ | $\hat{p}$ | $\hat{G}$ | $\hat{u}_0$ |
| Project E, first system test | 0.000 | 481 | 55896 | 47 |
| Project E, second system test | 0.738 | 724 | 34399 | 40 |
| Project F | 0.495 | 1731 | 1206797 | 95 |
| Leo | 0.750 | 1547 | 75576 | 71 |
| Skartia | 0.339 | 875 | 2032 | 58 |
| VPro | 0.000 | 16999 | 605456 | 17 |
| WinDeich | 0.000 | 579 | 22040 | 57 |
| PPwin | 0.709 | 1705 | 62024 | 53 |
| SIwin | 1.000 | 1772 | 95002 | 95 |

The analysis of environmental information and its association with parameter estimates of the partial redundancy model is described in the remaining part of this study.

## 3 Environmental information and the partial redundancy model

### 3.1 The PETS questionnaire version 1.0

Since its draft version, published in part in the Justified Model Selection [18], the PETS questionnaire has undergone major revisions. The current version 1.0 can be found in appendix B of this document. Its main section still consists of questions concerning the capability of software development and testing processes oriented on the reference model in the technical report version of the standard ISO/IEC 15504 [23]. According to the objective of investigating the influence between software process maturity and parameters of software failure models, emphasis was put on those processes expected to be closely related to software quality, for example the ones belonging to the Engineering processes category. Furthermore, questions concerning system test, the phase in which the failure data analyzed are collected, have been grouped in a separate section.

In order to further amplify the alignment with this SPICE model, the possible scores for each process have been changed to a range between zero and five, matching the SPICE capability levels. For the scores 0, 1, 3 and 5 detailed scenarios have been developed. They try to give the respondent an idea of what the respective capability level specifically means. The basic ideas of how processes evolve between the different levels have been taken from the process attributes described in the capability dimension of the reference model [23]:

- At level 0, the process is not implemented. If actions are taken or output is produced, then this is done ad-hoc and in an unsystematic way.

- At level 1, the process is performed, which shows in the existence of various process-related work products.

- At level 3, defined processes are tailored for the individual projects. The required resources are estimated and allocated to the processes.

- At level 5, process measurements are taken and used for controlling the process performance. The effectiveness of process changes, triggered by a continuous improvement program, can therefore be assessed.

Basically, the scenarios dispose of the separation between the processes and the generic attributes linked to process capability. Bridging this gap and thus transferring the theoretic model to an environment professionals can more easily relate to is probably the most difficult task to be done during a process capability assessment.

Of course, the formulation of scenarios in the questionnaire bears the risk of producing descriptions that are too specific for general use and only fit for certain types of companies. Moreover, for the sake of brevity, not all characteristics mentioned in the respective process and capability definitions can be included in a scenario.

While care has been given to omit references to particular techniques, it is certainly true that the scenarios should only be used as a guidance for filling in the questionnaire, not as a dogma. Moreover, it must be noted that the objective of the questionnaire is not to determine SPICE levels in a way that can compete with standard assessments, but to get an impression about the general software development and testing quality and analyze its influence on the parameters of a software failure model.

However, it can well be expected that the usage of scenarios decreases subjectivity on the part of the respondents in rating the processes. Furthermore, empirical evidence described in the next section indicates that despite the possible problems documented above the questionnaire might be employed beneficially in a standard assessment as one means in a mix of instruments. These results also back up the suggestion that companies that have already undergone a standard SPICE assessment can fill in the levels attained for the respective (component) processes instead of answering all questions.

Some of the processes included may not be relevant for certain software developing companies. If, for example, no software programmed by third parties is integrated in the product, then a software acquisition process does not have to exist. Therefore, individual questions or entire (component) processes may be marked as "not applicable" in the questionnaire.

In three additional sections, information about the specific development project excluding the system test phase, the test project and the software product is assessed, because it is obvious that in addition to the general process maturity of the software development and test companies involved such specific characteristics influence the software quality and the software failure pattern encountered during testing.

In formulating these sections results of previous research was utilized. In 1985, Takahashi and Kamayachi [40] analyzed the influence of ten factors on the fault density of thirty software products at the beginning of the unit testing phase. Zhang and Pham [35, 44] adapted and augmented this list to a set of thirty-two environmental factors and used a questionnaire to assess their *presumed* impact on software reliability after release according to software managers, programmers, system engineers and testers. A selection of these factors for which data collection seemed possible was included in the PETS questionnaire. Where necessary, the factors were further operationalized, formulating questions whose answers are defined categories or numerical values. Discussions between the partners of the PETS project resulted in further suggestions of what aspects to take into account in the questionnaire.

### 3.2 The PETS questionnaire and SPICE levels

Besides the possibility to draw on know-how incorporated in an existing model, the main reason for structuring the questionnaire according to the SPICE reference model was to enable companies that have already been formally assessed to make use of the assessment results instead of filling in answers to the questions.

Therefore, all answers belonging to one (component) process should be condensed to one capability rating that can be replaced by its respective assessment outcome, if available. Since the scores are measured on an ordinal scale, the median is the appropriate measure of central tendency which can be used as the "typical" representation of the answers related to the process. The median of a set of $N$ observations, arranged in increasing order, is often defined to be the $(\frac{N+1}{2})^{th}$ observation when $N$ is odd and the average of the $(\frac{N}{2})^{th}$ and the $(\frac{N+2}{2})^{th}$ observation when $N$ is even [34]. The calculation described for the case of an even $N$ is a bit problematic, since it entails taking the average of comparative values, for which the distances do not have any meaningful interpretation. Therefore, it seems reasonable to use the largest integer value (the largest score) being smaller than or equal to the average of the $(\frac{N}{2})^{th}$ and the $(\frac{N+2}{2})^{th}$ observation instead.

The procedure of substituting SPICE levels for the median scores of the respective process ratings implies the belief that in general these medians are not be too far off the actual assessment outcomes. This hypothesis could only be tested based on pairs of assessment and questionnaire results for a number of companies.

Within the PETS project, such data were available for one company, Procedimientos-Uno. In June 1998 and March 1999, the European Software Institute had carried out two informal SPICE assessments of various software development processes. Having in mind the former situation at Procedimientos-Uno, one of their employees filled in the PETS questionnaire. For fourteen (component) processes (including one combination of two processes) the assessment results and questionnaire medians are jointly available; these processes, are listed in table 4.

Table 4:

| Processes assessed by the ESI and evaluated with the questionnaire | |
|---|---|
| Identifier | Process name |
| ENG.1.2 | Software requirements analysis process |
| ENG.1.3 | Software design process |
| ENG.1.4 | Software construction process |

Table 4:   (continued)

| Processes assessed by the ESI and evaluated with the questionnaire | |
| --- | --- |
| Identifier | Process name |
| ENG.1.5/1.6 | Software integration process / Software testing process |
| MAN.2 | Project management process |
| MAN.3 | Quality management process |
| SUP.1 | Documentation process |
| SUP.2 | Configuration management process |
| SUP.3 | Quality assurance process |
| SUP.8 | Problem resolution process |
| CUS.3 | Requirements elicitation process |
| ORG.2.1 | Process establishment process |
| ORG.3 | Human resource management process |
| ORG.4 | Infrastructure process |

For ten of the fourteen processes the median values obtained were in accordance with the assessment outcomes. The assessed SPICE level was overestimated by one level in two cases and underestimated by one level in two other cases. Since the overestimations concerned the same SPICE level, which is also true for underestimations, the results can graphically be displayed in the form of figure 9. (Remember, that for ordinal data the distances between the values is not defined. Therefore, it is not possible to regard a deviation of one from level 2 to be as large as a deviation of one from level 4.) In order to protect confidential information, the SPICE capability levels themselves are not revealed.

Figure 9: *Results of comparing the median values to the outcomes of the SPICE assessment*

The findings seem to confirm that the scenarios developed follow the general line of process improvement described by the reference model of ISO/IEC 15504 TR. If these encouraging results should be corroborated by future research, then the PETS questionnaire might rightfully be employed to get a first impression of the process maturity of a company or even be used as one instrument in preparation of interviews for a standard SPICE assessment.
Of course, even if the questionnaire should come to the same conclusions as a SPICE assessment, this does in no way validate the SPICE model itself, i.e., prove that this model does in fact measure the quality of the processes of an organization. Studies about this issue are being carried out in the course of the experiment phase of the SPICE project (cf., for example, [6]).

### 3.3 Analyzing the influence of process capability and project characteristics

This section tries to investigate whether the model parameter estimates obtained using the ML-SeptupC approach (cf. section 2.5.3) are in any way related to the answers given in the questionnaire. Questionnaires more or less completely filled in were available for ten projects: A, B, E, F, Leo, Skartia, VPro, WinDeich, PPwin and SSwin.
The model parameters have simple interpretations which help in grouping the factors which possibly influence them:

1. $u_0$ represents the total number of faults in the software at the beginning of testing. One may assume that this is determined by the general quality of the software development process, by the circumstances of the specific development project (e.g., the skill of the developers) and by characteristics of the software (for example, its size).

2. The redundancy level r could be related to the maturity of the software testing process and the specific testing project. Moreover, it may be influenced by characteristics of the software. The same might be true for the fraction $\frac{p}{G}$, the proportion of the software executed per test case. However, due to the fact that $\frac{\hat{p}}{G}(1 - \hat{r})i_t^*$ often turns out to be close to one (see section 2.5.3), it may be possible to estimate $\frac{p}{G}$ based on $\hat{r}$ and the number of test cases necessary to cover the software on a black box level.

Of course, the interpretations of the model parameters given above only hold if the software under test does not undergo any significant changes during the time in which the failure data are collected. For example, if existing features are re-implemented and re-tested in the consecutive system test cycles, then the total number of faults (to be) found is not equal to the total number of faults inherent in the software at the beginning of testing.

On the one hand, in order to obtain reliable results, the analysis has to be based on comparable projects. On the other hand, the already small sample size does not allow to be hugely decreased by omitting several projects. Therefore, the following decisions have been made:

1. The majority of the baseline projects (B, Leo, Skartia, VPro, SIwin, PPwin) consisted of the first system test cycle of a new software product. These projects should definitely be examined together, and if possible other projects should be included in the analysis.

2. The data for project A were collected during four consecutive system test cycles. However, in between the different cycles additional features were implemented, and these new features were then tested with a low level of retests of the other features. Therefore, the situation is close to systematic testing of a new software product within one test cycle. This is confirmed by the fact that for the number of failure occurrences as a function of testing effort no structural breaks are visible between the test cycles. (The structural break in the failure time data seems to be connected to the change in the testing personnel after the first test cycle and the resulting decrease in the speed of test case execution.) For that reason, the entire data set is treated as belonging to one system test cycle of a new software product.

3. For project E, failure data for both two integration and system test cycles are available. The data set of the earlier system test cycle has been included in the analysis.

4. The application tested in the WinDeich project was not completely new. However, it had been ported to a new database engine, which had entailed the re-engineering of large parts of the existing application. Therefore, it seems reasonable to analyze this project together with the other ones.

5. Project F started in mid 1999. The data examined in the Baseline Experiments report [5] were collected during more than ten system test cycles that took place from November 2001 to April 2002. That they are related to a generally stable software that has already been existing for some times shows in the low number of failures experienced per test cycle. Furthermore, there is a general trend of increased software quality from release to release, resulting in a decreasing slope of the cumulative number of failure occurrences. While the partial redundancy model seems to be able to fit the failure data (cf. figure 35), comparing the estimated model parameters to the ones of the other projects, does not seem to be reasonable. It has therefore been decided to drop project E from the investigation of the influence of environmental factors on the model parameters. However, for the examination of associations between various environmental factors the questionnaire of project E can been exploited.

### 3.3.1 Influence on the estimated number of inherent faults

As mentioned above, one may expect that the total number of faults in an application depends on the capability of the software development processes as well as environmental factors connected to the specific project and product. Moreover, the size of a software program has often been assumed to be a driving factor for the number of defects in it. Therefore, many existing models - like the one by Takahashi and Kamayachi [40], the one developed at the Air Force's Rome Laboratory (cf. [7] and [29, ch. 7]) and Malaiya's and Denton's model [32] - try to explain the fault density, the number of faults divided by the software size. Typically, the measure of size used is the number of (non-commentary) kilo lines of source code. For several baseline experiments of the PETS project this figure was not available. A quantity that could be provided is the size of the *compiled* code. Using this piece of information, the fault density in terms of faults per MByte of compiled code was determined. To what extent this measure depends on various environmental factors will be investigated with univariate descriptive analyses in the following sections. Based on the findings multivariate models are then proposed.

*3.3.1.1 Univariate analysis of software development process maturity*

For the 24 processes included in the questionnaire, the scores were obtained by computing the median value of the answers given to the related questions. Some processes were not applicable to all ten projects for which questionnaires were filled in; for example, some projects did not involve software suppliers and therefore did not require any acquisition processes. In addition, sometimes processes were not rated for other reasons. In the list of processes in table 5 the number of projects for which a process was not applicable or not evaluated is included.

One may expect that a company that shows a good performance in one process also attains high scores in other processes. This hypothesis can be checked by calculating a measure of association for all pairs of processes. A measure designed for ordinal-level variables is Goodman's and Kruskal's $\gamma$, which is based on the number of concordant and discordant pairs of observations. Determining $\gamma$ for two processes A and B, a pair of observations (in our case, two questionnaires) is concordant if in one of the questionnaires both processes get a higher score than in the other questionnaire. If in one questionnaire one process is rated higher than in the other questionnaire, while the other process is rated lower, then the pair of observations is said to be discordant. Observations for which one (or both) of the processes attain the same score in both questionnaires are called "tied".

Table 5:

| Number of baseline experiments (out of 10) for which the processes were not appli- cable or for which ratings were not available | | |
|---|---|---|
| Identifier | Process name | # of not appl./ # of NA |
| ENG.1.1 | System requirements analysis and design process | 0 / 0 |
| ENG.1.2 | Software requirements analysis process | 1 / 0 |
| ENG.1.3 | Software design process | 0 / 0 |
| ENG.1.4 | Software construction process | 0 / 0 |
| ENG.1.5 | Software integration process | 0 / 0 |
| ENG.1.7 | System integration and testing process | 0 / 0 |
| MAN.2 | Project management process | 0 / 0 |
| MAN.3 | Quality management process | 0 / 0 |
| MAN.4 | Risk management process | 0 / 0 |
| SUP.1 | Documentation process | 0 / 0 |
| SUP.2 | Configuration management process | 0 / 0 |
| SUP.3 | Quality assurance process | 0 / 0 |
| SUP.4/5 | Verification process / Validation process | 0 / 0 |
| SUP.6 | Joint review process | 5 / 0 |
| SUP.8 | Problem resolution process | 0 / 0 |
| CUS.1 | Acquisition process | 3 / 2 |
| CUS.2 | Supply process | 3 / 0 |
| CUS.3 | Requirements elicitation process | 1 / 0 |
| ORG.2.1 | Process establishment process | 0 / 0 |
| ORG.2.3 | Process improvement process | 0 / 0 |
| ORG.3 | Human resource management process | 0 / 0 |
| ORG.4 | Infrastructure process | 0 / 0 |
| ORG.5 | Measurement process | 0 / 0 |
| ORG.6 | Reuse process | 1 / 0 |

With $N_c$ and $N_d$ denoting the number of concordant and discordant pairs, respectively, $\gamma$ is then calculated as follows:

$$\gamma = \frac{N_c - N_d}{N_c + N_d}$$

When there are only concordant (and tied) pairs, but no discordant ones, then $\gamma$ is equal to one. This indicates the maximum positive association between the two process ratings, which means that higher scores for one of the processes tend to occur jointly with higher scores for the other one. Similarly, $\gamma$ attains its minimum value, minus one, if only discordant and tied pairs are present in the data. A sufficient (but not necessary) condition for $\gamma$ being equal to zero is statistical independence between the two variables.

The values of $\gamma$ computed for all pairs of process ratings are listed in the two parts of table 6.

| | ENG.1.1 | ENG.1.2 | ENG.1.3 | ENG.1.4 | ENG.1.5 | ENG.1.7 | ENG.2 | MAN.2 | MAN.3 | MAN.4 | SUP.1 | SUP.2 |
|---|---|---|---|---|---|---|---|---|---|---|---|---|
| ENG.1.1 | 1.000 | 0.478 | 1.000 | 1.000 | 0.789 | 1.000 | 0.879 | 0.704 | 1.000 | 0.462 | 0.846 | 1.000 |
| ENG.1.2 | | 1.000 | 0.800 | 0.273 | 0.067 | 0.200 | 0.308 | -0.091 | 0.333 | -0.143 | 0.200 | 0.111 |
| ENG.1.3 | | | 1.000 | 1.000 | 0.600 | 1.000 | 0.929 | 0.652 | 1.000 | 0.273 | 0.826 | 1.000 |
| ENG.1.4 | | | | 1.000 | 0.765 | 1.000 | 1.000 | 0.724 | 1.000 | 0.520 | 0.852 | 1.000 |
| ENG.1.5 | | | | | 1.000 | 0.619 | 0.700 | 0.789 | 0.667 | 0.895 | 0.913 | 1.000 |
| ENG.1.7 | | | | | | 1.000 | 1.000 | 1.000 | 1.000 | 0.586 | 0.742 | 1.000 |
| ENG.2 | | | | | | | 1.000 | 0.742 | 0.941 | 0.517 | 0.800 | 1.000 |
| MAN.2 | | | | | | | | 1.000 | 0.724 | 0.556 | 0.862 | 1.000 |
| MAN.3 | | | | | | | | | 1.000 | 0.407 | 0.862 | 1.000 |
| MAN.4 | | | | | | | | | | 1.000 | 0.429 | 0.520 |
| SUP.1 | | | | | | | | | | | 1.000 | 1.000 |
| SUP.2 | | | | | | | | | | | | 1.000 |
| SUP.3 | | | | | | | | | | | | |
| SUP.4/5 | | | | | | | | | | | | |
| SUP.6 | | | | | | | | | | | | |
| SUP.8 | | | | | | | | | | | | |
| CUS.1 | | | | | | | | | | | | |
| CUS.2 | | | | | | | | | | | | |
| CUS.3 | | | | | | | | | | | | |
| ORG.2 | | | | | | | | | | | | |
| ORG.3 | | | | | | | | | | | | |
| ORG.4 | | | | | | | | | | | | |
| ORG.5 | | | | | | | | | | | | |
| ORG.6 | | | | | | | | | | | | |

Table 6: *Goodman's and Kruskal's $\gamma$ for all pairs of software development process ratings (part 1)*

EP 1 420 344 A2

| | SUP.3 | SUP.4/5 | SUP.6 | SUP.8 | CUS.1 | CUS.2 | CUS.3 | ORG.2 | ORG.3 | ORG.4 | ORG.5 | ORG.6 |
|---|---|---|---|---|---|---|---|---|---|---|---|---|
| ENG.1.1 | 0.889 | 0.724 | 1.000 | 0.931 | 1.000 | 1.000 | 0.600 | 0.280 | 0.391 | 0.667 | 0.889 | 0.905 |
| ENG.1.2 | 0.600 | 0.500 | -0.333 | 0.583 | 1.000 | 1.000 | 0.200 | 0.455 | 0.684 | 0.200 | -0.067 | 0.059 |
| ENG.1.3 | 1.000 | 0.926 | 1.000 | 1.000 | 1.000 | 1.000 | 0.579 | 0.478 | 0.789 | 0.833 | 1.000 | 0.789 |
| ENG.1.4 | 1.000 | 0.871 | 1.000 | 1.000 | 1.000 | 1.000 | 0.579 | 0.304 | 0.500 | 1.000 | 1.000 | 1.000 |
| ENG.1.5 | 0.692 | 0.368 | 0.333 | 0.529 | 1.000 | 0.500 | 0.818 | 0.111 | 0.111 | 0.333 | 0.692 | 1.000 |
| ENG.1.7 | 1.000 | 0.613 | 1.000 | 1.000 | 0.714 | 1.000 | 1.000 | 0.680 | 0.538 | 1.000 | 1.000 | 1.000 |
| ENG.2 | 1.000 | 0.879 | 1.000 | 0.939 | 1.000 | 1.000 | 0.545 | 0.333 | 0.556 | 1.000 | 1.000 | 1.000 |
| MAN.2 | 1.000 | 0.355 | 1.000 | 0.704 | 1.000 | 1.000 | 1.000 | 0.724 | 0.538 | 1.000 | 1.000 | 1.000 |
| MAN.3 | 1.000 | 0.818 | 1.000 | 1.000 | 1.000 | 1.000 | 0.619 | 0.360 | 0.520 | 0.875 | 1.000 | 0.826 |
| MAN.4 | 0.238 | 0.143 | -0.200 | 0.308 | 0.000 | 0.200 | 0.300 | -0.040 | -0.077 | -0.067 | 0.238 | 0.583 |
| SUP.1 | 1.000 | 0.655 | 1.000 | 0.852 | 1.000 | 0.636 | 1.000 | 0.520 | 0.556 | 0.875 | 1.000 | 0.840 |
| SUP.2 | 1.000 | 0.826 | 1.000 | 1.000 | 1.000 | 1.000 | 1.000 | 0.619 | 0.538 | 1.000 | 1.000 | 1.000 |
| SUP.3 | 1.000 | 1.000 | 1.000 | 1.000 | 1.000 | 1.000 | 1.000 | 1.000 | 1.000 | 1.000 | 1.000 | 0.895 |
| SUP.4/5 | | 1.000 | 0.200 | 0.938 | 0.714 | 0.385 | 0.217 | 0.214 | 0.833 | 1.000 | 0.810 | 0.727 |
| SUP.6 | | | 1.000 | 1.000 | NA | 1.000 | 1.000 | 1.000 | 0.200 | 1.000 | 1.000 | 0.600 |
| SUP.8 | | | | 1.000 | 1.000 | 1.000 | 0.619 | 0.538 | 0.833 | 0.882 | 1.000 | 0.818 |
| CUS.1 | | | | | 1.000 | 1.000 | 1.000 | 1.000 | 1.000 | 0.714 | 1.000 | 0.714 |
| CUS.2 | | | | | | 1.000 | 1.000 | 1.000 | 1.000 | 1.000 | 1.000 | 1.000 |
| CUS.3 | | | | | | | 1.000 | 1.000 | 0.765 | 0.818 | 1.000 | 0.765 |
| ORG.2 | | | | | | | | 1.000 | 1.000 | 0.846 | 0.529 | 0.500 |
| ORG.3 | | | | | | | | | 1.000 | 1.000 | 0.455 | 0.478 |
| ORG.4 | | | | | | | | | | 1.000 | 1.000 | 0.857 |
| ORG.5 | | | | | | | | | | | 1.000 | 0.895 |
| ORG.6 | | | | | | | | | | | | 1.000 |

Table 6: Goodman's and Kruskal's γ for all pairs of software development process ratings (part 2)

Indeed, almost all of the process ratings are positively associated, many of them to a high degree. Merely the scores of the software requirements analysis process ENG.1.2 and the risk management process MAN.4 show a (weak) negative association to some of the other process ratings.

Due to the high redundancy in the data implied by these findings, it seems possible to further condense the process scores without losing much information. Furthermore, the questionnaire may probably be shortened by omitting questions on several of the processes.

An obvious way of compressing the process scores is to calculate the median rating for each process area. Then the influence of these different categories on the fault density can be analyzed. While the scores are ordinal-level variables the fault density is measured on a quantitative scale. For this constellation, no generally accepted measure of association seems to be available. Either, the fault density would have to be grouped for the calculation of Goodman's and Kruskal's γ, or the capability ratings would have to be interpreted as qualitative variables in an analysis of variance. In either case, information would be lost. Moreover, the latter type of analysis has two additional drawbacks:

- It entails the necessity to calculate the mean effect of each capability level on fault density. Thus, up to six (for levels 0 to 5) effects would have to be determined from nine data points; therefore, several computations would have to be based on only one or two observations. The small amount of projects does hardly allow this kind of analysis.

- Since the analysis of variance is based on one qualitative variable, it is not appropriate to check whether the relationship between the two variables is monotonous.

Although it is problematic from a methodological point of view, in market research and other industrial applications of statistics, ordinal-scale variables with seven or even five categories are often treated as quantitative variables. Several of the fault density models mentioned above (the Rome Lab model and the one by Malaiya and Denton) do the same by replacing the levels of ordinal variables by quantitative factors that are used as the model input.

Therefore, in the following paragraphs the scores of individual processes and the median scores of sets of processes are considered to be (discrete) quantitative.

Moreover, project F is being dropped due to the reasons stated above.

A measure of linear association between two quantitative variables $X$ and $Y$ is the correlation coefficient $\rho$. It is calculated by dividing the covariance $s_{xy}$ by the square roots of the variances of $X$ and $Y$, $s_x^2$ and $s_y^2$. If all observations $(x_i, y_i)$ are located on a line with positive slope, then $\rho$ is equal to 1. Similarly, if the relationship is perfectly described by a line with negative slope, then calculation of $\rho$ results in -1. Statistical independence of $X$ and $Y$ is sufficient, but not necessary for $\rho$ to be 0. This means that the two variables can be dependent even if a $\rho$ of 0 is obtained; however, this relationship is definitely not linear.

In table 7 the correlations between the process area scores and the fault density (FDEN) are listed. Most of them are negative (the better the processes, the smaller the fault density), only for the management process category a slight positive influence is indicated. In terms of absolute values, all of the effects are relatively small.

Table 7:

| Correlations between process category scores and (the logarithm of) fault density | | |
|---|---|---|
| | FDEN | ln (FDEN) |
| ENG | -0.101 | -0.322 |
| MAN | 0.081 | -0.261 |
| SUP | -0.221 | -0.446 |
| CUS | -0.326 | -0.572 |
| ORG | -0.362 | -0.663 |

Using the logarithm of fault density instead of fault density itself intensifies the degree of linear relationship with the process category ratings. This suggests that the fault density increases more than linearly when a process category score is decreased. Moreover, all correlations are now negative. Nevertheless, the dependencies are still moderate.

Interestingly, the score showing the highest correlations with fault density and its logarithm is not the one of the engineering process category (consisting of those process most closely related to software development), but the one of the organization process category (concerned with establishing and supporting the business goals of an organization). However, the scatter plot in figure 10 reveals that the rating for the ORG process category only takes two different values. Therefore, merely one project is responsible for the correlations observed.

Figure 10: *Scatter plot of capability rating for ORG process category and the logarithm of fault density*

Instead of condensing the ratings of one process category, one might use selected processes that seem to contribute most to the explanation of the fault density of a software product. The correlations between all process scores and the (logarithm of the) fault density are listed in table 8.

Table 8:

| Correlations between all process scores and (the logarithm of) fault density | | |
|---|---|---|
| | FDEN | ln (FDEN) |
| ENG.1.1 | -0.101 | -0.322 |
| ENG.1.2 | -0.393 | -0.454 |
| ENG.1.3 | -0.328 | -0.532 |
| ENG.1.4 | -0.305 | -0.459 |
| ENG.1.5 | 0.469 | 0.275 |
| ENG.1.7 | -0.007 | -0.327 |
| ENG.2 | -0.101 | -0.322 |
| MAN.2 | 0.280 | -0.080 |
| MAN.3 | -0.151 | -0.441 |
| MAN.4 | 0.478 | 0.429 |
| SUP.1 | 0.134 | -0.191 |
| SUP.2 | 0.205 | -0.110 |
| SUP.3 | -0.235 | -0.556 |
| SUP.4 | -0.525 | -0.636 |
| SUP.6 | -0.095 | -0.577 |

Table 8: (continued)

| Correlations between all process scores and (the logarithm of) fault density | | |
|---|---|---|
| | FDEN | ln (FDEN) |
| SUP.8 | -0.370 | -0.624 |
| CUS.1 | -0.662 | -0.914 |
| CUS.2 | -0.747 | -0.772 |
| CUS.3 | 0.144 | -0.238 |
| ORG.2 | -0.114 | -0.423 |
| ORG.3 | -0.414 | -0.601 |
| ORG.4 | -0.362 | -0.663 |
| ORG.5 | -0.078 | -0.416 |
| ORG.6 | 0.360 | 0.065 |

Again, almost all process ratings are negatively correlated with the logarithm of the fault density, while a number of them is positively correlated with fault density. Furthermore, taking the logarithm of fault density significantly increases the strength of the linear relationship in many cases.

While the correlation coefficients for the processes SUP.6, CUS.1 and CUS.2 are all high in absolute terms, from table 5 it can be seen that they are only based on five or seven observations. The smaller amount of data points per process maturity rating may be responsible for the reduced fluctuation around the assumed linear relationship. Since these processes are often not applicable or difficult to evaluate, predictions should probably not be based on them. These processes are therefore left aside for the time being. If further projects with ratings for them should be available in the future, they might be included in the analysis again.

The other seven strongest correlations for the logarithm of fault density are highlighted in table 8. They are all negative, ranging from -0.459 to -0.663, and they are related to the (component) processes ENG.1.3, ENG.1.4, SUP.3, SUP.4, SUP.8, ORG.3 and ORG.4. Table 6 indicates that the scores of these processes are strongly associated. It therefore makes sense to combine them to one rating by determining their median value.

As shown in table 9 in absolute terms the correlations of the resulting selective maturity rating (SMAT) with both fault density and the logarithm of fault density are higher than for any of single processes that contributed to it. While condensing the process ratings hardly diminishes the content of information it helps to balance outliers. Furthermore, the linear relationship between the new rating and (the logarithm of) fault density is stronger than for any of the process category marks analyzed in table 7, which could be expected.

Table 9:

| Correlations between SMAT and (the logarithm of) fault density | | |
|---|---|---|
| | FDEN | ln (FDEN) |
| SMAT | -0.533 | -0.690 |

The scatter plot of the selective maturity rating and the the logarithm of fault density is depicted in figure 11. Obviously, SMAT is more successful in discriminating between the projects than the score obtained for the ORG process category, which only attained two different values (cf. figure 10).

Figure 11: *Scatter plot of selective maturity rating SMAT and the logarithm of fault density*

*3.3.1.2 Univariate analysis of other environmental factors*

As already noted in section 3.1, based on work by Takahashi and Kamayachi [40] and Zhang and Pham [44] environmental factors related to the specific development project and software product were identified and operationalized further. The quantitative variables derived from the answers to the questionnaire are listed and explained in table 10. In the questionnaire, some questions concerning qualitative variables (e.g., the target topology of the software) are contained as well. However, as mentioned above, in order to determine a descriptive measure of the influence of a qualitative variable the mean effect per category has to be calculated. The current number of projects seems to be too small for conducting this type of analysis. It may be reasonable to take the the qualitative factors into account later on, when data on additional projects will be available.

Table 10:

| Environmental factors related to software development and the software product | | |
|---|---|---|
| Identifier | Explanation | # of NA |
| DEFF | Actual effort of development excluding system test in person months | 1 |
| DEPI | Development effort performance index: Ratio of actual development effort to planned development effort | 2 |
| DRUN | Runtime of development excluding system test (in months) | 1 |
| DRPI | Development runtime performance index: Ratio of actual development runtime to planned development runtime | 1 |
| DDIF | Development difficulty: $$DDIF = \frac{DEFF}{DRUN^2}.$$ | 1 |
| DMSK | Development team managers' skill: (Average) Number of years of experience in managing software projects | 1 |
| PGSK | Programmers' general skill: Average number of years of professional programming experience | 2 |

Table 10:  (continued)

| Environmental factors related to software development and the software product | | |
|---|---|---|
| Identifier | Explanation | # of NA |
| PSSK | Programmers' specific skill: Average number of similar projects (w.r.t. programming language, software architecture, etc.) that the programmers have worked on before | 1 |
| DTSI | Size of the development team: Maximum number of team members | 1 |
| PNDT | Percentage of new members in the development team | 2 |
| PRCH | Percentage of requirements changed after the specification phase | 1 |
| SICC | Size of the compiled code in MByte | 0 |
| PRCO | Percentage of code reused from other applications, or libraries | 1 |

The correlations between the quantitative environmental factors are shown in table 11.

| | DEFF | DEPI | DRUN | DRPI | PDIF | DMSK | PGSK | PSSK | DTSI | PNDT | PRCH | SICC | PRCO |
|---|---|---|---|---|---|---|---|---|---|---|---|---|---|
| DEFF | 1.000 | 0.812 | 0.983 | -0.013 | -0.279 | -0.431 | 0.150 | -0.321 | 0.997 | -0.274 | 0.215 | 0.980 | 0.516 |
| DEPI | | 1.000 | 0.926 | 0.986 | -0.539 | -0.220 | 0.113 | -0.609 | 0.345 | 0.259 | 0.218 | 0.331 | -0.320 |
| DRUN | | | 1.000 | 0.162 | -0.407 | -0.393 | 0.467 | -0.385 | 0.977 | -0.261 | 0.509 | 0.960 | 0.485 |
| DRPI | | | | 1.000 | -0.582 | -0.097 | 0.236 | -0.454 | -0.005 | 0.227 | 0.369 | 0.020 | -0.252 |
| PDIF | | | | | 1.000 | -0.274 | -0.632 | 0.358 | -0.246 | 0.580 | -0.567 | -0.227 | 0.157 |
| DMSK | | | | | | 1.000 | 0.868 | 0.402 | -0.500 | -0.382 | 0.577 | -0.571 | 0.173 |
| PGSK | | | | | | | 1.000 | 0.262 | -0.563 | -0.341 | 0.704 | -0.699 | 0.458 |
| PSSK | | | | | | | | 1.000 | -0.334 | 0.190 | 0.492 | -0.380 | 0.262 |
| DTSI | | | | | | | | | 1.000 | -0.224 | -0.404 | 0.989 | 0.484 |
| PNDT | | | | | | | | | | 1.000 | -0.163 | -0.227 | 0.115 |
| PRCH | | | | | | | | | | | 1.000 | 0.160 | 0.201 |
| SICC | | | | | | | | | | | | 1.000 | 0.389 |
| PRCO | | | | | | | | | | | | | 1.000 |

Table 11: *Correlations between the environmental factors related to software development and the product*

The highest pairwise associations seem to exist in the set consisting of development effort, development runtime, size of the development team and the size of compiled code, which is reasonable.

In table 12, the correlations between all quantitative factors related to development and the product and (the logarithm of) fault density are listed. According to these results, the percentage of requirements changed after the requirements phase and the the development runtime performance index are the factors most strongly correlated with fault density. As for the logarithm of fault density, the size of compiled code and the the development effort performance index achieve the highest correlations.

Table 12:

| Correlations between environmental factors and (the logarithm of) fault density | | |
|---|---|---|
| | FDEN | ln (FDEN) |
| DEFF | -0.224 | -0.012 |
| DEPI | 0.583 | 0.578 |
| DRUN | -0.075 | 0.100 |
| DRPI | 0.689 | 0.530 |
| PDIF | -0.560 | -0.257 |
| DMSK | 0.466 | 0.405 |
| PGSK | 0.650 | 0.458 |
| PSSK | 0.229 | 0.220 |
| DTSI | -0.256 | -0.066 |
| PNDT | 0.060 | 0.192 |
| PRCH | 0.752 | 0.480 |
| SICC | -0.434 | -0.668 |
| PRCO | -0.044 | 0.208 |

From table 11, it can be seen that both the correlation between the percentage of requirements changes and the development runtime performance index (0.369) as well as the one between the size of compiled code an the development effort performance index (0.331) are relatively weak. Therefore, it may be reasonable to include the factors PRCH *and* DRPI in a model for the fault density and the factors SICC *and* DEPI in a model for the logarithm of fault density. Whether the selected maturity rating SMAT discussed above should be incorporated as well (or instead of one of the other factors), and which of the multivariate models to select, will be discussed in the next section.

*3.3.1.3 Multivariate analysis*

So far, the correlations between one environmental factor and (the logarithm of) fault density have been studied. In a linear regression model, several factors can be included as exogenous variables trying to explain the endogenous variable. For example, when regressing fault density on the development runtime performance index, the percentage of requirements changed and the selective maturity rating the model has the form

$$\text{FDEN}_i = \alpha_0 + \alpha_1 \cdot \text{DRPI}_i + \alpha_2 \cdot \text{PRCH}_i + \alpha_3 \cdot \text{SMAT}_i + \varepsilon_i \qquad (45)$$

with the residuals $\varepsilon_i$ representing the disturbances of the linear relationship.

The fit of such a model is the better the smaller the error sum of squares (SSE) is, which is the sum of squared deviations of the observed fault densities from the respective values on the regression hyper-plane. In the best case, all data points are located on the hyper-plane, and the SSE is zero. On the contrary, if the exogenous variables do not make any contribution to the explanation of the endogenous variable then the SSE is equal to the total sum of squares (SST) of the endogenous variable, the sum of squared deviations of the observed values from their mean. Therefore the coefficient of determination, defined as

$$R^2 = 1 - \frac{\text{SSE}}{\text{SST}},$$

is bounded by zero and one and is the larger the better the model fits the data.

Including additional explanatory variables in a model cannot decrease the coefficient of determination. However, the extra gain may be too small to justify the higher complexity of the model. In order to account for this, the adjusted coefficient of determination

$$\bar{R}^2 = 1 - \frac{SSE}{SST} \frac{n-1}{n-k-1}$$

has been suggested [34]. It penalizes for the amount of exogenous variables $k$, relating it to the number of available observations $n$.

The two factors most highly correlated with fault density are the development runtime performance index and the percentage of requirements changes. All subsets of these factors and the selective maturity level have been used to model fault density. The resulting (adjusted) coefficients of determination are listed in table 13. The number of projects (out of the nine projects studied) for which the data were not available are shown as well. Each model is abbreviated by the explanatory variables concatenated with "+", omitting the fact that a slope is always included. For example, the model specifically indicated as (III) is the model of equation (45).

Table 13:

| | | $R^2$ | $\bar{R}^2$ | # of NA |
|---|---|---|---|---|
| | Fits of models for fault density | | | |
| | DRPI | 0.474 | 0.387 | 1 |
| | PRCH | 0.566 | 0.493 | 1 |
| | SMAT | 0.284 | 0.181 | 0 |
| (I) | DRPI+PRCH | 0.994 | 0.991 | 2 |
| | DRPI+SMAT | 0.488 | 0.283 | 1 |
| (II) | PRCH+SMAT | 0.956 | 0.939 | 1 |
| (III) | DRPI+PRCH+SMAT | 0.996 | 0.991 | 2 |

The three models with the largest (adjusted) coefficients of determination are marked with (I) to (III). In table 14, the "real" fault densities (based on the estimated values of $u_0$) of the projects and the estimates according to these three linear models are shown.

Table 14:

| | A | I B | I E | I Leo | I Skartia | I VPro | I WinDeich | I PPwin | I SIwin |
|---|---|---|---|---|---|---|---|---|---|
| | "Real" and estimated fault densities for selected models | | | | | | | | |
| "Real" FDEN | 170.701 | 39.015 | 5.098 | 44.375 | 47.120 | 12.697 | 22.152 | 106.835 | 184.242 |
| Est. (I) | 172.889 | NA | NA | 48.483 | 38.565 | 17.232 | 25.232 | 99.942 | 185.780 |
| Est. (II) | 141.877 | NA | 4.368 | 37.706 | 37.706 | 23.540 | 28.852 | 124.169 | 195.002 |
| Est. (III) | 170.905 | NA | NA | 46.178 | 37.409 | 17.679 | 25.078 | 105.320 | 185.554 |

Model (II) provides the least preferable fit of the three models, but it can be recommended for projects for which the development runtime performance index is not available. If this piece of information is known, then either model variant (I) or (III) should be used. For the latter one the coefficient of determination is slightly larger while the adjusted coefficient is the same. If the selective maturity rating has been determined, including it in the model may be worthwhile.

However, a larger amount of exogenous variables may give rise to the problem of multicollinearity [11]: Strong linear dependencies between the explanatory variables result in unbiased but inefficient estimators. In extreme cases, the estimates cannot be calculated at all. Therefore, it should be checked whether multicollinearity is an issue in model (III). One measure of multicollinearity is based on the correlation matrix of all exogenous variables (including the constant related to the intercept $\alpha_0$). With $\lambda_{min}$ and $\lambda_{max}$ denoting the smallest and largest eigenvalue of this matrix, respectively, the so-called condition number $C$ is calculated as

$$C = \sqrt{\frac{\lambda_{max}}{\lambda_{min}}} \ .$$

Values of $C$ larger than 20 indicate potential problems due to multicollinearity [11].

The condition number determined for model (III) is 32.915. Consequently, model (I) - for which the condition number is 7.952 - should be chosen in favor of model (III).

As for the association with the *logarithm* of fault density, the development effort performance index and the size of compiled code showed the highest correlation. All regression models for ln(FDEN) with subsets of these two factors and the selective maturity rating as exogenous variables are examined in table 15. The highest adjusted coefficients of determination are achieved for the linear models combining this maturity score with one of the other factors, indicated by (IV) and (V). While the "full" model including all three variables has the same coefficient of determination as variant (IV), it is less favorable due to the larger number of regressors employed.

Comparing the level of the (adjusted) coefficients of determination to those obtained for the linear models of fault density itself, it is clear that the models for its logarithm are less successful in explaining the variation in the values of the exogenous variable.

Table 15:

| Fits of models for the logarithm of fault density | | | |
|---|---|---|---|
| | $R^2$ | $\overline{R}^2$ | # of NA |
| DEPI | 0.334 | 0.201 | 2 |
| SICC | 0.447 | 0.368 | 0 |
| SMAT | 0.476 | 0.401 | 0 |
| DEPI+SICC | 0.586 | 0.379 | 2 |
| (IV) DEPI+SMAT | 0.785 | 0.678 | 2 |
| (V) SICC+SMAT | 0.680 | 0.573 | 0 |
| DEPI+SICC+SMAT | 0.785 | 0.571 | 2 |

This is even more obvious when examining the estimates of fault density according to the model (cf. table 16) and contrasting it to the "real" values and the results listed in table 14. Evidently, the performance of the models for the logarithm of fault density is much poorer than the performance of the models explaining fault density.

Table 16:

| "Real" and estimated fault densities for selected models | | | | | | | | | |
|---|---|---|---|---|---|---|---|---|---|
| A | B | E | Leo | Skartia | VPro | VPro | WinDeich | PPwin | SIwin |
| "Real" FDEN | 170.701 | 39.015 | 5.098 | 44.375 | 47.120 | 12.697 | 22.152 | 106.835 | 184.242 |
| Est. (IV) | 152.617 | NA | NA | 27.737 | 27.678 | 27.678 | 27.678 | 149.481 | 147.281 |
| Est. (V) | 74.900 | 83.024 | 3.708 | 39.432 | 40.360 | 40.087 | 37.084 | 84.936 | 84.832 |

To conclude, the best models detected based on the data sets available are all linear models of fault density. If both the development runtime performance index and the percentage of requirements changed after the specification phase are available, then the following predictive equation can be recommended:

$$\widehat{\mathrm{FDEN}}_i = -57.522 + 69.421 \cdot \mathrm{DRPI}_i + 266.660 \cdot \mathrm{PRCH}_i$$

The second best choice to be used if the development performance index is not known (while the selective maturity rating is) takes the form

$$\widehat{\mathrm{FDEN}}_i = 157.51 + 177.08 \cdot \mathrm{PRCH}_i - 68.75 \cdot \mathrm{SMAT}_i.$$

For the $i^{th}$ project the parameter $u_0$ of the partial redundancy model can then be estimates by

$$\hat{u}_{0,i} = \mathrm{SICC}_i \cdot \widehat{\mathrm{FDEN}}_i.$$

It is well understood that these findings are based on a small set of observations. In order to obtain better estimates data on more projects will be necessary. Furthermore, due to the shortage on data points, it was not possible to derive parameter estimates from a subset of observations and to test the predictive performance of the resulting model using the complementary set. This type of analysis is reserved for the future.

**3.3.2 Influence on the redundancy level**

*3.3.2.1 Univariate analysis*

In the partial redundancy models the redundancy level r stands for the fraction of executed code constructs that are replaced after each test case. Therefore, it is bounded between zero and one. When taking a look at the estimates obtained for the data sets available (cf. table 3), two things become obvious:

1. Both the theoretical minimum and maximum values are actually attained.

2. As for the minimum value, it even arises for more than half of the data sets available (and also more than half of the data sets selected for analysis at the beginning of section 3.3).

According to the first remark, a model for the redundancy level will have to allocate a non-zero probability to the theoretical bounds. Moreover, the model used must be able to explain the excess zeros observed. Classical model families can hardly account for that. It therefore seems reasonable to look for a mixed model that concurrently models

1. the probability for the redundancy level to be equal to zero and

2. the value the redundancy level takes if it is not equal to zero.

While the two questions are handled separately within this subsection, they will be integrated in one model in the following one.
Concentrating on the first question, for the $i^{th}$ project the piece of information of interest is the fact whether the redundancy level estimated for model is equal to zero or not. This can be expressed by the indicator variable $Y_i = I_{\{0\}}(r_i)$, which takes the value one if $r_i = 0$ and the value zero otherwise. A common approach to model the influence of some factor *x* on this binary variable is to assume that $Y_i$ depends on an unobservable variable $Y_i^*$ in the following way:

$$Y_i = \begin{cases} 1 & \text{if } Y_i^* > 0 \\ 0 & \text{if } Y_i^* \leq 0 \end{cases}$$

The expected value of $Y_i^*$ is in turn thought to be linearly related to the value of the factor $x_i$:

$$E(Y_i^* \mid x_i) = \alpha_0 + \alpha_1 x_i$$

If $Y_i^*$ is furthermore presumed to follow a logistic distribution with this expected value and the variance $\frac{\pi^2}{3}$, then the setup results in the so-called logit model implying the probabilities

$$P(\hat{r}_i = 0 \mid x_i) = P(Y_i = 1|x_i) = 1 - P(Y_i^* \leq 0 \mid x_i) = \frac{1}{1 + \exp|-\alpha_0 - \alpha_1 x_i|}$$

and

$$P(\hat{r}_i > 0 \mid x_i) = P(Y_i = 0 \mid x_i) = P(Y_i^* \leq 0 \mid x_i) = \frac{\exp|-\alpha_0 - \alpha_1 x_i|}{1 + \exp|-\alpha_0 - \alpha_1 x_i|}$$

Based on the set of independent observations $(x_i, y_i)$ for $n$ different projects, the coefficients $\alpha_0$ and $\alpha_1$ can be estimated by maximizing the log-likelihood function

$$\ln \mathcal{L}(\alpha_0, \alpha_1; x_1, ..., x_n, y_1, ..., y_n) =$$

$$= \ln \left[ \prod_{i=1}^{n} P(y_i = 1 \mid x_i)^{y_i} P(y_i = 0 \mid x_i)^{1-y_i} \right] = \ln \left[ \frac{\exp\left(-\sum_{i=1}^{n}(1-y_i)(\alpha_0 + \alpha_1 x_i)\right)}{\prod_{i=1}^{n}(1 + \exp(-\alpha_0 - \alpha_1 x_i))} \right] =$$

$$= -\sum_{i=1}^{n}(1-y_i)(\alpha_0 + \alpha_1 x_i) - \sum_{i=1}^{n} \ln\left[1 + \exp(-\alpha_0 - \alpha_1 x_i)\right].$$

Due to the small variability of the $y_i$'s (that are either zero or one), calculating the coefficient of determination based on the error sum of squares with respect to this observable variable, SSE = $\sum_{i=1}^{n} (y_i - P(y_i = 1 \mid x_i))^2$, does not seem to be reasonable. Several measures to be used instead have been proposed.[1]

Since the criterium for deriving the parameter estimates is the maximization of the log-likelihood, McFadden suggested to use a measure based on the comparison of the log-likelihood of the full model (46) - calculated at the optimizing parameter estimates $\hat{\alpha}_0$ and $\hat{\alpha}_1$ - to the maximum value the log-likelihood of a model in which the factor $x$ is assumed to have no influence. This restricted log-likelihood (denoted by $\ln'_0$) has the form

$$\ln \mathcal{L}_0(\tilde{\alpha}_0; , y_1, ..., y_n) = -\sum_{i=1}^{n}(1-y_i)\tilde{\alpha}_0 - \sum_{i=1}^{n} \ln\left[1 + \exp(-\tilde{\alpha}_0)\right].$$

McFadden's measure

$$R^2_{MF} = 1 - \frac{\ln \mathcal{L}(\hat{\alpha}_0, \hat{\alpha}_1)}{\ln \mathcal{L}_0(\hat{\tilde{\alpha}}_0)}$$

is bounded by zero below, but the theoretically possible maximum value of one can generally not be reached.

Aldrich and Nelson [1] propose a different measure,

$$R^2_{AN} = \frac{2(\ln \mathcal{L}(\hat{\alpha}_0, \hat{\alpha}_1) - \ln \mathcal{L}_0(\hat{\tilde{\alpha}}_0))}{2(\ln \mathcal{L}(\hat{\alpha}_0, \hat{\alpha}_1) - \ln \mathcal{L}_0(\hat{\tilde{\alpha}}_0)) + n},$$

which builds on the likelihood ratio statistic

$$2(\ln \mathcal{L}'(\hat{\alpha}_0, \hat{\alpha}_1) - \ln \mathcal{L}_0(\hat{\tilde{\alpha}}_0)).$$

McKelvey's and Zavoina's measure sticks closely to the analogy of the classical coefficient of determination. However, not the variation of $Y$, but the variation of the unobservable variable $Y^*$ is used. This is done by estimating the values of $Y^*$ via the assumed linear relationship with the factor $x$:

$$\hat{y}_i^* = \hat{\alpha}_0 + \hat{\alpha}_1 x_i$$

Additionally approximating the error sum of squares by $n$, the total sum of squares is given by $n$ plus the variation of the estimated values $\hat{y}_i^*$,

---

[1]For the following discussion cf. Klein [28].

$$\text{SST} = n + \sum_{i=1}^{n} (\hat{y}_i^* - \bar{\hat{y}}^*)^2$$

which leads to the pseudo-$R^2$ measure

$$R_{MZ}^2 = 1 - \frac{\text{SSE}}{\text{SST}} = 1 - \frac{n}{n + \sum_{i=1}^{n} (\hat{y}_i^* - \bar{\hat{y}}^*)^2}.$$

If the evaluation of quality of fit is to be based on the explanation of the variation of the latent variable $Y^*$ by the exogenous factor $x$, then it has been shown that $R_{MZ}^2$ is quite successful in reproducing the real but unknown coefficient of determination based on the regression of $Y^*$ on $x$ while both $R_{MF}^2$ and $R_{AN}^2$ tend to underestimate the quality of fit.

However, none of these measures is universally accepted. Therefore, all three of them are calculated in the following analysis of environmental factors explaining whether a redundancy level of zero is attained.

As for the investigation of the associations between the (estimated) redundancy level resulting in case that it is not equal to zero and various environmental factors, the correlation coefficient ρ is calculated based on the data of those for projects for which $r$ turned out to be larger than zero.

The first circumstance that may be assumed to have an influence on the two questions discussed is the maturity of testing. In the questionnaire, five questions specifically related to system test processes have been grouped together. For each project, the median value of the scores given to these questions has been calculated. Let this rating be referred to as testing maturity TMAT. In table 17 the results concerning the influence of the testing maturity on the estimated redundancy level are collected.

|  | $\{I_{\{0\}}(\hat{r})\}$ | | | | $\{\hat{r} \mid \hat{r} > 0\}$ |
|---|---|---|---|---|---|
|  | $R_{MF}^2$ | $R_{AN}^2$ | $R_{MZ}^2$ | Direction | ρ |
| TMAT | 0.456 | 0.385 | 0.893 | + | -0.656 |

Table 17: *Influence of testing maturity on the estimated redundancy level*

Depending on the measure used, the goodness of fit of the logit model seems to be moderate or strong. According to $R_{MZ}^2$, especially the explanatory power of TMAT with regard to the (assumed) variation in the latent variable is high. Remember that the other measures are inclined to underrate this property. The direction of the impact - also shown in table 17 - is reasonable as well: The larger the testing maturity rating, the higher is the probability of attaining a redundancy level of zero. All data sets refer to companies employing systematic testing, whose goals include the avoidance of repeated code executions.

The sign of the correlation coefficient between the testing maturity and the redundancy level is also as expected: Higher testing maturity tends to decrease the intensity of redundancy in testing. The absolute value 0.656 will be discussed below.

In addition to testing maturity, information on environmental factors related to the specific testing process were assessed with the questionnaire. Many of them are counterparts of factors examined for the software development process. All quantitative factors are displayed in table 18 together with the number of projects for which no data were available.

Table 18:

| Environmental factors related to the test process | | |
|---|---|---|
| Identifier Explanation # of NA | | |
| TEFF | Actual effort of the system test cycle in person months | 0 |
| TEPI | Testing effort performance index: Ratio of actual testing effort to planned testing effort | 1 |
| TRUN | Runtime of system test cycle (in months) | 0 |
| TRPI | Test runtime performance index: Ratio of actual testing runtime to planned testing runtime | 0 |

Table 18: (continued)

| Environmental factors related to the test process | | |
|---|---|---|
| Identifier Explanation # of NA | | |
| TDIF | Testing difficulty: TDIF = $\frac{TEFF}{TRUN}^2$ | 0 |
| TMSK | Test team managers' skill: (Average) Number of years of experience in managing test projects | 2 |
| TGSK | Testers' general skill: Average number of years of professional testing experience | 0 |
| TSSK | Testers' specific skill: Average number of similar projects (w.r.t. type of application tested, etc.) that the programmers have worked on before | 0 |
| PTED | Percentage of testers with a special education as test engineers | 0 |
| TTSI | Size of the test team: Maximum number of test team members | 0 |
| PTPR | Percentage of testers that have participated at the development of the software under test | 0 |
| PNTT | Percentage of new members in the test team | 0 |
| PAUT | Percentage of test cases executed by a test automation tool | 0 |
| PREJ | Percentage of failure messages generated during the test execution phase that were rejected due to errors in the test specification | 0 |

For the sake of completeness, the pairwise correlations between all these environmental factors have been calculated; they are listed in table 19.

With regard to the influence on the estimated redundancy level, the same analyses as for the testing maturity rating have been conducted. According to the results shown in table 20, most factors merely have a small impact on the probability for achieving a redundancy level of zero. The four factors producing the best fit are the testers' specific and general skill level, the percentage of new members in the test team and the percentage of testers with an education as test engineers. Unfortunately, only the direction of impact attributed to the last one of these factors seems to be reasonable: The higher the fraction of specifically educated testers, the more efficient testing can be. On the contrary, for example the outcomes suggesting that higher general or specific skills on the part of the testers reduce the probability of avoiding redundancy in testing are counterintuitive.

| | TEFF | TEPI | TRUN | TRPI | TDIF | TMSK | TTSI | TGSK | TSSK | PTED | PTPR | PNTT | PAUT | PREJ |
|---|---|---|---|---|---|---|---|---|---|---|---|---|---|---|
| TEFF | 1.000 | -0.077 | 0.664 | 0.065 | -0.366 | -0.198 | -0.154 | -0.166 | 0.668 | 0.837 | -0.367 | 0.237 | 0.032 | 0.055 |
| TEPI | | 1.000 | 0.200 | 0.992 | -0.427 | 0.997 | 0.974 | 0.960 | -0.155 | -0.367 | -0.395 | -0.092 | -0.321 | -0.509 |
| TRUN | | | 1.000 | 0.384 | -0.535 | 0.192 | 0.037 | -0.018 | 0.541 | 0.278 | -0.401 | 0.230 | 0.494 | -0.204 |
| TRPI | | | | 1.000 | -0.578 | 0.976 | 0.925 | 0.905 | -0.258 | -0.366 | -0.303 | -0.335 | -0.242 | -0.535 |
| TDIF | | | | | 1.000 | -0.638 | -0.346 | -0.355 | 0.147 | 0.150 | 0.584 | 0.417 | -0.177 | 0.707 |
| TMSK | | | | | | 1.000 | 0.970 | 0.953 | -0.461 | -0.670 | -0.429 | -0.406 | -0.262 | -0.600 |
| TGSK | | | | | | | 1.000 | 0.996 | -0.376 | -0.431 | -0.205 | -0.316 | -0.459 | -0.362 |
| TSSK | | | | | | | | 1.000 | -0.406 | -0.434 | -0.227 | -0.341 | -0.499 | -0.365 |
| PTED | | | | | | | | | 1.000 | 0.755 | -0.376 | 0.874 | 0.310 | 0.680 |
| TTSI | | | | | | | | | | 1.000 | -0.077 | 0.461 | -0.052 | 0.485 |
| PTPR | | | | | | | | | | | 1.000 | -0.316 | -0.049 | -0.036 |
| PNTT | | | | | | | | | | | | 1.000 | 0.293 | 0.884 |
| PAUT | | | | | | | | | | | | | 1.000 | 0.021 |
| PREJ | | | | | | | | | | | | | | 1.000 |

Table 19: *Correlations between the environmental factors related to testing*

EP 1 420 344 A2

Table 20:

| | $R^2_{MF}$ | $R^2_{AN}$ | $R^2_{MZ}$ | Direction | $\{\hat{r}\|\hat{r} > 0\}$ $\rho$ |
|---|---|---|---|---|---|
| TEFF | 0.163 | 0.183 | 0.180 | + | 0.719 |
| TEPI | 0.198 | 0.215 | 0.169 | - | 0.656 |
| TRUN | 0.096 | 0.117 | 0.101 | + | 0.696 |
| TRPI | 0.201 | 0.216 | 0.140 | - | 0.656 |
| TDIF | 0.020 | 0.027 | 0.012 | - | -0.864 |
| TMSK | 0.195 | 0.211 | 0.194 | - | 0.656 |
| TGSK | 0.691 | 0.487 | 0.994 | - | 0.656 |
| TSSK | 1.000 | 0.579 | 0.999 | - | 0.656 |
| PTED | 0.382 | 0.344 | 0.771 | + | NA |
| TTSI | 0.159 | 0.179 | 0.164 | + | -0.656 |
| PTPR | 0.323 | 0.307 | 0.678 | - | -0.656 |
| PNTT | 0.382 | 0.344 | 0.946 | + | NA |
| PAUT | 0.162 | 0.182 | 0.119 | + | 0.123 |
| PREJ | 0.096 | 0.117 | 0.102 | + | -0.706 |

*Influence of the environmental factors related to testing on the estimated redun-dancy level*

As for the correlations of the environmental factors with $\hat{r}$ it is even doubtful for most of the signs whether they actually make sense. For example, both testing difficulty and the percentage of failure messages that are rejected due to faults in the test specification seem to lead to a higher efficiency in testing. Another point to notice is that correlations with an absolute value of 0.656 show up very often. In fact, since the correlations are calculated from the data of those projects for which $\hat{r} \neq 0$, they are based on four observations only. Two projects each were carried out by the same company. As it turns out, correlations of 0.656 or -0.656 indicate that the respective factor is constant within one company but different across the two companies. Since most factors are able to discriminate between the companies but not between the projects, such correlations appear frequently.

Obviously, data on more projects will be necessary to come to better conclusions - especially with regard to the influence of environmental factors on the redundancy level if this level is not equal to zero. For the time being, it seems reasonable (and the best one can do) to assume that the probability for $\hat{r} = 0$ is influenced by testing maturity and the percentage of testers with a specific education as test engineers while the value of $\hat{r}$ for $\hat{r} > 0$ is influenced by testing maturity alone.

In the following section, a model integrating these two propositions will be applied.

*3.3.2.2 Multivariate analysis*

Combining the separate analysis of the cases in which $\hat{r}$ is equal to zero and the other cases in which it is between zero and one leads to a mixture model consisting of one point distribution, which is realized with probability $\pi^*$, and some other distribution, which comes into play with probability $1 - \pi^*$. The question is which "other" distribution should be used. While one may have the impression that $\hat{r}$ is a continuous random variable it is not. As assumption 4 of the partial redundancy model shows, the redundancy level has to be some multiple of the reciprocal value of $p$, the number of constructs chosen per test case. The rounding procedure described by the equation marked with (39) takes care that this relationship is also true for the estimated quantities $\hat{r}$ and $\hat{p}$. Therefore, $\hat{r} \cdot \hat{p}$ is definitely an integer value, bounded between zero and $\hat{p}$. Let this integer value estimated for project $i$ be denoted by $o_i$. Due to the upper bound on $o_i$, a distribution permitting $o_i$ to take any integer value - like the Poisson distribution - is not appropriate. Thus, the zero inflated Poisson (ZIP) model introduced by Lambert [30] does not fit for our purposes. Recently, Hall [20] adapted the model for bounded integer values by substituting the binomial for the Poisson distribution.

The setup of the zero inflated binomial (ZIB) model is as follows: With a probability of $\pi_i^*$ the random variable $O_i$ is from the zero state, and with the inverse probability $(1 - \pi_i^*)$ it is from a binomial distribution with sample size $p_i$ and success probability $\pi_i$. Consequently, the probability distribution of $O_i$ is given by

$$f(O_i = o_i) = \begin{cases} \pi_i^* + (1 - \pi_i^*)(1 - \pi_i)^{p_i} & \text{for } o_i = 0 \\ (1 - \pi_i^*)\binom{p_i}{o_i}\pi_i^{p_i}(1 - \pi_i)^{p_i - o_i} & \text{for } o_i = 1, ..., p_i \end{cases}$$

Incorporating the influence of environmental factors, the two probabilities $\pi_i$ and $\pi_i^*$ are modeled like in a logit model. Since we specifically assume that $\pi_i$ is affected by $\text{TMAT}_i$ alone while $\pi_i^*$ is affected by both $\text{TMAT}_i$ and $\text{PTED}_i$ this leads to the propositions

$$\pi_i^* = \frac{1}{1 + \exp(-\gamma_0 - \gamma_1 \cdot \text{TMAT}_i - \gamma_2 \cdot \text{PTED}_i)} =$$
$$= \frac{\exp(\gamma_0 + \gamma_1 \cdot \text{TMAT}_i + \gamma_2 \cdot \text{PTED}_i)}{1 + \exp(\gamma_0 + \gamma_1 \cdot \text{TMAT}_i + \gamma_2 \cdot \text{PTED}_i)} = \frac{\exp(\mathbf{g}_i \gamma)}{1 + \exp(\mathbf{g}_i \gamma)}$$

and

$$\pi_i = \frac{1}{1 + \exp|-\beta_0 - \beta_1 \cdot \text{TMAT}_i|} = \frac{\exp|\beta_0 + \beta_1 \cdot \text{TMAT}_i|}{1 + \exp|\beta_0 + \beta_1 \cdot \text{TMAT}_i|} = \frac{\exp(g, \gamma)}{1 + \exp(g, \gamma)}$$

where

$$\mathbf{g}_i = \begin{pmatrix} 1 & \text{TMAT}_i & \text{PTED}_i \end{pmatrix} \qquad \gamma' = \begin{pmatrix} \gamma_0 & \gamma_1 & \gamma_2 \end{pmatrix}$$
$$\mathbf{b}_i = \begin{pmatrix} 1 & \text{TMAT}_i \end{pmatrix} \qquad \beta' = \begin{pmatrix} \beta_0 & \beta_1 \end{pmatrix}$$

With the indicator variable $Y_i$, being equal to one if $O_i$ is zero (and $Y_i$ being zero otherwise), the log-likelihood of the ZIB model can then be formulated as follows:

$$\ln \mathcal{L}(\beta, \gamma; o_1, ...o_n) = \sum_{i=1}^{n} \ln f(O_i = o_i) =$$

$$= \sum_{i=1}^{n} \left\{ y_i \ln \left[ \pi_i^* + (1 - \pi_i^*)(1 - \pi_i)^{p_i} \right] + (1 - y_i) \ln \left[ (1 - \pi_i^*)\binom{p_i}{o_i}\pi_i^{p_i}(1 - \pi_i)^{p_i - o_i} \right] \right\} =$$

$$= \sum_{i=1}^{n} \left\{ y_i \ln \left[ \exp(\mathbf{g}_i \gamma) + (1 + \exp(\mathbf{b}_i \beta))^{-p_i} \right] - \ln \left[ 1 + \exp(\mathbf{g}_i \gamma) \right] \right.$$
$$\left. + (1 - y_i) \left[ o_i \mathbf{b}_i \beta - p_i \ln(1 + \exp(\mathbf{b}_i \beta)) + \ln \binom{p_i}{o_i} \right] \right\} \qquad (46)$$

The main problem with this log-likelihood is that its maximization with respect to $\beta$ and its maximization with respect to $\gamma$ cannot be treated separately. This would not be the case if we knew for each $O_i$ whether it is generated by the zero state or by the binomial state of the mixed model. Let the (unobservable) indicator variable $Z_i$ be one if the former situation has arisen and zero otherwise. The joint probability distribution of $O_i$ and $Z_i$ is

$$f(O_i = o_i, Z_i = z_i) = \begin{cases} \pi_i^* & \text{for } o_i = 0 \text{ and } z_i = 1 \\ (1 - \pi_i^*)\binom{p_i}{o_i}\pi_i^{p_i}(1 - \pi_i)^{p_i - o_i} & \text{for } o_i = 0, ..., p_i \text{ and } z_i = 0 \end{cases}$$

If all $z_1, ..., z_n$ were known, then the log-likelihood could be written as

$$
\begin{aligned}
\ln \mathcal{L}(\boldsymbol{\beta}, \boldsymbol{\gamma}; o_1, ...o_n, z_1, ..., z_n) &= \sum_{i=1}^{n} \ln f(O_i = o_i, Z_i = z_i) = \\
&= \sum_{i=1}^{n} \left\{ z_i \ln(\pi_i^*) + (1 - z_i) \ln \left[ (1 - \pi_i^*) \binom{p_i}{o_i} \pi_i^{p_i}(1 - \pi_i)^{p_i - o_i} \right] \right\} = \\
&= \sum_{i=1}^{n} \left\{ z_i \mathbf{g}_i \boldsymbol{\gamma} - \ln \left[ 1 + \exp(\mathbf{g}_i \boldsymbol{\gamma}) \right] \right\} + \sum_{i=1}^{n} (1 - z_i) \left\{ o_i \mathbf{b}_i \boldsymbol{\beta} - p_i \ln \left[ 1 + \exp(\mathbf{b}_i \boldsymbol{\beta}) \right] + \ln \binom{p_i}{o_i} \right\} \\
&= \ln \mathcal{L}(\boldsymbol{\gamma}; z_1, ..., z_n) + \ln \mathcal{L}(\boldsymbol{\beta}; o_1, ...o_n, z_1, ..., z_n).
\end{aligned}
\tag{47}
$$

Since the $z_1, ..., z_n$ are missing, the direct independent estimation of $\beta$ and $\gamma$ is not possible. However, the EM algorithm [3] can be employed here. It alternates between estimating the unobserved information $z_1, ..., z_n$, given the current estimates of $\beta$ and $\gamma$ (in the so-called E step) and maximizing $\ln \mathcal{L}(\gamma; z_1, ..., z_n)$ and $\ln \mathcal{L}(\beta; o_1, ...o_n, z_1, ..., z_n)$ conditional this estimate of $z_1, ..., z_n$ in the M step. At the $(r+1)^{th}$ iteration, the following computations are performed:

1. E step:

If $o_i > 0$, then it cannot be from the zero state, and $z_i^{(r)} = 0$. For $o_i = 0$,

$$
\begin{aligned}
z_i^{(r)} &= E(Z_i \mid o_i = 0, \boldsymbol{\gamma}^{(r)}, \boldsymbol{\beta}^{(r)}) \\
&= 1 \cdot P(Z_i = 1 \mid o_i = 0, \boldsymbol{\gamma}^{(r)}, \boldsymbol{\beta}^{(r)}) + 0 \cdot P(Z_i = 1 \mid o_i = 0, \boldsymbol{\gamma}^{(r)}, \boldsymbol{\beta}^{(r)}) \\
&= P(Z_i = 1 \mid o_i = 0, \boldsymbol{\gamma}^{(r)}, \boldsymbol{\beta}^{(r)}) \\
&= \frac{f(o_i = 0, z_i = 1; \boldsymbol{\gamma}^{(r)}, \boldsymbol{\beta}^{(r)})}{f(o_i = 0, z_i = 1; \boldsymbol{\gamma}^{(r)}, \boldsymbol{\beta}^{(r)}) + f(o_i = 0, z_i = 0; \boldsymbol{\gamma}^{(r)}, \boldsymbol{\beta}^{(r)})} \\
&= \frac{1}{1 + \exp(-\mathbf{g}_i \boldsymbol{\gamma}^{(r)}) \left[ 1 + \exp(\mathbf{b}_i \boldsymbol{\beta}^{(r)}) \right]^{-p_i}}.
\end{aligned}
\tag{48}
$$

2. M step for $\gamma$:

Since

$$
\begin{aligned}
\ln \mathcal{L}(\boldsymbol{\gamma}; z_1^{(r)}, ..., z_n^{(r)}) &= \sum_{i=1}^{n} \left\{ z_i^{(r)} \ln \left[ \frac{\exp(\mathbf{g}_i \boldsymbol{\gamma})}{1 + \exp(\mathbf{g}_i \boldsymbol{\gamma})} \right] + (1 - z_i) \ln \left[ \frac{1}{1 + \exp(\mathbf{g}_i \boldsymbol{\gamma})} \right] \right\} \\
&= \ln \left[ \prod_{i=1}^{n} \pi_i^{* z_i^{(r)}} (1 - \pi_i^*)^{1 - z_i^{(r)}} \right],
\end{aligned}
\tag{49}
$$

maximization of $\ln \mathcal{L}(\gamma; z_1^{(r)}, ..., z_n^{(r)})$ implies the estimation of a logit model for the dependent variables $Z_1^{(r)}, ..., Z_n^{(r)}$ with the exogenous variables contained in $g_1, ..., g_n$. However, note that the $z_1^{(r)}, ..., z_n^{(r)}$ are not indicator variables, but real-valued variables bounded by zero and one. In a more general view, an unweighted binomial logistic regression with a binomial denominator of one for each observation is carried out.

3. M step for $\beta$:

Analogously, it can be shown that the maximization of the log-likelihood referring to $\beta$ is related to a weighted binomial logistic regression with weights $(1 - z_i^{(r)})$ and binomial denominators of $p_i$:

$$\ln \mathcal{L}(\boldsymbol{\beta}; o_1, \ldots o_n, z_1^{(r)}, \ldots, z_n^{(r)})$$

$$= \sum_{i=1}^{n}(1 - z_i^{(r)}) \left\{ o_i \ln \left[ \frac{\exp(\mathbf{b}_i\boldsymbol{\beta})}{1 + \exp(\mathbf{b}_i\boldsymbol{\beta})} \right] + (p_i - o_i)\ln \left[ \frac{1}{1 + \exp(\mathbf{b}_i\boldsymbol{\beta})} \right] + \ln \binom{p_i}{o_i} \right\}$$

$$= \sum_{i=1}^{n}(1 - z_i^{(r)}) \ln \left[ \pi_i{}^{o_i}(1 - \pi_i)^{p_i - o_i} \binom{p_i}{o_i} \right] \qquad (50)$$

As for the choice of starting values $\gamma^{(1)}$ and $\beta^{(1)}$, please refer to Hall [20].

Goodness-of-fit measures for the zero inflated binomial model are not discussed in Hall's original paper. However, it is straightforward to apply McFadden's $R^2_{MF}$ and Aldrich's and Nelson's $R^2_{AN}$. The restricted model to be compared with the full one contains two probabilities $\tilde{\pi}^*$ and $\tilde{\pi}$ which do not depend on any project characteristics. By substituting

$$\tilde{\mathbf{g}}_i = 1, \quad \tilde{\boldsymbol{\gamma}} = \tilde{\gamma}_0, \quad \tilde{\mathbf{b}}_i = 1 \quad \text{and} \quad \tilde{\boldsymbol{\beta}} = \tilde{\beta}_0$$

for the vectors $g_i$, $\gamma$, $b_i$ and $\beta$ in equation (46), the corresponding log-likelihood is obtained:

$$\ln \mathcal{L}_0(\tilde{\beta}_0, \tilde{\gamma}_0; o_1, \ldots o_n) = \sum_{i=1}^{n} \left\{ y_i \ln \left[ \exp(\tilde{\gamma}_0) + (1 + \exp(\tilde{\beta}_0))^{-p_i} \right] - \ln \left[ 1 + \exp(\tilde{\gamma}_0) \right] \right.$$

$$\left. + (1 - y_i) \left[ o_i\tilde{\beta}_0 - p_i \ln(1 + \exp(\tilde{\beta}_0)) + \ln \binom{p_i}{o_i} \right] \right\} \qquad (51)$$

Since the equations (47) to (50) can be adapted in the same way, it is possible to estimate the two parameters $\tilde{\beta}_0$ and $\tilde{\gamma}_0$ via the EM algorithm described above.

According to the parameter estimates obtained for the project data available, the probability for attaining the zero state is best estimated by

$$\hat{\pi}_i^* = \frac{1}{1 + \exp\left[ 19.288 - 9.644 \cdot \text{TMAT}_i - 34.752 \cdot \text{PTED}_i \right]}$$

while the estimation of the replacement probability in the binomial case should be calculated as follows:

$$\hat{\pi}_i^* = \frac{1}{1 + \exp\left[ -3.170 + 1.379 \cdot \text{TMAT}_i \right]}$$

The values attained for $R^2_{MF}$ and $R^2_{AN}$ are 0.292 and 0.982, respectively. While the value of McFadden's measure seems to be rather small (although one has to bear in mind that the maximum of one can never be reached in practical application), Aldrich's and Nelson's measure indicates an especially good fit.

Additional, more detailed results of the model estimation are shown in table 21. Besides the estimated redundancy levels $r_i$ the estimated probabilities for attaining the zero state $\hat{\pi}_i^*$ and the estimated expected values of $r_i$

$$\hat{E}(\hat{r}_i) = \hat{\pi}_i^* \cdot 0 + (1 - \hat{\pi}_i^*)\hat{\pi}_i = (1 - \hat{\pi}_i^*)\hat{\pi}_i$$

are listed.

Table 21:

| Results of fitting the zero inflated binomial model | | | | | | | | | |
|---|---|---|---|---|---|---|---|---|---|
| | A | B | E | Leo | Skartia | VPro | WinDeich | PPwin | SIwin |
| $\hat{r}_i$ | 0.000 | 0.000 | 0.000 | 0.750 | 0.339 | 0.000 | 0.000 | 0.709 | 1.000 |
| $\hat{\pi}_i^*$ | 1.000 | 1.000 | 1.000 | 0.500 | 0.500 | 0.500 | 0.500 | 0.000 | 0.000 |
| $\widehat{(r_i)}$ | 0.000 | 0.000 | 0.000 | 0.301 | 0.301 | 0.301 | 0.301 | 0.857 | 0.857 |

These results look very promising, too. However, one issue becomes obvious: Separation between different projects of one company has not been achieved. This is not a characteristic of the zero inflated binomial model, but of the data available. As already noted in section 3.3.2.1, the environmental factors related to testing hardly vary within one company while the estimated redundancy levels do to some extent. A possible remedy may be the collection of software-related pieces of information like its "testability". Whether such concepts can be operationalized and measured remains to be seen.

## 4 Conclusions

In this study, a software failure model for data collected during systematic testing has been derived and discussed in detail. Several ones of the model parameters have physical interpretations and can be related to environmental factors of the software development and test process. While the development runtime performance index and the percentage of requirements changed after the specification phase have been found to be especially capable of estimating the fault density of the application at the beginning of the system test phase, prediction of the redundancy level during testing seems to be possible based on the testing maturity rating obtained from the PETS questionnaire and the percentage of testers with an education as test engineers. As expected, the capability score of most development processes is negatively correlated with the fault density of the software produced. To an even higher degree this is true for the selective maturity rating based on the scores of the (component) processes ENG.1.3, ENG.1.4, SUP.3, SUP.4, SUP.8, ORG.3 and ORG.4. However, the project specific factors mentioned above seem to be more influential on the actual outcomes.

Nevertheless, the questionnaire developed in the PETS project may be useful even for additional objectives than collecting data for software failure models. Although the questionnaire cannot (and is not intended to) replace SPICE assessments, the ratings obtained from it seem to be in accordance with standard assessment results. '

It is well understood that the findings are based on a small number of observations and that further test projects are needed in order to obtain better estimates and to evaluate the predictive quality of the models derived here. All the same, the current achievements of the PETS project are very promising.

## A Diagrams of fitted data sets

This appendix contains the diagrams referred to in section 2.5.3. The projects used have been described in the Justified Model Selection [18] and in the Baseline Experiment Reports [2, 5, 19, 21]. As for the projects carried out at imbus AG, the actual project names were replaced by single letters in order to protect confidential information concerning third parties.

Figures 12 to 26 show the (first) extended partial redundancy model fitted according to all four estimation techniques explained in sections 2.5.1 and 2.5.2. The common legend to these diagrams is as follows:

Table 22:

| Legend for figures 12 to 26 | |
|---|---|
| - -⌐ | Original data set |
| - - | Extended partial redundancy model fitted using LS-Cum |
| ... | Extended partial redundancy model fitted using LS-Delta |
| -· | Extended partial redundancy model fitted using ML-NHPP |
| - - | First extended partial redundancy model fitted using ML-Setup |

Figures 27 to 41 contain the same data sets once again. Now the first extended partial redundancy model was fitted using the revised maximum likelihood estimation based on the likelihood implied by the model setup for all the projects, as described in section 2.5.3. The legend for these figures is given by table 23.

Table 23:

| Legend for figures 27 to 41 | |
|---|---|
| --⌐ | Original data set |
| -- | First extended partial redundancy model fitted using ML-SetupC |

Figure 12: *Project A*

Figure 13: *Project B (rejected faults included)*

Figure 14: *Project C, first data set*

Figure 15: *Project C, second data set*

Figure 16: *Project D*

Figure 17: *Project E, two integration test cycles*

Figure 18: *Project E, first system test cycle*

Figure 19: *Project E, second system test cycle*

Figure 20: *Project F*

Figure 21: *Project Leo*

Figure 22: *Project Skartia*

Figure 23: *Project VPro*

Figure 24: *Project WinDeich*

Figure 25: *Project PPwin*

Figure 26: *Project SIwin*

Figure 27: *Project A*

Figure 28: *Project B (rejected faults included)*

Figure 29: *Project C, first data set*

Figure 30: *Project C, second data set*

Figure 31: *Project D*

Figure 32: *Project E, integration test cycle*

Figure 33: *Project E, first system test cycle*

Figure 34: *Project E, second system test cycle*

Figure 35: *Project F*

Figure 36: *Project Leo*

Figure 37: *Project Skartia*

Figure 38: *Project VPro*

Figure 39: *Project WinDeich*

**EP 1 420 344 A2**

Figure 40: *Project PPwin*

Figure 41: *Project SIwin*

## B PETS Questionnaire

On the following pages the PETS questionnaire version 1.0 used for assessing information on the baseline projects is shown.

Its structure is as follows:

- General information

  - About the organization

  - About the assessor

  - About the capability of the software development process (including software unit test)

  - About the capability of the system test process

- Specific information

  - About the specific development project (excluding the system test phase)

  - About the specific software product

  - About the specific test project

Further explanations, for example concerning the scenarios, are contained in section 3.1 of this document.

## Questionnaire

Note: The questions concerning the maturity of the software development and test process are oriented on the processes as they are described in the latest version of the SPICE reference model (ISO/IEC TR 15504-2:1998). The numbering scheme used here stems from that document.

| General Information | |
|---|---|
| **About this assessment** | |
| • Date | |
| • (Alias) Name of the project to be assessed | |
| | |
| **About the assessor** | |
| • For how long have you been working on this project? | |
| • What is your profession? | |
| | |
| **About the software developing organization** | |
| • How much staff is employed? | |
| • How many developers are employed? | |
| • How many testers are employed? | |
| | |
| **About the software test organization (if different from the software developing organization)** | |
| • How much staff is employed? | |
| • How many developers are employed? | |
| • How many testers are employed? | |

**General Information**

- About the capability of the software development process (including software unit test)

| | Score 0 | Score 1 | Score 3 | Score 5 | Score (0-5) | Does not apply |
|---|---|---|---|---|---|---|
| | | | | | | |
| **ENG: Engineering process category** | | | | | | |
| **ENG.1: Development process** | | | | | | ☐ |
| ENG.1.1 How are requirements documented and tracked? | Requirement documents are unstructured and are used 'for guidance only'. No fine design of the requirements exists, and only high-level requirements are named. It is impossible to track their realization through development and test. | Requirement documents are structured to identify unique requirements. A granular design exists; most requirements are specified on a fine design level. Tracking the design from granular to fine and vice versa is not always possible. | More than one design level exists. How to track the requirements from one level to another and from development to test is defined by a standard process. | The quality of the requirements documents as well as the standard documentation process is monitored with a defined set of metrics. The impact of proposed changes to this process is assessed in terms of the expected improvement of these measures. | | ☐ |
| ENG.1.1 How is system architecture documented? | Architecture is described superficially and is a very abstract real world model. It is not possible to derive the system topology and the test topology. | The description of the architecture is sufficient for getting an overview.. It is not always clear if the architecture meets the requirements. | There is a defined procedure for documenting all details of the system architecture and for mapping the requirements to the main elements of the system. Information on how often such documents have to be corrected and reworked is not available. | If based on the collected information there are indications that the system architecture documentation fails to meet the quality objectives, appropriate changes are made to the process. | | ☐ |
| ENG.1.2 How are software requirements stated? | Some high-level requirements are defined. There are no checks for completeness. Requirements are often changed during development, or the developers interpretations differ. | Defined requirements are checked for correctness using reviews or other procedures. All development groups involved agree to the stated requirements. | Stated requirements are checked for completeness and correctness. Review of documents is always done according to a defined process. A tool for requirements documentation is used. | New techniques and tools for requirements analysis and documentation are evaluated on a regular basis and tested in projects if they seem to be promising. | | ☐ |

84

| | Score 0 | Score 1 | Score 3 | Score 5 | Score (0-5) | Does not apply |
|---|---|---|---|---|---|---|
| ENG.1.2 How do you communicate and coordinate the software requirements with the client? | The client receives the high-level requirements but does not participate in defining them. | The client gets the stated and reviewed requirements documents for approval. The client has the possibility to add or correct detail before SW design starts. | The client is fully involved in stating and reviewing the requirements to the same level of detail as the requirements author. | While communicating with the client the communication channel that best fits each respective project is used. If a new technique applied in a project turns out to produce good results, the potential for implementing it in other projects is evaluated. | | ☐ |
| ENG.1.2 How do you handle additional requirements? | Additional requirements are forwarded to the development team at once. The developers decide if they are implemented or not. | Whether additional requirements are in accordance with the currently stated requirements is checked. If this is the case, they are forwarded to the development team. | Each additional requirement is prioritized, and the resources necessary for its implementation are investigated. Depending on the results, the requirements are added to the current release or to a future release. Development plans are updated. | After implementing the highest priority requirements the resources actually used are compared to the prediction. The reasons for severe discrepancies are investigated, and based on gained insight the effort estimation process is refined. | | ☐ |
| ENG.1.3 How do you document software design? | Explicit software design does not exist. Only some online documentation is available. | Some high-level requirements are derived in software design. A complete design document including the fine design of the software does not exist. | The whole software design is documented at all stages. One objective of this documentation is that every design decision can be traced. In the design document, the internal and external interfaces of each software component are defined. | If the technique used for documenting software design shows weaknesses during its application (e.g., improper consistency between different views or levels), remedies are sought for. New design techniques are evaluated. | | ☐ |
| ENG.1.3 Can you trace requirements during the design phase? | Requirements cannot be traced during the design phase. | Only some (most important) requirements are implemented in the software design and can be traced. | The whole software design is derived from requirements. One objective of this documentation is to enable top-down and bottom-up tracing. | Inconsistencies between requirements and design that show up during implementation (or later) or problems with tracing requirements are used as an opportunity to refine the design technique used or the whole design process. | | ☐ |
| ENG.1.4 How do you break the system down into software units? | Most of the decisions on how to decompose the software are made in the implementation phase; some are made in the design phase. | In the design phase the designers decompose the software into units and design appropriate interfaces. They try to meet all stated requirements. The design is reviewed before implementation phase begins. | The whole software design is derived from requirements. Top-down and bottom-up tracing for each requirement is possible during all phases of the software development life cycle. | If a chosen software decomposition turns out to be unsuitable, or if problems occur in tracing requirements, investigation ensues to establish whether changes to the design process are necessary. | | ☐ |

| | Score 0 | Score 1 | Score 3 | Score 5 | Score (0-5) | Does not apply |
|---|---|---|---|---|---|---|
| ENG.1.5<br>How are software units integrated after module implementation? | Each developer tries to meet the requirements that he identifies as relevant for his modules. He has copies of the other modules in his module development environment. He sometimes copies his module to some of the other developers' environments on demand. After all developers have finished their work, all modules are copied together and submitted to system test. | Each developer works in an environment that simulates the other modules in a stable way, but not always resembling the newest functionality.<br><br>On a regular basis, modules are handed over to configuration management for distribution to all developers.<br><br>There is a separate integration phase that starts after all developers have finished unit implementations and that tries to verify all requirements. | Software units are handed to the integration environment stepwise, following the integration release plan. After successful integration of a software unit, it is distributed to all developers' development environments.<br><br>In each step, both the functionalities of the newly integrated systems and those of the already integrated parts are verified. | Faults found during system test are analyzed to determine whether they could have been detected earlier, when integrating the individual modules. If so, the integration and integration test procedures are improved in order to find faults as early as possible. | | ☐ |
| ENG.1.7<br>Which test phases, before the system test phase, can be identified? | Tests are only conducted as final verification of the whole software system, so there are no test activities before system test. | Some static tests are conducted during analysis and design phase e.g. reviews or inspections.<br><br>Unit tests are performed by developers.<br><br>Difficult parts of the system are tested during the integration phase. | Tests are conducted in all phases of the software development life cycle, beginning with reviews of requirements and design documents.<br><br>There are module tests, integration tests and system tests.<br><br>Every test phase has its own test goals and the test designers avoid replicating tests in different test phases. | Faults found during a specific test phase are analyzed to determine whether they could have been detected in earlier stages of the software development life cycle.<br><br>If so, the timing of the testing as well as the methods employed are improved. | | ☐ |
| ENG.2: System and software maintenance process | | | | | | ☐ |
| How do you maintain the system? | Some developers give support to the customer. They decide what is to be done with the system. There is no additional hotline. | All problems and requests are logged. There is a process to notify problems to the developers. The developers are responsible for deciding what is to be done. | An established process to manage user request and support questions exists. All requests are logged and classified. The requirements engineers and developers prioritize all issues. A source code control board decides what is to be done with the issues. | An established process to manage user request and support questions exists. The logged problems are not only used as a basis for deciding how to address them, but also for determining necessary improvements to the development process in order to avoid problems in the first place. | | ☐ |

EP 1 420 344 A2

86

| | Score 0 | Score 1 | Score 3 | Score 5 | Score (0-5) | Does not apply |
|---|---|---|---|---|---|---|
| How do you deal with failure reports from the customer and with change requests from the end user? | The developers decide whether a software behavior reported is indeed a failure and whether a change request is consistent. They further decide which of the faults are to be fixed and which of the change requests are to be implemented. Influenced documents will be changed when the next master release is developed, but in most cases there is no time to do this. | There is a process to notify failures to the developers and change requests to the requirements engineers. The developers and requirements engineers are responsible for deciding what is to be done. All changes are logged and traceable. | The requirements engineers and developers prioritize all issues. A source code control board decides what is to be done with them. | The requirements engineers and developers prioritize all issues. A source code control board decides what is to be done with them. Measurements taken are used in various ways: Failures help to determine necessary improvements in the development process in order to avoid faults in the first place. Change requests and data collected from similar projects or in earlier cycles help estimating the effort necessary for each change and comparing it to the expected benefit. | | ☐ |
| How are software modifications deployed? | Each developer logs his own modifications to the software in his own way. There is a shared set of all sources of the software. Each developer deploys his modifications to this set. | There is a process to notify issues to the requirements engineers. They are responsible for deciding what is to be done. All changes are logged and traceable. | The requirements engineers and developers prioritize all issues. A source code control board decides what is to be done with the issues. | The requirements engineers and developers prioritize all issues. A source code control board deciding what is to be done with the issues can rely on data collected during similar projects or earlier project cycles. | | ☐ |

| | Score 0 | Score 1 | Score 3 | Score 5 | Score (0-5) | Does not apply |
|---|---|---|---|---|---|---|
| Do you have to support several software versions in parallel? If so, how do you manage them? | If bug fixes done in one software version are necessary in other versions is not known. All software versions are managed separately. | If bug fixes in one version of the software are needed, the corresponding changes in other versions of the software can be implied by specialists, i.e. by people who know all versions of the software. | Configurations are managed entirely through the configuration management system. In case of a bug fix in one version, cross-fixes are conducted for the other versions. | Configurations are managed entirely through the configuration management system. In case of a bug fix in one version, cross-fixes are conducted for the other versions. If problems should occur during the build process, they are analyzed, and the process is refined. | | ☐ |
| **MAN: Management Process Category** | | | | | | |
| **MAN.2: Project management process** | | | | | | ☐ |
| Do you follow a methodology for planning projects? | No uniform strategy for planning projects exists. Each project manager has his own way. | There is a company-internal 'cookbook' for conducting software projects, but not every project phase is defined clearly and unmistakably. | The plan of each project is tailored from a standard software engineering process that was defined and documented. When creating this standard, the different existing practices were consistently integrated. The standard also gives guidance on how the tailoring is to be conducted. | The project plans are tailored from a company-wide software engineering process, for which a process improvement strategy exists. A training program assures that the team members are well versed with the current version of this standard process. | | ☐ |
| Do you have a description of the phases and activities? Is the sequence of phases defined? | No sequence of phases is defined. No deliveries in the course of the project are defined. | Most high-level phases are defined and the descriptions are accessible for everybody in the project teams. Not all the activities and their deliverables are clearly defined. | A standard software engineering process based on good engineering principles was defined and documented for the entire company. When creating this standard, the different existing practices were consistently integrated. For each project, a tailored version of this process is used. | The general phases and activities of a project are described in the company-wide software engineering process, from which the project plans are tailored. There is a process improvement strategy for this standard process. A training program assures that the team members are well versed with its current version. | | ☐ |

EP 1 420 344 A2

| | Score 0 | Score 1 | Score 3 | Score 5 | Score (0-5) | Does not apply |
|---|---|---|---|---|---|---|
| Do you have a project plan? | No exact project plan exists. The project tasks are "brain saved". | A project plan with the most important milestones and high level tasks exists. | A detailed project plan with all phases, tasks to be done and milestones to be reached exists. It is tailored from a standard software engineering process. | The project plans are tailored from a company-wide software engineering process, for which a process improvement strategy exists. | | ☐ |
| Do you identify the resources needed (like specific HW or tools) ahead of time? How do you calculate the resulting expenses? Do you use estimates? | No detailed resource planning is done. Normally only the end date is fixed by the customer. | The most important resources to conduct the projects are identified and planned. Use of resources is estimated and adjusted with the main project goals. For deriving the estimates, quantitative information from other projects or previous project cycles is often not available. | All needed resources for conducting projects are planned, and milestones are fixed/estimated. For deriving the estimates, quantitative information from other projects or previous project cycles is often not available. The project goals and deliverables are adjusted to the resources or vice versa. | Due to the analyses of the defined set of measures taken for all projects the influence of project characteristics on the resources needed is well understood. Based on this knowledge realistic milestones are estimated. | | ☐ |
| Are the resources planned actually available? Is the project plan feasible? | There is no explicit planning of resources. If there are plans and estimations they were done based on fully available resources. | The high-level project plans define some needed resources. These resources are checked against available resources. But there is often a lack of precision. If the needed resources are not available often the plans are not revised. | All project phases and tasks are checked for the needed resources; however, there often is a lack of precision. These resource plans are checked against the available resources. If there are less available resources the project plans are adapted to the available resources. All project activities are prioritized to be able to share urgently needed but less available resources with other projects and/or tasks. | Estimates of the needed resources for all project phases and tasks, are based on metrics collected in similar projects. If the available resources are not sufficient, they are allocated to the projects according to their priorities. Moreover, if limiting resources are detected, appropriate measures are taken for increasing their capacity. | | ☐ |
| Do you check the current status of the project against the plan? Are early corrective actions taken? | Normally, the lack of resources are noticed shortly before end of project. Available resources are shared competitively not cooperatively. | When a lack of resources occurs the project plans are adapted to the available resources if possible. Often there is only a new resource disposition and no adapted resource and/or project plan. | Regularly, reality is checked against the project plans. Sometimes, metrics are used, but they are not defined, and their collection is not integrated into the process. If problems are noticed, then the project is re-scheduled or re-planned. | A defined set of metrics is used to check e.g. employee workload or task fulfilling. Regularly, reality is checked against the project plans. Differences are corrected by re-scheduling or re-planning. | | ☐ |

| | Score 0 | Score 1 | Score 3 | Score 5 | Score (0-5) | Does not apply |
|---|---|---|---|---|---|---|
| How is the management informed about the project status? | Management normally gets information when asking for it. This information is a brief estimation by the actual project manager and is not based on metrics or objective numbers. | There are cyclic meetings to receive the actual status of projects. A cyclic status report is written. The reported information is a brief estimation of the actual project manager and is not based on metrics or objective numbers. | There are cyclic meetings to receive the actual status of projects. A cyclic status report is written. The reported information is partially based on metrics or objective numbers but the meeting members agree to these estimations. | The management is able to get all project information by calling a Management Information System (MIS). All written status reports are fully based on metrics and objective numbers that are collected during whole project lifetime. | | ☐ |
| How is the customer informed about the project status? | The customer normally gets information when asking for it. The customer gets no information about critical situations in the project. | There are two types of status reports: External and internal reports. External for the customer and internal for management and project members only. The external report contains estimates of the project status that the project manager deems important and is not based on metrics or objective numbers. When there are critical project situations the customer is informed if there is no way to solve them quickly. | The information to be contained in the external status report is defined. If possible, it is based on measures taken during the course of the project. In case of a critical situation the project manager informs the customer immediately. | A defined set of project metrics is collected in a MIS which provides a special customer view. The customer gets the information online or as a special export. In case of a critical situation the customer is informed automatically by the MIS. | | ☐ |
| MAN-3 Quality management process | | | | | | ☐ |
| How do you define quality goals and monitor their achievement? | No planned quality management exists. There are no metrics to monitor the effectiveness of the project work. Work on the project is not assisted by quality assurance people. | Some high level quality goals are defined, e.g. more reuse of existing code or faster development cycles. Some activities are planned to achieve this goals. There are people in charge of assuring the achievement of the goals, but there is hardly any metric to monitor the effectiveness of the project work. Some QS activities such as reviews or tests are conducted. | All phases of the software development life cycle are assisted by quality assurance people. All QS activities are planned within the normal project plans and all project members are familiar with this QS tasks. However, since no company-wide measurement program has been established, the monitoring activities often have to rely on qualitative information. | All phases of the software development life cycle are assisted by quality assurance people. There is a defined set of metrics to monitor and assure the achievement of goals or to notice risks at an early stage. All QS activities are planned within the normal project plans and all project members are familiar with this QS tasks. | | ☐ |

| | Score 0 | Score 1 | Score 3 | Score 5 | Score (0-5) | Does not apply |
|---|---|---|---|---|---|---|
| Do projects follow a standard development process which is improved in accordance to experience? | No defined and established development process exists. Each project manager follows his own concepts when planning a project. | A general understanding of the basic project phases and activities exists. With this respect, project managers can make use of previous experience and therefore achieve a higher quality project plan. However, there is no detailed standard process for the whole organization, and the isolated high-level concepts, that exist for individual sub-processes, may contradict. | A company-wide development process was established some time ago. It is tailored for each individual development project. Every project has its own quality assurance rules derived from the company-wide development process. However, there is no defined procedure for changing the standard process in accordance with experience gained in projects. | Development projects are tailored from the company-wide development process. Feedback during and after project work is welcome to assist the definition of better processes, and it is used to continuously improve the process. The success of an improvement initiative can easily be evaluated based on measured performance metrics. | | ☐ |
| *MAN 4: Risk management process* | | | | | | ☐ |
| Do you identify potential risks of a specific project? How do you keep track of them? | Abstract risks are not discussed. Actions are only taken when a problem has actually arisen. | Due to their previous experience with other projects, project managers are aware of potential risks. If their time allows, they try to keep track of the risks that they consider crucial. | The risks that may arise due to the specific characteristics of a project are identified in the project strategy. This list of risks is regularly updated during the project. Resources for monitoring these risks are allocated according to their priority (based on their potential impact and occurrence probability). | Monitoring the identified and prioritized risks is supported by a company-wide measurement program. If new risks are identified during one project they are added to the list of potential risks. Experience acquired with a risk is also used for generally describing an avoidance strategy. | | ☐ |
| When and how do you normally become aware of problems in a project? | Problems (e.g. budget overruns) are normally noticed shortly before a project ends. | After reaching a milestone the project plan is adjusted to the new situation. For some recognized risks compensation strategies have been defined. | During the whole software development life cycle project parameters and resources are monitored. For the most common risks a strategy to avoid or compensate them exists. Some metrics to measure project progress and project success have been established. | Monitoring risks is supported by a company-wide measurement program. Therefore problems are recognized early enough to counteract according to defined compensation strategies. | | ☐ |

EP 1 420 344 A2

| | Score 0 | Score 1 | Score 3 | Score 5 | Score (0-5) | Does not apply |
|---|---|---|---|---|---|---|
| | | | | | | |
| | | | | | | ☐ |
| Is there a document plan? Which documents are planned? | The project team has a general understanding of what documents should be generated. | A template of a document plan exists. It is adapted to the actual project. The document plan comprises documents for design, specification and implementation. | For each project a document plan is tailored from a document plan template. It covers the documents for design, specification, implementation, and test. It also references documents for QA. | Whether the document plan template from which the document plan of each project is derived still meets all needs is checked on a regular basis. It covers documents for design, specification, implementation, test and QA. | | ☐ |
| Which of the planned documents are actually being generated? | A subset of the planned documents is generated. They typically comprise the specification/design documents. | The majority of the planned documents are generated. They typically comprise the specification/design documents, as well as the implementation. | All planned documents are generated from design documents to test documents. Documents resulting from the QA process, e.g. review protocols, are also generated. | All planned documents (design, test and QA documents) are generated. If additional documents are necessary within a project whether they should be included in the general document plan is checked. | | ☐ |
| Are the documents subject to QA? Reviews, walkthroughs? | No QA activities are taken with respect to documents. | A knowledgeable colleague reads through the document and provides feedback (walkthrough). | The documents are subject to reviews. A number of reviewers with defined roles are involved. | The documents are subject to reviews. A number of reviewers with defined roles are involved. The review process itself is subject to continuous improvement. | | ☐ |
| Are the generated documents distributed to the respective target groups? | The generated documents are distributed by the author to the people he deems necessary. | The documents are distributed to the target groups when generated. | The original documents, as well as their updates, are distributed regularly and promptly to the respective target groups. | The original documents, as well as their updates, are distributed regularly and promptly to the respective target groups. If it ever turns out that not all members of the target groups were informed, then the process is refined to avoid such problems in future. | | ☐ |

| | Score 0 | Score 1 | Score 3 | Score 5 | Score (0-5) | Does not apply |
|---|---|---|---|---|---|---|
| | | | | | | |
| Is the existing documentation of the software sufficient? | There is a short online help or a brief user handbook. The documentation is not adapted for each and every release. | A sufficient user handbook or online help exists. There is no complete technical handbook. Not all phases of the software development life cycle are documented. | The requirements documents, the software design documents, the technical description and the user handbook or online help exist. In general documents are high quality and each requirement can be traced through the phases of the software development life cycle. | Customer reports are analyzed continuously for indications of insufficient or below quality documentation. If so, investigation ensues to discover what additional documents should be generated or what quality assurance procedures should be implemented. | | ☐ |
| Are the documents updated with respect to changes in the software? | Documents are generated once and then hardly ever touched again. | Documents are updated for major changes in the software (new releases). | Documents are continuously updated. They promptly reflect the changes made to the software. | Documents are continuously updated to promptly reflect the changes made to the software. If inconsistencies in the documents should be noticed quality assurance procedures are intensified. | | ☐ |
| | | | | | | |
| SUP.2 Configuration management process | | | | | | ☐ |
| How are software configurations managed? Does a configuration management (CM) system exist? | Programmers normally have several copies of the files denoting the different versions. No configuration management is used. | Configuration management is established. The software is checked in occasionally when a major release has been programmed. Whether the new version is commented or not depends on the attitude of the programmer. | Software is managed through a configuration management system. The programs are checked in regularly and rules for the documentation are followed. Different versions/releases of the software are labeled and can easily be retrieved. | Software is regularly checked in the configuration management system, and rules for the documentation are followed. Different versions/releases of the software are labeled and can easily be retrieved. New technical CM solutions are evaluated on a regular basis and implemented if they seem promising. | | ☐ |

| | Score 0 | Score 1 | Score 3 | Score 5 | Score (0-5) | Does not apply |
|---|---|---|---|---|---|---|
| What is subject to the CM system? Sources, documents, test logs, etc. | No configuration management system is used. | Only source code is subject to configuration management system. | Source code and relevant documents are managed through the configuration management system. Different software versions can easily be tracked to the respective versions of the documentation. | Every deliverable of the established configuration management process is managed through the configuration management system. Change control records are tracked and all potential new documents were integrated in the processes and the configuration management plan. | | ☐ |
| How are software configurations documented? Do you use a configuration plan? | All programmers are orally informed about the latest status of the source code. | Where the latest version of the source code can be found is documented. | All configurations are described by giving the details of the changes to the software, e.g. added functionality, modified interfaces, etc. All configurations are documented continuously and promptly. Author and dates of change are given. | The existing configuration management processes are continuously checked for necessary changes. The source of real and potential problems in the current process is analyzed. The impact of the changes are assessed and there effectiveness is validated. | | ☐ |
| How do you handle change requests before release to the customer? | Change requests are treated differently by the individual members of the programming team. | Changes requests are briefly discussed with the project manager. If enough time is available, the change request will be realized. | Change requests are analyzed carefully. A team of programmers, marketing people, project manager, decide on the realization based on the complexity of the change requests, the estimated costs for implementation, effect on the entire software, etc. However, for deriving the estimates no comprehensive collection of information from similar projects is available. | Change requests are analyzed carefully. When estimating the complexity of the necessary changes, the cost of implementation, etc. the programming team, marketing people and program manager can build their analyses on the metrics collected according to the organization-wide measurement program. | | ☐ |
| How are changes registered in the CM system? | Not at all. No configuration management system exists as such. | Changes to the software are described in the comment field. The depth and clarity of the description depends on the individual programmer. | Changes to the software can only be initiated by a change request or a bug fix. Thus, all changes are triggered and well documented. A template for documentation exists. | All changes are automatically tracked. The effectiveness of these processes and mechanisms are permanently analyzed. Suitable metrics exist to control the process parameters and to track the changes made to any deliverable. | | ☐ |

| | Score 0 | Score 1 | Score 3 | Score 5 | Score (0-5) | Does not apply |
|---|---|---|---|---|---|---|
| How does the build process operate? Are only valid configurations used? | The build process is executed without configuration management control and done by every developer separately. Code is recompiled based on the files in the project directory. | The build process is controlled by configuration management. It is initiated for the major releases. | A regular build is conducted to ensure not only reproducibility of releases, but of every development freeze. | There is an automated build process which identifies valid configurations. The build process provides valid and consistent builds. | | ☐ |
| Do you have regular reports on the status of configurations? Known bugs, features, etc. | No regular reports on the software configurations exist at all. The programmers know what they have implemented and they have a feeling for the quality of the software version. | The main features of different software configurations can be derived manually from the configuration management system. Likewise, it is possible to derive a bug report for the specific software configuration. | Regular reports on the software configurations exist. The report includes a feature list, the found, fixed and open bugs, and a list of change requests. | The status of all items and modification requests is recorded and reported. Reports provide measures to analyze trends e.g. about quality of configurations. | | ☐ |
| Do you have separate environments for development and test? | No separate environments for development and test exist. | Separate environments for different project phases exist. While the first environment includes tools, libraries, etc. necessary for development, these will not be found in the test environment. Here the environment reflects the production environment, but additional testing tools may be found. The software is released from one environment to the other manually. | Strictly separated environments exist for the different phases of the software development. Given the configuration management system the software is released into the appropriate environment automatically. | A plan to release a software configuration from development to test environment is established. This plan is permanently checked for changes to optimize the processes behind. An implementation strategy for the approved changes is defined. After implementation the effectiveness of the process change is validated. | | ☐ |

| | Score 0 | Score 1 | Score 3 | Score 5 | Score (0-5) | Does not apply |
|---|---|---|---|---|---|---|
| | | | | | | ☐ |
| **SUP.3 - Quality assurance (QA) process** | | | | | | ☐ |
| Are the results of reviews passed on to management? | No. | In case of reviews the protocols are filed along with the other project documents. Management is not actively informed. | Information on the review process (reviews conducted, results, etc.) is collected by the QA manager who then reports to upper management. | In addition to being informed by the QA managers, the management can use a tool (e.g. a MIS) for automatically analyzing the QA results, e.g. with respect to trends, or patterns. | | ☐ |
| Which activities in your development process assure and support quality? | QA activities are not explicitly considered in the development process. | The QA activities concentrate on the actual "doing", e.g. reviews. No training activities are considered. | QA activities range from document and code reviews to QA training for the project members. Templates for documents are available. Process instructions are available. | QA activities (document review, code review, QA training) and tools (e.g. templates) are themselves subject to reviews and continuous improvement. The same holds true for the description of the standard software development process. | | ☐ |
| What types of QA activities do the programmers conduct? | None. | Programmers occasionally conduct peer code reviews. Every now and then they are involved in the review process of specification documents. | Peer reviews among programmers in one project, as well as between programmers in different projects are planned and conducted. Programmers are mandatory participants in document reviews, e.g. of test specifications. | Reviews and training are conducted, and development standards and instructions are derived. Besides, QA activities also contribute to the continuous improvement of programming activities and techniques as well as the standard software engineering process. | | ☐ |
| What types of QA activities do specific employees, e.g. QA manager, conduct? | None. | The QA manager organizes and conducts code and document reviews on a regular basis. For new employees the QA manager gives an introduction to QA. | QA employees conduct reviews, regular training, prepare QA process instructions and develop the document templates. Additionally, they derive standards for coding and documentation. | Besides conducting reviews and training and deriving standards and instructions, they also contribute in the continuous improvement of QA activities as well as the standard software engineering process. | | ☐ |
| How are these employees organized? | Not at all. | Specific QA employees exist. They are normal project members and thus organized following the overall project structure. | Specific QA employees are organized in the QA department. They are not within the responsibility of project managers. Thus, a certain degree of objectiveness is guaranteed. They cooperate with projects and report to upper management. | Through their organization the objectiveness of the QA employees is guaranteed. If it turns out that a certain structure does not meet this goal, then the structure is changed. | | ☐ |

| | Score 0 | Score 1 | Score 3 | Score 5 | Score (0-5) | Does not apply |
|---|---|---|---|---|---|---|
| Are the costs generated by a software crash in the production system or at a client understood? | There is no clear understanding of the costs generated by a software crash. The potential effects seem to vary considerably from project to project, and the determining factors are unknown. | Based on the experience gained in different projects at least some of the influences determining the costs of a software crash of a specific application are understood. | The determining factors are well enough understood to dare to give a rough estimate of the (average) costs of the crash of a specific application. There is a agreement with the client (or in-house) on how damages due to software errors are compensated. | The organization-wide measurement program further helps in deriving a realistic estimate of the (average) costs of the crash of a specific application. Furthermore, metrics like the estimated number of faults remaining in the software on release, or the software reliability are available. Based on this information, clear agreements on how to compensate damages are derived. | | ☐ |
| **SUP.4/SUP.5: Verification process/Validation process** | | | | | | ☐ |
| Do you have standards for verification and validation activities (e.g., reviews or walkthroughs)? | Verification and validation activities are conducted based on the insight of individual participants. | A general procedure is defined, e.g. documents have to be available one week before the review. | The procedure is defined in detail, e.g. assigning different roles, and there is regular training. | The procedure is defined in detail, e.g. assigning different roles, and there is training on a regular basis. Improvement opportunities for the verification and validation activities are identified, and changes are deployed across the organization. | | ☐ |
| How do you make sure that identified problems are resolved? | Resolving identified problems depends on the project manager and/or individual team members. There are no rules for tracking and solving problems. Verifying the solution of a specific problem is hard even if possible. | The manager of a project sets the rules and procedures to be followed for documenting identified problems and monitoring their status. Each problem is individually checked and assigned by the project manager. Problem verification can be done individually for each problem. | The process of resolving identified problems is defined. Each team member is aware of his responsibilities in this process. The process automatically informs each team member about the problems and their status. Problem solutions are assigned to specific software releases. On release of a new version, all problems that were assigned to this release are identified and can be verified. | Each team member is aware of his responsibilities in the defined problem resolution process, and he is automatically informed about the problems and their status. On release of a new version, all problems that were assigned to this release are identified and can be verified. Moreover, metrics like the average time needed for problem resolution, the percentage of failed resolution attempts, etc. measure the process quality and are used to suggest improvement activities. | | ☐ |

| | Score 0 | Score 1 | Score 3 | Score 5 | Score (0-5) | Does not apply |
|---|---|---|---|---|---|---|
| | | | | | | ☐ |
| SUP.6: Joint review process | | | | | | ☐ |
| Are reviews conducted with the client? | After the software has been ordered, the project starts without reviews of design, specification or implementation. The milestones of the project pass without further interaction with the client. | During the design and specification phase the input of the client is asked for. After the specification phase the client is informed when the major milestones of the project have been met. | The client is involved throughout the entire software development cycle. The design, as well as the implementation is reviewed with the client. Code reviews with specialists authorized by the client are conducted. The client is involved in prioritizing the defects and change requests. The client is well aware of the overall project situation. He knows about the time schedule and the delivered software. | The client is involved throughout the entire software development cycle (e.g. design reviews, code reviews, defect and change request prioritization), and he is fully informed about the project situation. The most effective communication and document exchange channel is used in each project, and new techniques and solutions are deployed throughout the entire organization. | | |
| | | | | | | ☐ |
| SUP.8: Problem resolution process | | | | | | ☐ |
| How do you record problems or errors, and what is this information used for? | Problems are communicated to/among programmers verbally. Once the problem has been reported, it is not further tracked. Occasionally minor problems "get lost". | Problems are entered into a document, e.g. Excel sheet, which is stored in the project directory. All project members need to check this document regularly. | Problems are promptly reported into a defect tracking system. A model for error status exists and is implemented in the defect tracking system. The programmers/testers involved are immediately informed about any problem. | Problems are promptly reported into a defect tracking system, and the programmers/testers involved are immediately informed. Error status is tracked, and failure data is analyzed with statistical methods in order to estimate the number of faults remaining in the software, software reliability, testing efficiency, and the like. | | ☐ |
| Are problems/ failures being prioritized? | Problems are not prioritized. They are worked on in the order of arrival, or in order of ease of correction. | The programmer prioritizes the problems. | Programmers, testers and projects manager discuss the problems and prioritize them together according to a defined procedure. | Programmers, testers and projects manager discuss the problems and prioritize them together. The defined procedure followed and the criteria used for prioritization are subject to regular reviews and continuous improvement. | | ☐ |
| Are solutions being documented? | The documentation of the solution is the program code. | Program code is well documented. The outline of the solution is described briefly in the feature list of the new software version. | The general idea of the solution is sketched in the bug entry in the defect tracking system. Additionally the solution code is well documented, and an entry in the configuration management system outlines the problem and its solution. | In addition to documenting the solution in the defect tracking system, the software code and the configuration management system, solutions that seem generally applicable are identified and deployed across the organization via a knowledge management system. | | ☐ |

EP 1 420 344 A2

| | Score 0 | Score 1 | Score 3 | Score 5 | Score (0-5) | Does not apply |
|---|---|---|---|---|---|---|
| After problems have been identified, are they resolved in the software and documented in the CM system? | Problems are resolved by correcting the respective code. They are not documented in the CM system. Occasionally problems do "get lost" due to lack of defect tracking. | Problems are resolved in the order of priority set by the programmer. A brief comment is added to the CM system. | Problems are resolved in the order of their priority. A strong interdependency between defect tracking and configuration management systems supports maintaining consistent documentation. | Problems are resolved in the order of their priority. If inconsistencies in the documentation should ever occur, the defined process involving the combined use of defect tracking and configuration management systems is reviewed and refined. | | ☐ |
| CUS.1 : Acquisition process | | | | | | ☐ |
| CUS.1.2 How are suppliers selected? Are there any quality specifications? | The purchasing department chooses the supplier based on their own criteria that are especially related to financial aspects. | The project team evaluates the potential suppliers for a project and determines a ranking. The purchasing department chooses the supplier from the ranking. | The project team evaluates potential suppliers for a project and determines a rating according to a defined procedure. Only suppliers who achieve a certain score have a chance of being chosen. The chosen supplier is fully integrated in the parts of the project which have interfaces to the supplied modules. | The aim of the evaluation procedure for the potential suppliers is to judge the quality of the development and quality assurance processes in the supplier's organization. Meaningful metrics are employed. The communication channel and the tool best fit for integrating the supplier in the software development process are determined and employed. | | ☐ |
| CUS.1.4 How do you evaluate the software delivered by the supplier? | There are no acceptance tests. Software delivered is roughly checked against its requirements by those developers in the team who will have to deal with it, but most of the problems arise during their own development effort. | There is an acceptance test that ensures that all requirements stated for the supplied software are matched. Often this acceptance test fails and supplied software has to be fixed and re-delivered by the supplier. | The supplier performs profound tests of his software to deliver good quality. Test results and a list of open problems is part of the delivery. The supplier's testing process is well-defined. | The supplier employs a well-defined testing process that is subject to continuous improvement. The set of metrics collected during testing is an objective basis for evaluation of the quality of the software delivered. | | ☐ |

EP 1 420 344 A2

| | Score 0 | Score 1 | Score 3 | Score 5 | Score (0-5) | Does not apply |
|---|---|---|---|---|---|---|
| **CUS.2: Supply process** | | | | | | ☐ |
| Does a clear understanding and contract between the organization and the customer exist? | The contract is based on the vague ideas of the client. It contains no details, milestones, etc. | The contract contains the detailed outline of the planned work. At the milestones of the project, the work plan is discussed and reviewed. | A detailed and precise contract states the work to be done by the organization. Communication channels are defined in case problems should arise and need to be solved. The continuous interaction with the customer supports the development of a software product that meets the customer's needs. | A detailed and precise contract states the work to be done by the organization. The communication channels best fit for guaranteeing a continuous interaction with the customer are chosen. If new channels (e.g. tools) turn out to enhance the ease of communication and coordination they are deployed across the organization. | | ☐ |
| **CUS.3: Requirements elicitation process** | | | | | | ☐ |
| How are the requirements derived from the client? | Vague requirements are given during an interview. No further reflection or analysis of the requirements is conducted. | The requirements are accepted as presented by the client. They are briefly reviewed and then implemented. | The client has a precise understanding of his wishes and requirements. They are described by the client a document. Its content is then discussed, analyzed, e.g. for consistency, and reviewed with the client. The requirements are continually tracked throughout the development process. | The client has a precise and consistent understanding of the functional and non-functional requirements of the software, and he is able to set quantitative targets (e.g., of the required reliability, or the response times). The requirements are continually tracked throughout the development process. | | ☐ |
| **ORG: Organization Process Category** | | | | | | |
| **ORG.2: Improvement process** | | | | | | ☐ |
| ORG.2.1 Are organizational processes defined? | No. Processes are ad hoc; the staff in charge of a specific task rely on their experience and intuition to decide what activities are to be carried out. | From previous experience (e.g., past projects) a general understanding of the activities belonging to a certain process exists. Planning the time needed for carrying out a process is based on this simple plan. | All important organizational processes are documented. The definition of each project consists of its activities and work products as well as the expected performance characteristics. When working on the process definitions, previously existing inconsistencies between different processes are resolved. The standard processes are tailored in accordance with the needs of each project. | Detailed, consistent and optimized definitions of all organizational processes exist. Quantitative metrics to be collected are established. These facilitate the continuous monitoring of the process performance and serve as a basis for identifying where further improvement is necessary. | | ☐ |

| | Score 0 | Score 1 | Score 3 | Score 5 | Score (0-5) | Does not apply |
|---|---|---|---|---|---|---|
| | | | | | | |
| ORG.2.3 How do you ensure that organizational processes are continuously improved? | Since the processes are ad hoc, their quality depends on the skill of the respective staff in charge. | Rough estimates of the process performance (e.g., time and money needed) can be compared to the real outcomes to determine success or failure. However, in case of failure the reasons and the actions to take can hardly be determined. | If it should turn out that a process definition has to be refined it is reworked. However, due to the lack of an organization-wide measurement program there is no quantitative basis for choosing between different suggested changes. | The organization-wide measurement program provides continuous feedback on the performance of the different processes. Thus, problems are noticed quickly. Moreover, through continuous evaluation of new techniques and tools improvement opportunities are identified. The results of adapted versions of a process are determined based on metrics, and successful changes are deployed throughout the organization. | | ☐ |
| | | | | | | |
| **ORG.3: Human resource management process** | | | | | | ☐ |
| How do you assemble development teams? Does the make-up of a team follow certain criteria or are the available resources the determining factor? | Only seldom there are fixed development teams. Most members often switch between teams. The teams are assembled from the currently available resources. | The project tasks should be assigned to people who have best skills to do the work. However, in fact the availability of the employees determines whether they join a certain team. If their skill level is not sufficient the team members must train themselves. | First the skills needed to fulfill a project are determined, and then the people who best fit these criteria are selected for the team. If the team members do not have certain required skills then they are specially trained, or people from outside are hired. Total outsourcing of tasks is possible. During the whole project team members have the possibility to train needed skills. | Project teams are assembled strictly according to the required skills. In general, employees with the required skills are available, due to an organization-wide training program which pre-actively teaches potentially useful skills to a number of employees. If nevertheless certain missing skills should be detected in the course of a project whether they should be included in the training program is evaluated. Total outsourcing of tasks is also possible. | | ☐ |

| | Score 0 | Score 1 | Score 3 | Score 5 | Score (0-5) | Does not apply |
|---|---|---|---|---|---|---|
| | | | | | | ☐ |
| **ORG.4 : Infrastructure process** | | | | | | ☐ |
| How do you make sure that the available infrastructure meets the needs of the processes that make use of it? | The adaptation of tools, equipment and environment according to changes in requirements follows the identification of these needs. Mostly it is done by the person who has the need. | There is staff responsible for the infrastructure. Needs can be communicated to them, and they are resolved on a on-demand-basis. New infrastructure components are delivered to the receiver according to the schedule of the infrastructure staff. | There are defined processes used to predict future infrastructure-related needs. Processes are analyzed in advance, and standard procedure is used to fulfill the needs according to the schedule of the receiver. | The prediction of future infrastructure-related needs can be based on the defined set of metrics collected in the organization-wide measurement program. How to analyze measures and to provide for the additional resources is defined in a continuously improving process. | | ☐ |
| **ORG.5: Measurement process** | | | | | | ☐ |
| Do you collect and analyze data related to the products developed and the processes implemented? | No. Taking measurements is considered an overhead that cannot be afforded. | Individual project managers may take some measurements within their projects. However, there is no defined set of metrics to be collected within the organizational unit. In case of tense schedules etc. no measurements are taken. | A set of useful metrics and activities to be followed when measuring have been defined. However, measurements are not stored in a way that enables the project managers to compare different projects and draw sound conclusions from past experience. | A defined set of metrics is collected in a organization-wide measurement program and used in order to continuously track the performance of the projects and the implemented processes. The set of metrics itself is regularly reviewed and adapted if necessary. | | ☐ |
| **ORG.6: Reuse process** | | | | | | ☐ |
| To which extent are software components reused? | Sometimes a programmer remembers that a solution to a problem similar to the one to be solved in the current project was developed in another project and then tries to reuse those software components. | The established configuration management system and repositories of existing solutions support their reuse. | During the design of new components their potential reuse is already taken into account. The activities to be carried out when reusing components have been defined. A reuse strategy gives guidance as to when reusing old solutions is reasonable. However, there is a risk of double work since developers often are not aware of what solutions already exist. | During the design of new components their potential reuse is already taken into account. The activities to be carried out when reusing components have been defined, and they are improved when necessary. A reuse strategy gives guidance as to when reusing old solutions is reasonable. A clearly structured knowledge base helps the developers to find existing solutions to their problems. | | ☐ |

**General Information**

**- About the capability of the system test process**

| | Score 0 | Score 1 | Score 3 | Score 5 | Score (0-5) | Does not apply |
|---|---|---|---|---|---|---|
| | | | | | | |
| **ENG: Engineering process category** | | | | | | |
| **ENG.1: Development process** | | | | | | ☐ |
| ENG.1.6 How do you conduct tests? Is there a predefined test concept? | Tests are not based on requirements or design documents; there are no test inventories or means of measuring coverage against requirements or specifications. | Test inventories are used to define the scope of system and acceptance tests and cross-reference requirements; formal test techniques are sometimes used to design black-box test cases. | Test inventories are used for all testing and are reviewed against requirements and specifications. Formal test techniques are used for test case design. | Test inventories are used for all testing and are reviewed against requirements and specifications. Formal test techniques are used for test case design. Based on statistical analysis of the test data collected (e.g., failure data, code coverage data), changes to the test process are evaluated. | | ☐ |
| ENG.1.6 How do you develop tests? Do you write test specifications? | Testers never know whether enough testing has been performed because they rely on their intuition. Testers are uncomfortable as they may be blamed for bugs in production. | Test documentation is produced in large volume; the simplest test design techniques are sometimes used to produce test specifications. Much effort is spent testing more complex functionality but it is never tested 'thoroughly'. | Testers focus their attention on the key risks and select test strategies specific to the risk and type of software under test. However, there is no data basis for evaluating how successful the testers are. All tests are documented in test specifications. | Testers focus their attention on the key risks and select test strategies specific to the risk and type of software under test. Testers produce objective and quantifiable objectives (e.g., in terms of test coverage or reliability) and tests consistently meet them. All tests are documented in test specifications. | | ☐ |
| ENG.1.6 Do you log and archive the tests? | The performed tests are 'ad hoc'- tests. Nothing is logged or archived. When a bug is found the tester tries to document this test. | The tests are documented in the test specification. A state model for test execution exists. The results and states are logged in this specification during test run. All additional tests done beside the test specification are neither documented nor reproducible. | A state model for test execution and prioritization of test cases exist. All test cycles are logged with their results and the states of the test cases. All test cases are reproducible. | A state model for test execution and prioritization of test cases exist. In addition to the results and the states of the test cases, additional information needed for evaluations (like test execution times and the times of failure occurrences) is collected. Statistical analysis of the data is conducted. All test cases are reproducible. | | ☐ |

104

| | Score 0 | Score 1 | Score 3 | Score 5 | Score (0-5) | Does not apply |
|---|---|---|---|---|---|---|
| ENG.1.6 How do you conduct regression tests? | The testing of a new release depends on the testers' experience. The extent of tests is only at the testers discretion. Not every bug correction is verified by tests. Tests are conducted manually, 'ad hoc' and intuitively. They are not reproducible in most parts. | The test plan makes use of information on which parts of the software have changed. These parts get a higher priority for test execution. Nearly every bug correction is verified by tests. Most of the tests are reproducible. | Before the execution of tests the parts of the software influenced by the development are identified. The necessary range of new and existing tests is derived. All tests are exactly reproducible. Newly found failures that are not covered by existing test cases are documented and covered by new test cases in later cycles. | The range of new and existing tests is based on information on the operational usage of the different components, their estimated error-proneness and the problems the software showed during the previous test cycles. The quality of the software is statistically tracked over the different test cycles. | | ☐ |
| **ORG: Organization Process Category** | | | | | | |
| **ORG.3: Human resource management process** | | | | | | ☐ |
| How do you assemble test teams? Does team membership follow certain criteria or are available resources the determining factor? | There are no separate test teams. Developers switch to testing activities after having finished development. Often they are supported by end-users of the software. There is no training on testing skills. | There is a separate test team for each project, mostly recruited from former development resources. After the end of the project, the team is disassembled. The team members must acquire test knowledge by themselves shortly before or even while needing them. | There is a permanent test team that is not disassembled at the end of a development project. If the team members should not have certain required skills then they are specially trained, or people from outside are hired. Total outsourcing of tasks is possible. During the whole project team members have the possibility to train in needed skills. | There is a permanent test team that is not disassembled at the end of a development project. If the team members should not possess the specific skills required for testing a certain piece of software, then they are specially trained. Furthermore, Whether teaching these skills should be included in the general training program for testers is evaluated. Total outsourcing of tasks is also possible. | | ☐ |

| Specific Information | |
|---|---|
| **- About the specific development project (excluding the system test phase)** | |
| | |
| • What was the scheduled effort of software development excluding system test (in person months)? | |
| • What was the overall effort actually spent on software development excluding system test (in person months)? | |
| How was this overall effort distributed over the following phases of software development? | |
| • Effort spent on requirements analysis (in person months) | |
| • Effort spent on software design (in person months) | |
| • Effort spent on development of methods and algorithms (in person months) | |
| • Effort spent on programming (in person months) | |
| • What was the scheduled runtime of software development excluding system test (in months)? | |
| • What was the actual runtime of software development excluding system test (in months)? | |
| How was this actual runtime distributed over the following phases of software development? | |
| • Runtime of the requirements analysis phase (in months) | |
| • Runtime of the software design phase (in months) | |
| • Runtime of the development of methods and algorithms phase (in months) | |
| • Runtime of the programming phase (in months) | |
| • What is the average managing experience of the project manager(s) (in years of experience in managing software development projects)? | |
| • What is the maximum size of the development team (in persons)? | |
| • What is the general average skill level of the programming team (in years)? (Add up the years of professional programming experience for all the programmers in the development team and then divide the result by the number of programmers.) | |

| • What is the average number of projects of this kind (languages used, architecture employed, etc.) that the programming team members have worked on before?        (Add up the number of previous similar projects for all the programmers in the development team and then divide the result by the number of programmers.) | |
| --- | --- |

| • How many of the people working on this project are new in the project team? | |
| --- | --- |

| • What development technology is used? | | | | |
| --- | --- | --- | --- | --- |
| Structured | Object Oriented | 4 GL | Functional | Other *(please specify)*: _____ |

| • What development model is used? | | | | |
| --- | --- | --- | --- | --- |
| Waterfall model | V model | Cyclic model | Extreme Programming | Other *(please specify)*: _____ |

| • What development methodology is used? | | | | |
| --- | --- | --- | --- | --- |
| Information Engineering | Evolutionary | Prototyping | Incremental | Rapid Application Development |
| Other *(please specify)*: _____ | | | | |

| • What percentage of the software requirements is changed after the specification phase? | _____ % |
| --- | --- |

| • Which criterion determines when the software product is released to the system test phase? | | | | |
| --- | --- | --- | --- | --- |
| Fixed date | Fixed budget | All requirements implemented | Well-defined unit test has been passed | Other *(please specify)*: _____ |

## Specific Information
### - About the specific software product

| • What type of software is the software under test? | | | | |
| --- | --- | --- | --- | --- |
| High security/high risk software | Commercial Business Processing | Special purpose (technical or engineering) | Operating system/driver | OTC (over the counter) software |

| • What is the target topology of the software? | | | | | | |
|---|---|---|---|---|---|---|
| Mainframe | Midrange | Multi-tier software | Web application | Component-based distributed | Stand-alone workstation | Embedded software |
| Other *(please specify)*: | | | | | | |

• What is the size of the software product? (Please give all numbers, if available.)

| Kilo lines of code (KLOC): | | Non-commentary kilo lines of code (KLOC): | |
|---|---|---|---|
| Size of the compiled code (megabytes): | | Number of compiled modules: | |
| Number of function points: | | | |

• Which programming language(s) does the code consist of? To which percentages?

| C: _____ % | C++: _____ % | Java: _____ % | Fortran: _____ % | Basic: _____ % |
|---|---|---|---|---|
| Cobol: _____ % | Assembler: _____ % | Other *(please specify)*: _____ : _____ % | | |

| • Is this the first release/test cycle of the application? | | |
|---|---|---|
| If no: | • How much of the current software has been *added* since its last release/test cycle? | |
| | Percentage of lines of code added: _____ % Percentage of added requirements _____ % | |
| | • How much of the last software release has been *changed* in this cycle? | |
| | Percentage of previously existing lines of code changed: _____ % Percentage of previously existing requirements changed: _____ % | |

| • What percentage of the code of the application is reused code from other applications, or libraries? | _____ % |
|---|---|
| • Will faults detected during the system test phase be fixed during the system test phase, and will builds derived from the corrected code be given to the testers? | ☐ yes ☐ no |
| If yes: • Will the developers test bug fixes before releasing the corrected software to system test? | ☐ yes ☐ no |

107

| Specific Information | | | |
|---|---|---|---|
| - About the specific test project | | | |
| | | | |
| • What is the planned effort in this test cycle (in person months)? | | | |
| • What is the actual effort in this test cycle (in person months)? | | | |
| • What is the scheduled runtime of the test cycle (in months)? | | | |
| • What is the actual runtime of the test cycle (in months)? | | | |
| • What is the managing experience of the test team manager (in years of experience in managing test projects)? | | | |
| • What is the maximum size of the test team (in persons)? | | | |
| • What is the general average skill levels of the test team (in years)? (Add up the years of professional testing experience for all the testers in the test team and then divide the result by the number of testers.) | | | |
| • What is the average number of projects of this kind (type of application to be tested, etc.) that the test team members have worked on before? (Add up the number of previous similar projects for all the testers in the test team and then divide the result by the number of testers.) | | | |
| • How many of the testers in this project have a special education as test engineers? | | | |
| • How many of the tester in this project have participated at the development of this piece of software? | | | |
| • How many of the testers working on this project are new in the test team? | | | |
| • How many software faults were detected *and* corrected during the test preparation phase (development of test specification, etc.)? | | | |
| • What was the main strategy followed in this project when specifying the test cases and the order in which they were executed? | | | |
| Mimicking the operational profile | Modularity of the test cases | Ease of recovery | Avoiding redundant code executions |
| • What percentage of the test cases are executed by a test automation tool? | | | |
| • How many of the failure messages generated during the test execution phase were rejected due to errors in the test specification? | | | |

108

**References**

[1] J. H. Aldrich and F. D. Nelson. *Linear Probability, Logit, and Probit Models*. SAGE Publications, Newbury Park, 1984.

[2] E. David. Application 3: Baseline experiment. Deliverable C.3 of project PETS (Prediction of software Error rates based on Test and Software maturity results), IST-1999-55017, 2002.

[3] A. P. Dempster, N. M. Laird, and D. B. Rubin. Maximum likelihood from incomplete data via the *EM* algorithm. *Journal of the Royal Statistical Society, Ser. B,* 39:1-38, 1977.

[4] T. Dohi, N. Wakana, S. Osaki, and K. S. Trivedi. Analysis of hypergeometric distribution software reliability model. In *Proc. Twelfth International Symposium on Software Reliability Engineering*, pages 166-175, 2001.

[5] K. Dussa-Zieger. Application 2: Baseline experiments. Deliverable C.2 of project PETS (Prediction of software Error rates based on Test and Software maturity results), IST-1999-55017, 2002.

[6] K. El Emam and A. Birk. Validating the ISO/IEC 15504 measure of software requirements analysis process capability. *IEEE Trans. Software Engineering,* 26:541-566, 2000.

[7] W. Farr. Chapter 3: Software reliability modeling survey. In M. Lyu, editor, *Handbook of Software Reliability Engineering,* pages 71-117. IEEE Computer Society Press, Los Alamitos, 1996.

[8] W. Feller. *An Introduction to Probability Theory and Its Applications.* Wiley series in probability and mathematical statistics. Wiley, New York, 3rd edition, 1977.

[9] M. Finkelstein, H. G. Tucker, and J. A. Veeh. Confindence intervals for the number of unseen types. *Statistics and Probability Letters,* 37:423-430, 1998.

[10] S. S. Gokhale, T. Philip, P. Marinos, and K. S. Trivedi. Unification of finite failure non-homogeneous Poisson process models through test coverage. In *Proc. Seventh International Symposium on Software Reliability Engineering,* pages 299-307, 1996.

[11] W. H. Greene. *Econometric Analysis.* Prentice-Hall, Upper Saddle River, 3rd edition, 1997.

[12] M. Grottke. Modelling structural coverage and the number of failure occurrences with non-homogeneous Markov chains. Discussion Paper 41/2001, Chairs of Statistics, University of Erlangen-Nuremberg, 2001.

[13] M. Grottke. Software process maturity model study. Deliverable A.3 of project PETS (Prediction of software Error rates based on Test and Software maturity results), IST-1999-55017, 2001.

[14] M. Grottke. Software reliability model study. Deliverable A.2 of project PETS (Prediction of software Error rates based on Test and Software maturity results), IST-1999-55017, 2001.

[15] M. Grottke. A vector Markov model for structural coverage growth and the number of failure occurrences. In *Proc. Thirteenth International Symposium on Software Reliability Engineering,* 2002. to appear.

[16] M. Grottke and K. Dussa-Zieger. Prediction of software failures based on systematic testing. In *Electronic Proc. Ninth European Conference on Software Testing Analysis and Review*, 2001.

[17] M. Grottke and K. Dussa-Zieger. Systematic vs. operational testing: The necessity for different failure models. In *Proc. Fifth Conference on Quality Engineering in Software Technology,* pages 59-68, 2001.

[18] M. Grottke and D. Söhnlein. Justified model selection. Deliverable A.4 of project PETS (Prediction of software Error rates based on Test and Software maturity results), IST-1999-55017, 2001.

[19] J. Habermann. Application 4: Baseline experiment. Deliverable C.4 of project PETS (Prediction of software Error rates based on Test and Software maturity results), IST-1999-55017, 2002.

[20] D. B. Hall. Zero-inflated poisson and binomial regression with random effects: A case study. *Biometrics,* 56: 1030-1039, 2000.

[21] P. Hodgson. Application 1: Baseline experiment. Deliverable C.1 of project PETS (Prediction of software Error rates based on Test and Software maturity results), IST-1999-55017, 2002.

[22] R. A. Howard. *Dynamic Probabilistic Systems - Volume I: Markov Models.* Series in decision and control. Wiley, New York, 1971.

[23] International Organization for Standardization, International Electrotechnical Commission. Information technology - software process assessment - part 2: A reference model for processes and process capability. Technical Report ISO/IEC TR 15504-2, 1998.

[24] R. Jacoby and Y. Tohma. Parameter value computation by least square method and evaluation of software availability and reliability at service-operation by the hyper-geometric distribution software reliability growth model (HGDM). In *Proc. Thirteenth International Conference on Software Engineering,* pages 226-237, 1991.

[25] N. L. Johnson and S. Kotz. *Urn Models and Their Application.* Wiley series in probability and mathematical statistics. Wiley, New York, 1977.

[26] C. Kaner, J. Falk, and H. Q. Nguyen. *Testing Computer Software.* Van Nostrand Reinhold, New York, 2nd edition, 1993.

[27] E. Kit. *Software Testing in the Real World - Improving the Process.* ACM Press and Addison-Wesley, Reading, 1995.

[28] I. Klein. Datenanalyse mittels Regressionsmodellen. Lecture notes, Chair of Statistics and Econometrics, University of Erlangen-Nuremberg, 1999.

[29] P. Lakey and A. M. Neufelder. *System and Software Reliability Assurance Guidebook.* Rome Laboratory, Rome, 1995. URL = http://www.softrel.com/notebook.zip (visited 2002-09-04).

[30] D. Lambert. Zero-inflated poisson regression, with an application to defects in manufacturing. *Technometrics*, 34:1-14, 1992.

[31] M. R. Lyu. Chapter 1: Introduction. In M. R. Lyu, editor, *Handbook of Software Reliability Engineering*, pages 3-25. McGraw-Hill, New York, 1996.

[32] Y. K. Malaiya and J. Denton. What do the software reliability growth model parameters represent? Technical Report CS-97-115, Computer Science Department, Colorado State University, Fort Collins, 1997.
URL = http://www.cs.colostate.edu/~ftppub/TechReports/1997/tr97-115.pdf (visited 2001-05-31).

[33] N. Mantel and B. S. Pasternack. A class of occupancy problems. *American Statistician,* 22:23-24; 1968.

[34] P. Newbold. *Statistics for Business and Economics.* Prentice Hall, Englewood Cliffs, 3rd edition, 1991.

[35] H. Pham. *Software Reliability.* Springer, Singapore, 2000.

[36] P. Piwowarski, M. Ohba, and J. Caruso. Coverage measurement experience during function test. In *Proc. Fifteenth International Conference on Software Engineering,* pages 287-301, 1993.

[37] A. T. Rivers. *Modeling Software Reliability During Non-Operational Testing.* PhD thesis, North Carolina State University, 1998.

[38] A. T. Rivers and M. A. Vouk. Resource-constrained non-operational testing of software. In *Proc. Ninth Inter-*

*national Symposium on Software Reliability Engineering*, pages 154-163, 1998.

[39] D. A. Sprott. A note on a class of occupancy problems. *American Statistician,* 23:12-13, 1969.

[40] M. Takahashi and Y. Kamayachi. An empirical study of a model for program error prediction. In *Proc. Eighth International Conference on Software Engineering,* pages 330-336, 1985.

[41] Y. Tohma, K. Tokunaga, S. Nagase, and Y. Murata. Structural approach to the estimation of the number of residual software faults based on the hyper-geometric distribution. *IEEE Trans. Software Engineering,* 15:345-355, 1989.

[42] Y. Tohma, H. Yamano, M. Ohba, and R. Jacoby. The estimation of parameters of the hypergeometric distribution and its application to the software reliability growth model. *IEEE Trans. Software Engineering*, 17:483-489, 1991.

[43] H. G. Tucker, coupon.cpp. C++ functions for solving the equiprobable coupon collector's problem, URL = http: //math.uci.edu/~htucker/coupon.cpp (visited 2002-07-16).

[44] X. Zhang and H. Pham. An analysis of factors affecting software reliability. *The Journal of Systems and Software*, 50:43-56, 2000.

## Claims

1. Method for failure prediction of software programs, in particular of the number of failures occurring during test and the number of faults remaining in a software program after test, based on test data, failure data and/or software maturity data and project-specific data using a statistical model comprising the steps of:

   - collecting the test data and the number of failures occurring during testing and/or collecting the software maturity and project-specific data from developers or testers of the software,
   - processing the collected data by a data analysis, a parameter estimation, a data compression and/or a prediction to obtain failure prediction data, and
   - outputting said failure prediction data.

2. Method as claimed in claim 1,
   wherein the software maturity data are collected by use of a questionnaire.

3. Method as claimed in any of the preceding claims,
   wherein the test data reflect the progress of test activities, which are measured for a predetermined time duration during a test and/or for a predetermined percentage by which the functionality of the software is covered by the test.

4. Method as claimed in any of the preceding claims,
   wherein the failure data are put in relation to test progress data and reflect the number of failures of the software.

5. Method as claimed in claims 3 and 4,
   wherein the failure data reflect the number of failures of the software in the predetermined time duration and/or at a predetermined percentage of the functionality covered by the test.

6. Method as claimed in any of preceding claims,
   wherein the software maturity data are collected for single subprocesses of the software development, in particular requirements management, configuration management, design, failure management and/or test.

7. Method as claimed in claim 6,
   wherein the description of subprocesses is predetermined by a process maturity model, in particular SPICE.

8. Method as claimed in claim 6 or 7,
   wherein the quality of single subprocesses is measured using a scale, in particular ranging from zero for a bad subprocess to five for an optimum subprocess.

**9.** Method as claimed in claim 8,
wherein the quality of subprocesses is measured using a questionnaire describing the subprocesses by use of examples, in particular by use of scenarios, which can be compared to the process under consideration and from which the appropriate subprocess can be selected or be marked as not relevant for the process under consideration.

**10.** Method as claimed in any of the preceding claims,
wherein a statistical prediction model is used in combination with statistical estimation methods such that it can be adapted for different fields of use.

**11.** Method as claimed in any of the preceding claims,
wherein the software maturity data are reduced to a number of subprocesses which have the highest influence on the failure progress.

**12.** Method as claimed in any of the preceding claims,
wherein univariate and/or multivariate and/or correlation analysis is used for selecting the software maturity data that have the highest influence on the failure occurrences.

**13.** Method as claimed in claim 12,
further comprising the step of analysing the influence of process maturity and project characteristics.

**14.** Method as claimed in any of claims 11 to 13,
wherein data compression is performed within a single process first by forming a median from the responses to corresponding questions of the questionnaire and wherein appropriate data are thereafter selected for use in the statistical model using a correlation analysis and/or regression analysis.

**15.** Method as claimed in any of the preceding claims,
wherein a zero inflated binomial model is used for modelling the redundancy level for predictions generated by the partial redundancy model.

**16.** Method as claimed in claim 15,
wherein a multivariate analysis is used in said zero inflated binomial model.

**17.** Method as claimed in claim 15 or 16,
wherein the zero inflated binomial model models the redundancy multiplied by the number of average constructs assuming a distribution mixed by a one point distribution and a binomial distribution.

**18.** Method as claimed in any of the preceding claims,
wherein a maximum likelihood method is used for estimating a likelihood function for the partial redundancy model.

**19.** Method as claimed in claim 18,
wherein the maximum likelihood method is used for estimating parameter values which are plausible in view of observed parameters, the maximum likelihood method being a measure for plausibility of a parameter constellation.

**20.** Device for failure prediction of software programs, in particular of the number of failures occurring during test and the number of faults remaining in a software program after test, comprising:

- means for collecting the test data and the number of failures occurring during testing and/or collecting the software maturity and project-specific data from developers or testers of the software,
- means for processing the collected data by a data analysis, a parameter estimation, a data compression and/or a prediction to obtain failure prediction data, and
- means for outputting said failure prediction data.

**21.** Computer program comprising program code means for implementing the steps of a method as claimed in any of the claims 1 to 19 when said method is run on a computer.

**22.** Data carrier storing a computer program as claimed in claim 21.

Test progress data (**black box coverage**); collected during **systematic testing** either manually or automatically by a test management tool

Test progress data (**code coverage**); automatically collected by a test management tool during **systematic testing**

Manual or automated logging of failure occurrence data

**Test progress data**

**Failure occurrence data**

Assessment of the software process /maturity level using the **PETS questionnaire**

Results of an official SPICE assessment

**Software process maturity data**

**Project specific data**, e.g. code size

**PETS prototpye**
- First extended partial redundancy model
- Second extended partial redundancy model

**Dynamic/static estimates**
- Number of failures to be occurred after i executed test cases
- Number of faults remaining in the software after i executed test cases
- Number of faults remaining after exeuction x additional test cases
- Number of additional test cases to be executed until x faults remain

Fig. A

Software process maturity data using the **PETS questionnaire** from several industrial projects

**Test progress data** from several industrial projects

**Failure occurrence data** from several industrial projects

**Project specific data** from several industrial projects

Univariate/Multivariate analysis and correlation analysis

• Determination of the SPICE processes used in the PETS questionnaire which have the highest influence on the failure occurrences;
• Development of formulas for the static estimates

Fig. B